# EUROPEAN PATENT SPECIFICATION

(11) **EP 4 207 011 B1**
(45) Date of publication and mention of the grant of the patent: **28.10.2026**
(21) Application number: 20951594.9
(22) Date of filing: 31.08.2020
(51) Int. Cl.: G06Q 10/04, G06Q 10/063, G06Q 50/04

(54) **PRODUCTION PROCESS OPTIMIZATION METHOD AND PRODUCTION PROCESS OPTIMIZATION SYSTEM**
VERFAHREN ZUR OPTIMIERUNG EINES HERSTELLUNGSPROZESSES UND SYSTEM ZUR OPTIMIERUNG EINES HERSTELLUNGSPROZESSES
PROCÉDÉ D'OPTIMISATION DE PROCESSUS DE PRODUCTION ET SYSTÈME D'OPTIMISATION DE PROCESSUS DE PRODUCTION

(43) Date of publication of application: 05.07.2023
(73) Proprietor: Epistra Inc., Tokyo 105-0013 (JP)
(72) Inventor: OZAWA Yosuke, Tokyo 105-0013 (JP); TSUZUKI Taku, Tokyo 105-0013 (JP); HIGASHI Tatsuki, Tokyo 105-0013 (JP)
(74) Representative: Gille Hrabal Partnerschaftsgesellschaft mbB Patentanwälte
(86) International application number: PCT/JP2020/032971
(87) International publication number: WO 2022/044345

(56) References cited:
- JP-A- 2015 230 702
- JP-A- 2018 028 820
- JP-A- 2019 101 683
- JP-A- H06 168 248
- US-A1- 2008 077 266

## Description

### Technical Field

The present invention relates to a production process optimization method and a production process optimization system.

### Background Art

PTL 1 has proposed a system that executes and manages laboratory experiments in the life science.

### Citation List

### Patent Literature

PTL 1: US2018/0196913

### Summary of Invention

### Technical Problem

There is a need to maximize a gain obtained from a production process, but PTL 1 does not disclose a method for optimizing the production process such that the maximized gain can be obtained.

Therefore, the invention has been made in consideration of such circumstances, and an object thereof is to provide a production process optimization method and a production process optimization system capable of optimizing a production process.

### Solution to Problem

A production process optimization method according to the invention is a production process optimization method for optimizing a production process, the method including: an acquisition step of acquiring a starting point execution procedure to be a starting point for a search, in which one or a plurality of operations performed by the production process are defined and contents relevant to the operation are defined; a variable parameter item specifying step of specifying one or a plurality of variable parameter items capable of setting a variable parameter value in the starting point execution procedure; an execution procedure generation step of generating an execution procedure by setting the variable parameter value in the variable parameter item specified in the variable parameter item specifying step on the basis of a previous execution performance result and an evaluation performance result thereof; an execution result acquisition step of acquiring an execution result when an execution subject executes execution according to the execution procedure in an execution environment; an evaluation result acquisition step of acquiring an evaluation result with respect to the execution result; and a storage step of recording the execution procedure, the variable parameter value, the execution result, and the evaluation result in association with each other.

### Advantageous Effects of Invention

According to the invention, it is possible to optimize the production process.

### Brief Description of Drawings

Fig. 1 is a block diagram illustrating an overall configuration of a production process optimization system according to this embodiment.
Fig. 2 is a schematic view illustrating an example of a configuration of a starting point execution procedure.
Fig. 3 is a schematic view illustrating an example of a configuration of an execution performance result and an evaluation performance result 1 according to a previous execution procedure.
Fig. 4 is a schematic view illustrating an example of a configuration of the execution performance result and an evaluation performance result 2 according to the previous execution procedure.
Fig. 5 is a schematic view illustrating an example of a configuration of a template execution procedure.
Fig. 6 is a schematic view illustrating an example of a configuration of an execution procedure 1.
Fig. 7 is a schematic view illustrating an example of a configuration of an execution procedure 2.
Fig. 8 is a schematic view illustrating an example of a configuration of an execution procedure abstract syntax tree.
Fig. 9 is a schematic view illustrating a configuration of a continuation of the execution procedure abstract syntax tree illustrated in Fig. 8.
Fig. 10A is a schematic view illustrating a configuration of execution environment information.
Fig. 10B is a schematic view illustrating a configuration of a partial order.
Fig. 11 is a schematic view for describing a set A' in which an execution subject is allocated to each operation.
Fig. 12 is a schematic view illustrating an example of a configuration of an extended abstract syntax tree.
Fig. 13 is a schematic view illustrating a configuration of a continuation of the extended abstract syntax tree illustrated in Fig. 12.
Fig. 14 is a schematic view illustrating a configuration of a continuation of the extended abstract syntax tree illustrated in Fig. 13.
Fig. 15 is a schematic view for describing a set A" in which an execution start time and an execution end time are allocated to each element of the set A'.
Fig. 16 is a schematic view for describing a set A‴ of combinations satisfying a constraint condition.
Fig. 17A is a flowchart illustrating a production process optimization processing procedure according to this embodiment.
Fig. 17B is a schematic view for describing a case where a plurality of execution procedures are executed.
Fig. 18 is a block diagram illustrating a configuration of a template execution procedure generation unit.
Fig. 19 is a schematic view illustrating an example of a configuration (1) of another starting point execution procedure.
Fig. 20 is a schematic view illustrating an example of a configuration of a previous relevant execution procedure 1.
Fig. 21 is a schematic view illustrating an example of a configuration of a previous relevant execution procedure 2.
Fig. 22 is a schematic view illustrating an example of a configuration of a previous relevant execution procedure 3.
Fig. 23 is a schematic view illustrating an example of an evaluation performance result of the previous relevant execution procedure.
Fig. 24 is a schematic view illustrating an example of a configuration (1) of another template execution procedure.
Fig. 25 is a schematic view illustrating an example of a configuration (1) of another execution procedure 1.
Fig. 26 is a schematic view illustrating an example of a configuration (1) of another execution procedure 2.
Fig. 27 is a flowchart illustrating a template execution procedure generation processing procedure.
Fig. 28 is a block diagram illustrating a configuration of a variable parameter value setting unit.
Fig. 29 is a flowchart illustrating a variable parameter value setting processing procedure.
Fig. 30 is a block diagram illustrating a configuration of an execution schedule generation unit.
Fig. 31 is a flowchart illustrating an execution schedule generation processing procedure.
Fig. 32 is a schematic view illustrating an example of a configuration (1) of an individual abstract syntax tree.
Fig. 33 is a schematic view illustrating an example of a configuration (2) of the individual abstract syntax tree.
Fig. 34 is a schematic view illustrating an example of a configuration (3) of the individual abstract syntax tree.
Fig. 35 is a schematic view illustrating an example of a configuration (4) of the individual abstract syntax tree.
Fig. 36 is a flowchart illustrating an individual abstract syntax tree generation processing procedure.
Fig. 37 is a schematic view for describing an outline (1) of the individual abstract syntax tree generation processing procedure.
Fig. 38 is a schematic view for describing an outline (2) of the individual abstract syntax tree generation processing procedure.
Fig. 39 is a schematic view for describing an outline (3) of the individual abstract syntax tree generation processing procedure.
Fig. 40 is a schematic view for describing an outline (4) of the individual abstract syntax tree generation processing procedure.
Fig. 41 is a flowchart illustrating an execution procedure abstract syntax tree generation processing procedure.
Fig. 42 is a schematic view illustrating a configuration (1) of the individual abstract syntax tree integrated by the execution procedure abstract syntax tree generation processing.
Fig. 43 is a schematic view illustrating a configuration (2) of the individual abstract syntax tree integrated by the execution procedure abstract syntax tree generation processing.
Fig. 44 is a schematic view illustrating a configuration of an intermediate abstract syntax tree in which the individual abstract syntax tree illustrated in Fig. 42 and the individual abstract syntax tree illustrated in Fig. 43 are integrated.
Fig. 45 is a flowchart illustrating an extended abstract syntax tree generation processing procedure.
Fig. 46 is a schematic view for describing an outline of the partial order.
Fig. 47 is a block diagram illustrating a configuration of an execution instruction information generation unit.
Fig. 48 is a flowchart illustrating an execution instruction information generation processing procedure.
Fig. 49 is a schematic view illustrating an example of a configuration (2) of another starting point execution procedure.
Fig. 50 is a schematic view illustrating an example of a configuration (2) of another template execution procedure.
Fig. 51 is a schematic view illustrating an example of a configuration (2) of another execution procedure 1.
Fig. 52 is a schematic view illustrating an example of a configuration (2) of another execution procedure 2.
Fig. 53 is a schematic view illustrating an example of a configuration of a template execution procedure for describing a second embodiment.
Fig. 54 is a schematic view illustrating an example of a configuration of an execution procedure 1 for describing the second embodiment.
Fig. 55 is a schematic view illustrating an example of a configuration of an execution procedure 2 for describing the second embodiment.
Fig. 56 is a flowchart illustrating a template execution procedure generation processing procedure according to a third embodiment.
Fig. 57 is a block diagram illustrating a configuration of a production process optimization system according to a fourth embodiment.
Fig. 58 is a flowchart for describing characteristic processing of a production process optimization processing procedure according to the fourth embodiment.
Fig. 59 is a block diagram illustrating a configuration of a template execution procedure generation unit according to a fifth embodiment.
Fig. 60 is a flowchart illustrating a template execution procedure generation processing procedure according to the fifth embodiment.
Fig. 61 is a block diagram illustrating a configuration of a variable parameter value setting unit according to the fifth embodiment.
Fig. 62 is a flowchart illustrating a variable parameter value setting processing procedure according to the fifth embodiment.
Fig. 63 is a schematic view for describing a case in which a range of a variable parameter value is constrained in the fifth embodiment.

### Description of Embodiments

Hereinafter, one embodiment of the invention will be described in detail with reference to the drawings. In the following description, the same reference numerals will be applied to the same constituents, and the repeated description will be omitted.

### (1) Production Process Optimization Method according to First Embodiment

### (1-1) Outline of Production Process Optimization Method according to First Embodiment

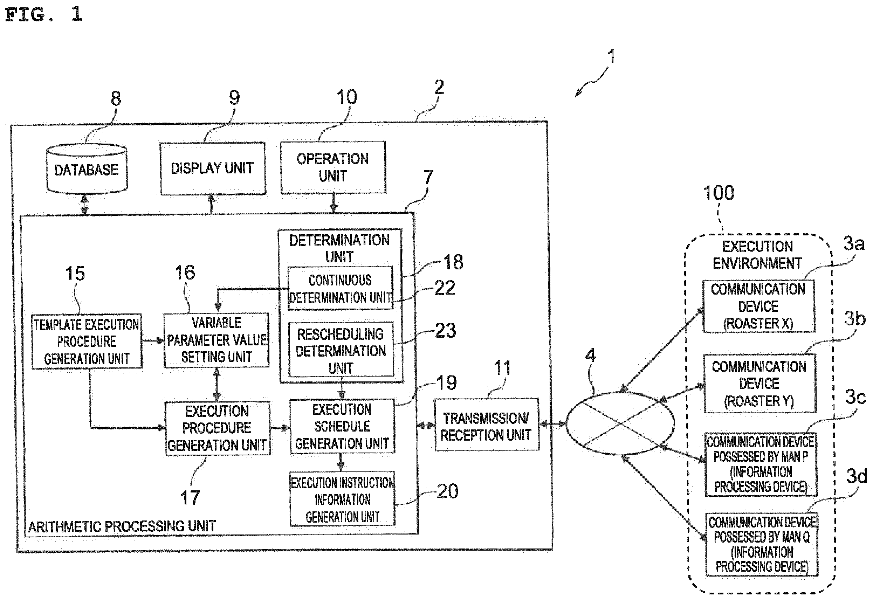

First, the outline of a production process optimization method according to this embodiment will be described. Fig. 1 is a block diagram illustrating the overall configuration of a production process optimization system 1 according to this embodiment, which executes a production process optimization method. As illustrated in Fig. 1, the production process optimization system 1 has a configuration in which a production process optimization device 2 and a plurality of communication devices 3a, 3b, 3c, and 3d are connected to a network 4 such as the internet.

In the production process optimization system 1, for example, an execution procedure is obtained by trial and error such that a gain is maximized and an optimum evaluation result is obtained, in various production processes such as a production process of producing blended beans by blending a plurality of types of coffee beans, a production process of producing a casting of a ferric alloy by mixing a plurality of types of raw materials, a production process of producing predetermined cooking by using a plurality of foodstuffs, and a production process of producing a compound A by culturing coli bacteria X in a culture medium M to derive the expression of an enzyme P.

As the optimum evaluation result, at least one or more types of a cost, a yield, quality, and an execution time of the execution procedure of the production process, a variation thereof, and a deviation from given target value can be applied. Examples of an evaluation result of blended beans produced by blending two types of coffee beans include a cost for producing the blended beans, the yield of the blended beans, the quality of the blended beans, an execution time for producing the blended beans, a variation thereof, and a deviation from such given target values.

The execution procedure is data in which a set of operations (for example, roasting, blending, fragrance qualitative evaluation, and the like) performed by the production process and an evaluation process, a processing target (for example, coffee beans and the like) processed by each operation, a product (for example, coffee beans (roasted) and the like) obtained after processing the processing target by each operation, various execution parameter values (for example, a heating temperature, a heating time, a cooling temperature, a cooling time, humidity, a culture time, a concentration, a mixing ratio, a mixed amount, and the like) when processing the processing target by the operation, and a constraint condition relevant to the operation (for example, "Blending Operation Is Performed within 180 Seconds after Roasting of Coffee Beans A Is Ended" and the like) are described.

The execution procedure corresponds to a production procedure indicating a set of operations until a certain product is produced from a raw material by using a plurality of machine tools in a plant, an experiment procedure indicating a set of operations when performing life science experiments by a plurality of experimenters and the like in a laboratory, a cooking procedure indicating a set of operations until cooking is made from foodstuffs by a plurality of cooks in a kitchen, and the like.

A production condition (for example, a combination of various execution parameter values such as the heating temperature, the heating time, and the humidity) in the execution procedure of the production process, in which a gain obtained from a certain production process is maximized, is not obvious, and it is necessary to perform trial and error by repeatedly executing a plurality of experiments in a naive method. As the product becomes more complicated, the production process thereof also becomes more complicated and massive, and thus, it is more difficult to obtain an optimum production condition by searching for various production conditions. In addition, even in a high-mix low-volume production process or a production process using living objects, such as the production of medicinal products, automatization is attained by utilizing a robot or the like, but it is necessary to obtain the optimum production condition in each case due to a difference in the breed varieties of the production targets, an individual difference in the living objects, or the like, and thus, the total cost for searching for the production condition increases.

In general, in a case where the type and the number of execution subjects performing each operation in the production process, such as a mechanical apparatus, a robot, and a man (a worker) increase when searching for the production condition, execution instruction information suitable for each execution subject is sequentially generated for each search condition of the production condition, and thus, a substantial effort is required.

In the production process optimization system 1 according to this embodiment, in consideration of the above description, when the execution subject actually executes the production process in accordance with the execution procedure in an execution environment 100 and searches for the optimum production condition in which a maximum gain is obtained, the optimum production condition with a large gain is obtained by the minimum number of times of the experiment execution, and thus, the total cost and the effort for searching for the production condition can be reduced, and an optimum production process with a large gain can be obtained.

Examples of the production process that is optimized by the production process optimization system 1 according to this embodiment include a production process of producing blended beans by blending coffee beans A with coffee beans B different from the coffee beans A, and the outline of the production process optimization system 1 according to this embodiment will be described below. In addition, as an example of the evaluation process of evaluating the blended beans obtained by the production process, the case of performing fragrance qualitative evaluation of the blended beans will be described.

As illustrated in Fig. 1, the production process optimization device 2 included in the production process optimization system 1 includes an arithmetic processing unit 7, a database 8, a display unit 9, an operation unit 10, and a transmission/reception unit 11.

The arithmetic processing unit 7 has a microcomputer configuration including a central processing unit (CPU), a random access memory (RAM), a read only memory (ROM), and the like, which are not illustrated, and the database 8, the display unit 9, the operation unit 10, and the transmission/reception unit 11 are connected to the arithmetic processing unit.

In a case where various operation commands are given from a manager (also referred to as a user) of the production process optimization device 2 through the operation unit 10, the arithmetic processing unit 7 suitably reads out a production process optimization program, a template execution procedure generation processing program, a variable parameter value setting processing program, an execution schedule generation processing program, an execution instruction information generation processing program, and the like, which are stored in advance in the ROM, on the basis of the operation command, and decompresses the programs in the RAM, and thus, controls each circuit unit in accordance with the production process optimization program and the like.

The arithmetic processing unit 7, for example, executes production process optimization processing, and thus, generates a template execution procedure, an execution schedule, execution instruction information, and the like, and stores such an arithmetic processing result in the database 8.

The database 8 stores the arithmetic processing result of the arithmetic processing unit 7, and stores execution environment information (described below) received from the outside by the transmission/reception unit 11. In addition, various data pieces such as an execution result (hereinafter, the previous execution result will be also referred to as an execution performance result) when the execution subject executed the execution procedure of the production process in the execution environment 100 in the past and a previous evaluation result (hereinafter, the evaluation result with respect to the previous execution result will be also referred to as an evaluation performance result) obtained by evaluating the execution performance result are stored in the database 8.

The display unit 9 displays the arithmetic processing result such as the template execution procedure or the execution procedure generated by the arithmetic processing unit 7 such that the manager and the like managing the production process optimization device 2 is capable of grasping the arithmetic processing result.

The production process optimization device 2 according to this embodiment generates the execution procedure of the production process of producing the blended beans of the coffee beans A and B and the evaluation process, the execution schedule that is data indicating when each execution subject collaboratively performs each operation in the execution procedure, and the execution instruction information that is data for instructing the execution subject in the execution environment 100 to execute each corresponding operation in accordance with the execution schedule, by the production process optimization processing.

The production process optimization device 2 transmits the execution schedule and the execution instruction information to the communication devices 3a, 3b, 3c, and 3d of the corresponding execution subjects in the execution environment 100 through the network 4.

The execution environment 100 illustrated in Fig. 1 indicates an environment in which the execution procedure of the production process and the evaluation process is actually executed, and for example, includes a plant, a laboratory, a kitchen, a workshop, and the like. The execution subject in the execution environment 100 executes each operation defined in the execution procedure of the production process and the evaluation process. The execution subject is changed in accordance with the type of production process and evaluation process, and for example, corresponds to a mechanical apparatus, a robot arm, a man, an incubator, a measurement instrument such as a camera, an experiment automatization device, a calculator, and the like.

In this embodiment, the production process of producing the blended beans of the coffee beans A and B, and the evaluation process of performing the fragrance qualitative evaluation of the blended beans produced by executing the execution procedure of the production process are described as an example, and in this case, roasters X and Y roasting the coffee beans A and B, and men P and Q performing the blending or the fragrance qualitative evaluation can be the execution subject.

In the production process optimization system 1 according to this embodiment, the execution schedule and the execution instruction information generated by the production process optimization device 2 are transmitted to the communication devices 3a, 3b, 3c, and 3d of the execution subjects through the network 4 to be presented to the roasters X and Y and the men P and Q, which are the execution subject.

For example, the communication device 3a is connected to or mounted on the roaster X, presents setting information included in the execution instruction information generated for the roaster X to the roaster X, and operates the roaster X in accordance with the execution schedule on the basis of the setting information. In addition, the communication device 3b is connected to or mounted on the roaster Y, presents setting information included in the execution instruction information generated for the roaster Y to the roaster Y, and operates the roaster Y in accordance with the execution schedule on the basis of the setting information.

The communication device 3c according to this embodiment, for example, is an information processing device such as a personal computer or a smart phone, which is possessed by the man P capable of performing blending work of the coffee beans A and B. The communication device 3c presents the execution schedule and the execution instruction information generated for the man P, which are received from the production process optimization device 2, to the man P, and as necessary, allows the man P to perform the operation such as the blending work in accordance with the execution schedule on the basis of the execution instruction information.

The communication device 3d according to this embodiment, for example, is an information processing device such as a personal computer or a smart phone, which is possessed by the man Q capable of performing the blending work of the coffee beans A and B or the fragrance qualitative evaluation. The communication device 3d presents the execution schedule and the execution instruction information generated for the man Q, which are received from the production process optimization device 2, to the man Q, and as necessary, allows the man Q to perform the operation such as the blending work or the fragrance qualitative evaluation work in accordance with the execution schedule on the basis of the execution instruction information.

Such communication devices 3a, 3b, 3c, and 3d suitably transmit the execution result or the evaluation result obtained when the corresponding execution subject executes the execution according to the execution schedule or the execution instruction information, to the production process optimization device 2 through the network 4.

Next, the arithmetic processing unit 7 of the production process optimization device 2 will be described. The arithmetic processing unit 7 includes a template execution procedure generation unit 15, a variable parameter value setting unit 16, an execution procedure generation unit 17, a determination unit 18, an execution schedule generation unit 19, and an execution instruction information generation unit 20, and generates the template execution procedure, the execution procedure, the execution schedule, and the execution instruction information described below.

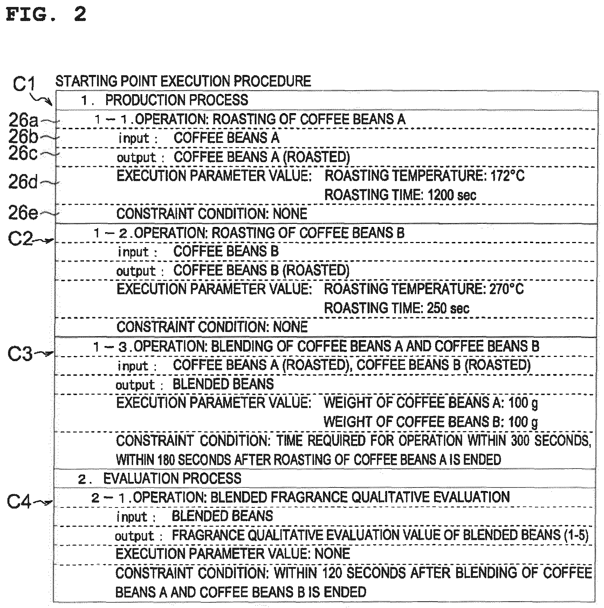

The template execution procedure is created by rewriting the execution procedure (hereinafter, referred to as a starting point execution procedure) to be a starting point for a certain search. Fig. 2 is a schematic view illustrating an example of the configuration of the starting point execution procedure relevant to the production process and the evaluation process relevant to the blended beans of the coffee beans A and B.

In a case where the production process (for example, the blending of the coffee beans A and B) and the evaluation process (blended fragrance qualitative evaluation) desired to be optimized by the manager are selected or input through the operation unit 10, the template execution procedure generation unit 15 selects the execution procedure corresponding to the production process and the evaluation process as the starting point execution procedure, among a plurality of execution procedures stored in the database 8.

In this case, as illustrated in Fig. 2, the template execution procedure generation unit 15 selects the execution procedure in which three operations of the roasting of the coffee beans A, the roasting of the coffee beans B, and the blending of the coffee beans A and B are defined as the operation of the production process, and one operation of the blended fragrance qualitative evaluation is defined as the operation of the evaluation process, as the starting point execution procedure.

In the starting point execution procedure, the contents relevant to the operations performed by the production process and the evaluation process are defined in operation outline sections C1, C2, C3, and C4 for each operation. The operation outline sections C1, C2, C3, and C4 of the starting point execution procedure according to this embodiment, for example, include an operation item 26a in which the contents of the operation are defined, an input item 26b in which the processing target of the operation is defined, an output item 26c in which the product to be obtained by the operation is defined, an execution parameter item 26d in which a numerical value relevant to the operation is defined, and a constraint condition item 26e in which the constraint condition relevant to the operation is defined.

In the operation outline section C1 of the roasting of the coffee beans A, "Roasting of Coffee Beans A" is defined in the operation item 26a, "Coffee Beans A" that are the processing target are defined in the input item 26b, "Coffee Beans A (Roasted)" that are the product are defined in the output item 26c, "Roasting Temperature" and "Roasting Time" are defined in the execution parameter item 26d, and "None" is defined in the constraint condition item 26e.

In "Roasting Temperature" defined in the execution parameter item 26d, "172°C" is defined as an execution parameter value indicating the heating temperature of the roasting, and in "Roasting Time", "1200 sec" is defined as an execution parameter value indicating a time for roasting at the roasting temperature.

"None" defined in the constraint condition item 26e indicates that a constraint condition relevant to the operation of "Roasting of Coffee Beans A" is not defined. In the constraint condition, a condition for constraining the operation is defined, and examples of the constraint condition include a time constraint, a concurrency constraint, an execution condition constraint, and the like, in which it is defined that the operation is constrained by time, an environment, a temperature, humidity, a cleaning level, or the like.

Examples of the time constraint include a time constraint for defining the execution time taken for the operation by the execution subject of the execution procedure, a time constraint for setting a temporal constraint between the operations of the execution procedure, and the like. The execution condition constraint includes an execution condition constraint for defining that it is necessary to perform the operation of the execution procedure in a predetermined condition range, and for example, corresponds to a constraint condition such as the blending "within 180 Seconds after Roasting of Coffee Beans A Is Ended".

In the starting point execution procedure of the production process and the evaluation process according to this embodiment, the operation outline section C2 relevant to "Roasting of Coffee Beans B", the operation outline section C3 relevant to "Blending of Coffee Beans A and Coffee Beans B", and the operation outline section C4 relevant to "Blended Fragrance Qualitative Evaluation" are defined in addition to the operation outline section C1 relevant to "Roasting of Coffee Beans A" described above. Note that, in the operation outline section C4 relevant to "Blended Fragrance Qualitative Evaluation", the lowest evaluation result of a fragrance qualitative evaluation value of the blended beans is set to "1" and the highest evaluation result is set to "5" in the output item 26c, and five stages of 1 to 5 are set as the evaluation result.

The template execution procedure generation unit 15 selects the execution parameter item 26d in which the execution parameter value can be changed in the starting point execution procedure as a variable parameter item on the basis of the execution performance result of the previous execution procedure and the evaluation performance result thereof stored in the database 8, and generates the template execution procedure for determining by which execution procedure of the execution parameter value the production process and the evaluation process are executed in the execution environment 100 and the execution result is evaluated, subsequently.

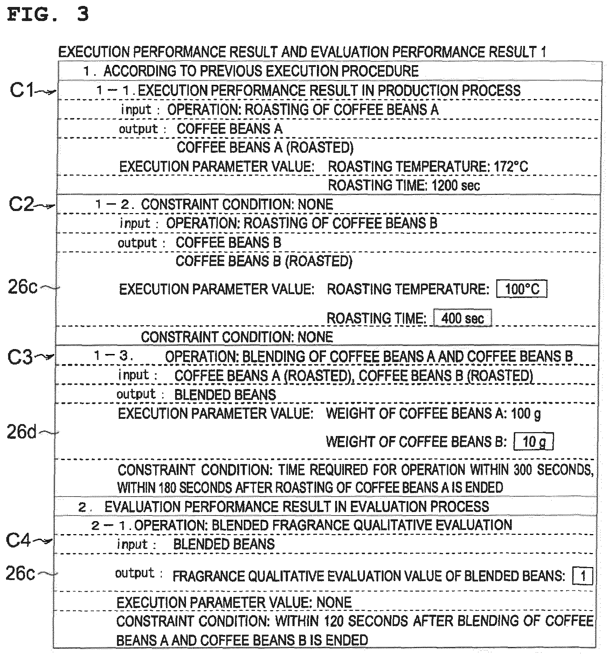

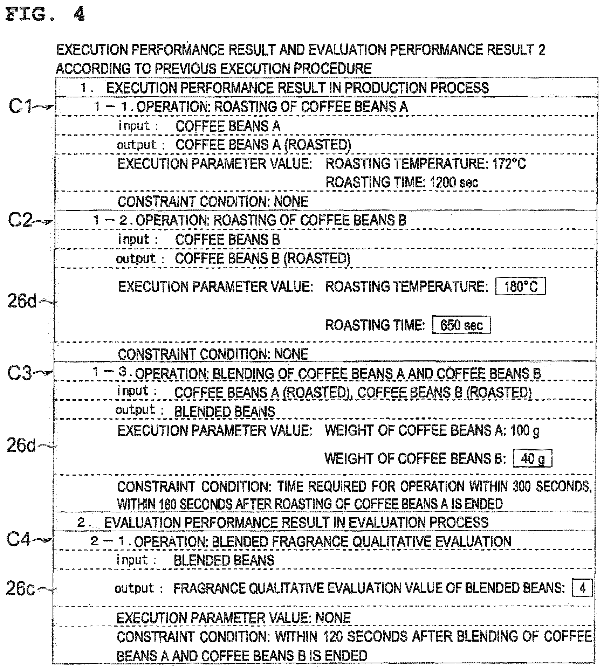

Fig. 3 and Fig. 4 illustrate an example of the configuration of the execution performance result and the evaluation performance result according to the previous execution procedure, which are searched from the database 8 on the basis of the contents of the operation outline sections C1, C2, C3, and C4 of the starting point execution procedure. The template execution procedure generation unit 15, for example, compares a plurality of execution performance results and evaluation performance results searched from the database 8, and specifies the execution parameter item 26d that can be the variable parameter item in which the execution parameter value can be changed, among the execution parameter items 26d. The execution parameter item 26d that can be the variable parameter item, for example, can be specified by using a changing trend and the like of the numerical value of the execution parameter value in the execution performance result and the evaluation performance result as a guide.

The template execution procedure generation unit 15, for example, is capable of comparing the execution performance result and the evaluation performance result illustrated in Fig. 3 with the execution performance result and the evaluation performance result illustrated in Fig. 4, and of assuming that such execution parameter values are an item that can be the variable parameter value (the variable parameter item), on the basis of the fact that the execution parameter values are different or the evaluation performance result is different due to the difference, in "Roasting Temperature" and "Roasting Time" of the execution parameter item 26d in the operation outline section C2 of "Roasting of Coffee Beans B" and "Weight of Coffee Beans B" of the execution parameter item 26d in the operation outline section C3 of "Blending of Coffee Beans A and Coffee Beans B".

Among the execution parameter values of the starting point execution procedure, a search range set in the previous execution procedure obtaining the execution performance result may be specified, and an intersection with a sum set of the previous search range may be set as a new search range. In addition, in the plurality of execution performance results, in a case where the same execution parameter item is changed, but a fluctuation band of each of the evaluation performance results is a predetermined value or less, a rule may be set in which the execution parameter item less affects the evaluation performance result and is not set as the variable parameter item.

In this embodiment, in order to simplify the description, the case of determining the variable parameter item from the execution parameter item in which the numerical value is set, as the variable parameter item, is described, and the operation item 26a or the like in which a manufacturing method, a heating method, or the like other than the numerical value is defined may be selected as the variable parameter item. That is, in the starting point execution procedure, all the operations that can be changed in the execution environment 100 and the conditions relevant to the operations can be the variable parameter item. Note that, an example in which the operation item 26a or the like in which items other than the numerical value is defined is selected as the variable parameter item will be described in detail in the other embodiments described below.

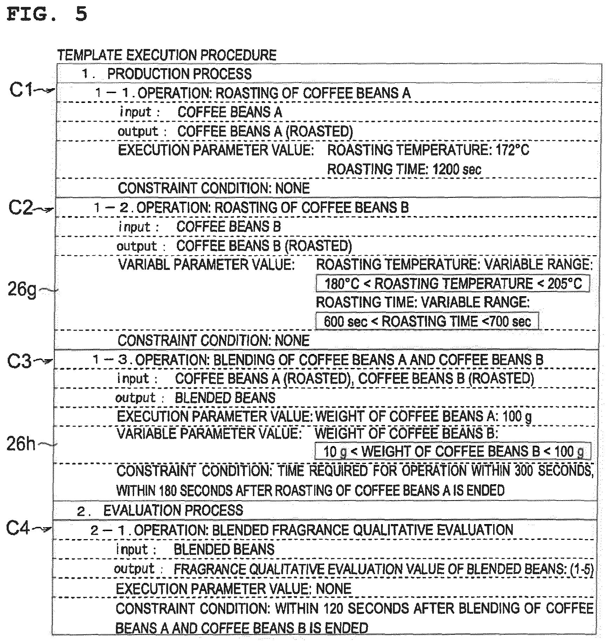

The template execution procedure generation unit 15 compares the execution performance result and the evaluation performance result illustrated in Fig. 3 with the execution performance result and the evaluation performance result illustrated in Fig. 4, and sets the search range that is a numerical range of the variable parameter value for the variable parameter item. In this case, in the execution performance result and the evaluation performance result, the template execution procedure generation unit 15 is capable of assuming the range of the variable parameter value (hereinafter, referred to as the search range) in which a desired fragrance qualitative evaluation value may be obtained, on the basis of the fact that "Fragrance Qualitative Evaluation Value of Blended Beans" of the output item 26c in the operation outline section C4 of "Blended Fragrance Qualitative Evaluation" of the evaluation process is different, and the execution parameter value of the execution parameter item 26d to be the variable parameter item, and of generating the template execution procedure in which variable parameter items 26g and 26h and the search range thereof are set, as illustrated in Fig. 5.

As an example, in the execution performance result and the evaluation performance result illustrated in Fig. 4, "Roasting Temperature" of the execution parameter item 26d in the operation outline section C2 of "Roasting of Coffee Beans B" is as high as 180°C, "Roasting Time" is as long as 650 sec, and "Weight of Coffee Beans B" of the execution parameter item 26d in the operation outline section C3 of "Blending of Coffee Beans A and Coffee Beans B" is as large as 40 g. This is assumed as a factor of obtaining a high fragrance qualitative evaluation value of "4", compared to the execution performance result and the evaluation performance result illustrated in Fig. 3, and the search range of the variable parameter value in which the fragrance qualitative evaluation value may be obtained is assumed by such a feature extract rule.

As described above, the template execution procedure generation unit 15 assumes one or more types of execution parameter items that may affect the evaluation performance result and the search range thereof from one or more types of previous execution performance results and previous evaluation performance results on the basis of the given feature extract rule.

Here, a case has been described in which there is the previous execution procedure including the same operation as that of the starting point execution procedure, and the variable parameter items 26g and 26h in the starting point execution procedure and the search range thereof are set on the basis of the execution performance result and the evaluation performance result of the previous execution procedure. Even in a case where the starting point execution procedure includes an operation different from that of the previous execution procedure, the template execution procedure generation unit 15 also has a function of selecting the previous execution procedure (hereinafter, referred to as a relevant execution procedure) relevant to the starting point execution procedure, and of setting the variable parameter items 26g and 26h in the starting point execution procedure and the search range thereof, on the basis of the execution performance result in the relevant execution procedure and the evaluation performance result.

In a case where the operation of the starting point execution procedure includes an unknown operation that is not included in the previous execution procedure, the types and the numerical values of both execution parameter values are generally different from each other. However, the template execution procedure generation unit 15, for example, assumes the execution parameter item that affects the evaluation result in the operation of the evaluation process in the starting point execution procedure and the search range thereof by performing contrast analysis with respect to the execution performance result and the evaluation performance result of a plurality of relevant execution procedures.

The template execution procedure generation unit 15 designs a feature amount transformation function by combining at least one matrix operation and at least one linear or non-linear transformation between both execution parameter values of the starting point execution procedure and the execution performance result and the evaluation performance result of the plurality of relevant execution procedures, and thus, is capable of obtaining a correspondence therebetween. In addition, the feature amount transformation function itself may be changed by sequential optimization.

In a case where a search space used in the assumption of the search range is high-dimensional, but a dimension that actually contributes to an objective variable is low-dimensional, the feature amount transformation function indicates a function for extracting a low-dimensional space that is effective to the objective variable on the basis of the previous execution performance result and the previous evaluation performance result. The variable parameter value can be searched on the low-dimensional search space generated by such a feature amount transformation function, and thus, the search can be performed more efficiently.

For example, a machine learning model according to a neural network or the like, which is one type of regression model, can be defined by combining at least one matrix operation and at least one linear or non-linear transformation.

An example of designing the feature amount transformation function by combining at least one matrix operation and at least one linear or non-linear transformation is as follows. For example, a case (a case where a desired evaluation result is obtained) is assumed in which when there is a constant relationship between the roasting temperature and the roasting time of the coffee beans, and the condition (the roasting temperature and the roasting time) is changed while the relationship is satisfied, the evaluation value is high. In such a case, the relationship between the roasting time and the roasting temperature in which the evaluation value is high is learned by the feature amount transformation function, and then, the sequential optimization is performed on the space designated by the feature amount transformation function, and thus, an efficient search can be promoted.

In the execution performance result and the evaluation performance result of the relevant execution procedure, the template execution procedure generation unit 15 sets previous knowledge in which the manager or the like analyzes in advance which factor contributes most to the improvement of the evaluation result, as a rule, and thus, is capable of effectively performing setting between the variable parameter item and the search range thereof in the starting point execution procedure from the execution performance result and the evaluation performance result of the relevant execution procedure. Note that, the detailed description when performing the setting between the variable parameter item and the search range thereof on the basis of the execution performance result and the evaluation performance result of the relevant execution procedure will be described below.

Fig. 5 illustrates an example of the configuration of the template execution procedure in which the variable parameter items 26g and 26h are set in the starting point execution procedure, and the search range is set in each of the variable parameter items 26g and 26h, with reference to the execution performance result and the evaluation performance result.

In this example, "Roasting Temperature" and "Roasting Time" in the operation outline section C2 of "Roasting of Coffee Beans B" are set as the variable parameter item 26g, and "180°C < Roasting Temperature < 205°C" is set as the search range of the roasting temperature and "600 sec < Roasting Time < 700 sec" is set as the search range of the roasting time, with reference to the execution performance result and the evaluation performance result. In addition, "Weight of Coffee Beans B" in the operation outline section C3 of "Blending of Coffee Beans A and Coffee Beans B" is set as the variable parameter item 26h, and "10 g < Weight of Coffee Beans B < 100 g" is set as the search range of the weight of the coffee beans B.

The template execution procedure generation unit 15 transmits the generated template execution procedure to the variable parameter value setting unit 16 and the execution procedure generation unit 17. The variable parameter value setting unit 16 determines by which variable parameter value in the search range the execution procedure is executed in the execution environment 100, on the basis of the previous execution performance result and the previous evaluation performance result, and transmits a plurality of variable parameter values selected from the search range to the execution procedure generation unit 17.

The variable parameter value setting unit 16 generates the plurality of variable parameter values included in the search range in the template execution procedure, in accordance with a given procedure (for example, Bayesian optimization, an orthogonal table, a Latin hypercube method, and the like), on the basis of the one or more types of previous execution performance results and previous evaluation performance results. In addition, the variable parameter value may be set by projecting the execution performance result onto the search space representing the search range of the variable parameter items 26g and 26h.

In this embodiment, even in a case where the execution performance result and the evaluation performance result were not in the database 8 in the past, for example, it is possible to set the variable parameter value from the search range, in accordance with the rule set by the manager, such as an orthogonal method.

In the variable parameter value setting unit 16 according to this embodiment, for example, the regression model (a response surface) is generated from one or more types of previous execution performance results and previous evaluation performance results, and by using the regression model, for example, the plurality of variable parameter values are selected from the search range by Bayesian optimization, multitask Bayesian optimization, or the like.

The execution procedure generation unit 17 writes the variable parameter value selected by the variable parameter value setting unit 16 in each of the variable parameter items 26g and 26h of the template execution procedure, and generates the plurality of execution procedures with different variable parameter values. As described above, the execution procedure generation unit 17 generates a list of the plurality of execution procedures with different variable parameter values.

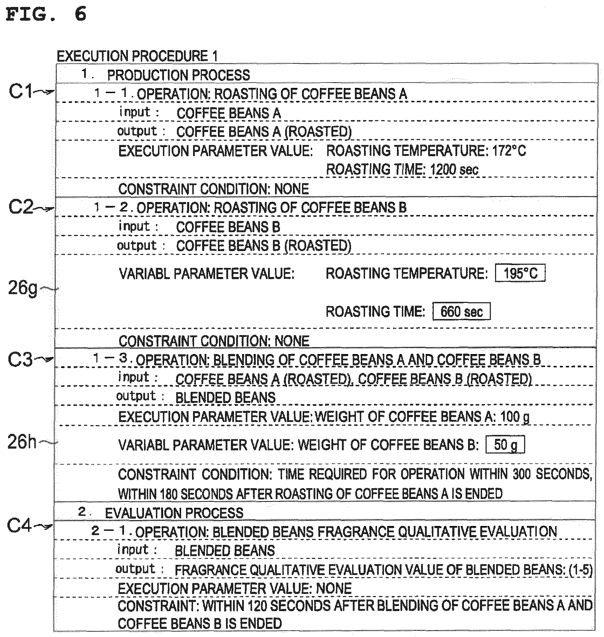

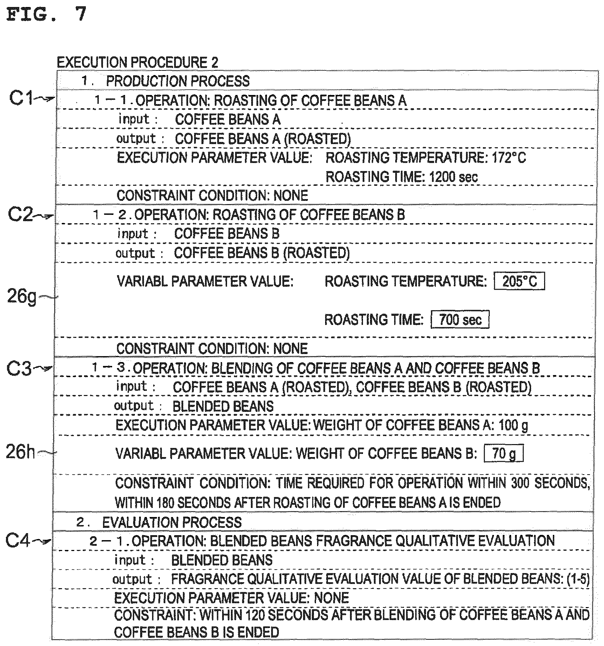

Fig. 6 and Fig. 7 illustrate an example of two execution procedures with different variable parameter values set in the variable parameter items 26g and 26h. Fig. 6 illustrates an execution procedure in which "195°C" is set as the variable parameter value of "Roasting Temperature" and "660 sec" is set as the variable parameter value of "Roasting Time" in the variable parameter item 26g in the operation outline section C2 of "Roasting of Coffee Beans B", and "50 g" is set as the variable parameter value of "Weight of Coffee Beans B" in the variable parameter item 26g in the operation outline section C3 of "Blending of Coffee Beans A and Coffee Beans B", as an example of the execution procedure.

Fig. 7 illustrates an execution procedure in which "205°C" is set as the variable parameter value of "Roasting Temperature" and "700 sec" is set as the variable parameter value of "Roasting Time" in the variable parameter item 26g in the operation outline section C2 of "Roasting of Coffee Beans B", and "70 g" is set as the variable parameter value of "Weight of Coffee Beans B" in the variable parameter item 26g in the operation outline section C3 of "Blending of Coffee Beans A and Coffee Beans B", as an example of another execution procedure.

The execution procedure generation unit 17 generates the list including the plurality of execution procedures, and transmits the list of the execution procedures to the execution schedule generation unit 19.

The execution schedule generation unit 19 sequentially selects the execution procedure from the list of the execution procedures, and generates the execution schedule for each execution procedure. Here, as an example, an outline of generating the execution schedule from the execution procedure illustrated in Fig. 6 is described.

Here, in order to simplify the description, a case is described in which the execution procedure is sequentially selected from the list of the execution procedures, and the execution schedule of the execution procedure is generated, but each execution schedule or one execution schedule indicating a relationship in progress statuses of the plurality of execution procedures may be generated at once for the plurality of execution procedures in the list.

The execution subject to which a plurality of execution schedules are presented at once, for example, may simultaneously execute the execution procedures according to the plurality of execution schedules at once, in accordance with the contents of the execution schedule, or may sequentially select an arbitrary execution schedule from the plurality of execution schedules to execute the execution procedure in accordance with each execution schedule. It is desirable that each time when the execution result or the evaluation result of the execution procedure is obtained, the execution subject transmits the execution result or the evaluation result to the production process optimization device 2.

The production process optimization device 2 presents the execution schedule to the execution subject in the execution environment 100, and allows the execution subject to execute the execution procedure in accordance with the execution schedule, and for example, it is desirable that when the execution result and the evaluation result are received from the execution subject, the execution procedure reflecting the contents of the execution result and the evaluation result is regenerated, and the execution schedule of the regenerated execution procedure is generated each time. Accordingly, it is possible to constrain an optimum execution procedure reflecting the actual execution result and the actual evaluation result obtained by the execution subject in the execution environment 100 each time, and to optimize the production process.

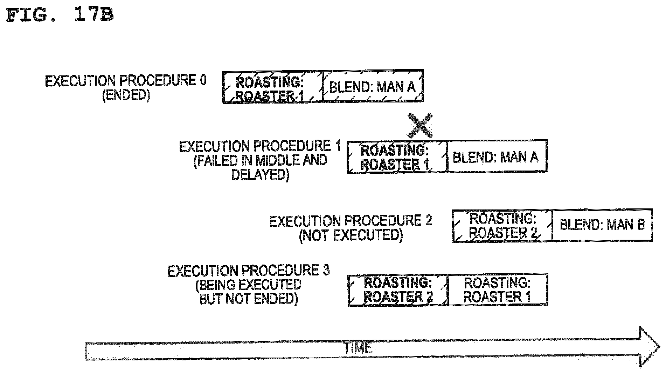

As described above, the processing of the production process optimization device 2 when the plurality of execution schedules are presented to the execution subject, and the production process optimization device 2 receives each execution result, each evaluation result, and the like of the plurality of execution procedures from each execution subject will be described below by using Fig. 17B.

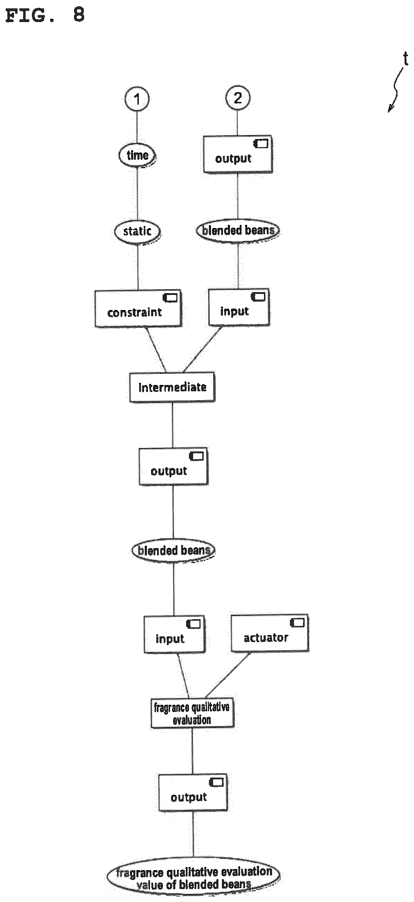

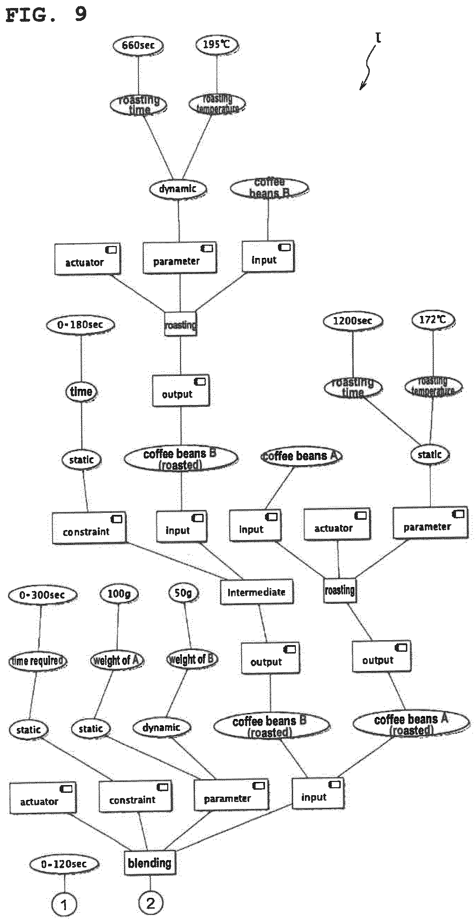

The execution schedule generation unit 19 generates an execution procedure abstract syntax tree t as illustrated in Fig. 8 and Fig. 9, on the basis of the execution procedure illustrated in Fig. 6. The execution procedure abstract syntax tree is a syntax tree that is a data structure in which the execution procedure is subjected to syntax analysis, and dependency between the respective operations defined by the execution procedure, the processing target of the operation, the product to be obtained by the operation, and the constraint condition relevant to the operation can be analyzed.

As the syntax tree, the execution procedure abstract syntax tree t has a data structure with a tree structure in which the contents of the operation item 26a, the input item 26b, the output item 26c, the execution parameter item 26d, the variable parameter items 26g and 26h, and the constraint condition item 26e defined in the operation outline sections C1, C2, C3, and C4 in the execution procedure are set as nodes, and the dependency between the operations is defined by connecting the nodes with edges.

In this case, the execution schedule generation unit 19 is capable of setting the contents of the operation item 26a, the input item 26b, the output item 26c, the execution parameter item 26d, the variable parameter items 26g and 26h, and the constraint condition item 26e as the nodes in each of the operation outline sections C1, C2, C3, and C4 of the execution procedure, of individually generating individual abstract syntax trees in which the dependency is defined by connecting the nodes with the edges, and of generating the execution procedure abstract syntax tree t by associating the individual abstract syntax trees with each other on the basis of a progress sequence of the operation of the execution procedure.

The details of individual abstract syntax tree generation processing and execution procedure abstract syntax tree generation processing of generating the individual abstract syntax tree and the execution procedure abstract syntax tree t from the execution procedure will be described below.

Next, the execution schedule generation unit 19 generates an extended abstract syntax tree (described below) in which the execution subject executing each operation in the execution procedure is associated with the execution procedure abstract syntax tree t, on the basis of execution environment information (described below) received from the execution environment 100 through the transmission/reception unit 11, and the execution procedure abstract syntax tree t described above.

As the syntax tree, the extended abstract syntax tree is a syntax tree that is a data structure in which the execution procedure is subjected to syntax analysis, and the dependency between the respective operations defined by the execution procedure, the processing target of the operation, the product to be obtained by the operation, the constraint condition relevant to the operation, and the execution subject executing each operation in the execution procedure can be analyzed.

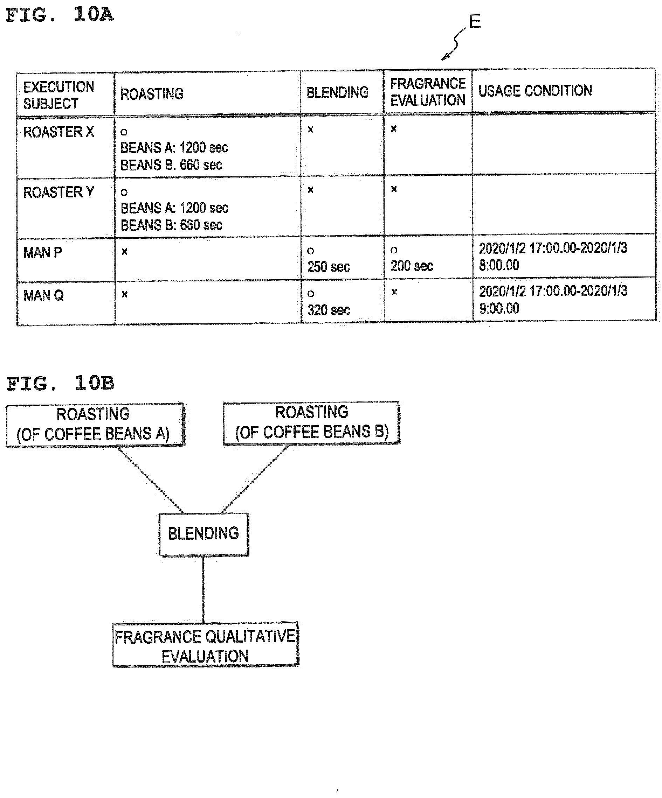

Fig. 10A illustrates an example of the configuration of execution environment information E. As illustrated in Fig. 10A, the execution environment information E is information indicating a candidate of the execution subject capable of actually executing each operation defined in the execution procedure in the execution environment 100, an execution time when the execution subject executes the operation, and an execution unavailable time (a usage condition) for which the execution subject is not capable of being used in the operation.

In the execution environment information E illustrated in Fig. 10A, it is defined that the operation of "Roasting" represented in the operation outline sections C1 and C2 of the execution procedure can be executed by the roasters X and Y but not by the men P and Q, and the execution time (1200 sec for the roasting of the coffee beans A and 660 sec for the roasting of the coffee beans B) when the roasters X and Y execute "Roasting" is also defined.

In the execution environment information E, for example, a time for reaching a target temperature, a limit temperature to which heating can be performed, or the like may be defined in a device (here, the roasters X and Y) that is the execution subject. In addition, in the execution environment information E, information relevant to the function or the performance of a machine that is the execution subject, such as an operation accuracy of the machine or a standby time, may be defined.

In the execution environment information E, it is defined that the operation of "Blending" represented in the operation outline section C3 of the execution procedure can be executed by the men P and Q but not by the roasters X and Y, and the execution time (the man P requires 250 sec for the blending, and the man Q requires 320 sec for the blending) when the men P and Q executes "Blending" is also defined.

In the execution environment information E, it is defined that the operation of "Fragrance Qualitative Evaluation" (noted as "Fragrance Evaluation" in Fig. 10A) represented in the operation outline section C4 of the execution procedure can be executed only by the man P but not by the man Q and the roasters X and Y, and the execution time (the man P requires 200 sec for the fragrance qualitative evaluation) when the man P executes "Fragrance Qualitative Evaluation" is further defined.

In the execution environment information E, an execution unavailable time indicating that the man P is not capable of executing the operation of the execution procedure from 17:00 on January 2, 2020 to 08:00 on January 3, 2020 is defined, and an execution unavailable time indicating that the man Q is not capable of executing the operation of the execution procedure from 17:00 on January 2, 2020 to 09:00 on January 3, 2020 are defined, as the usage condition.

In the execution environment information E according to this embodiment, a case is described in which the execution unavailable time for which the execution subject is not capable of executing the operation is defined as the usage condition indicating the availability of the operation for the execution subject, but the invention is not limited thereto. For example, the execution environment information E may be applied in which an execution available time (for example, from 09:00 to 16:00 on January 2, 2020) for which the execution subject is capable of executing the operation is defined as the usage condition indicating the availability of the operation for the execution subject. Note that, the execution unavailable time or the execution available time is simply referred to as the usage condition.

In this embodiment, a predetermined information processing device (not illustrated in Fig. 1) in the execution environment 100 may generate the execution environment information E by summarizing individual information (which operation can be executed by which execution subject, the execution time, and the usage condition) of each execution subject, and the production process optimization device 2 may receive the execution environment information E generated by the information processing device on the execution environment 100 side. In addition, each own individual information may be transmitted to the production process optimization device 2 from each execution subject in the execution environment 100 through the communication devices 3a, 3b, 3c, and 3d, and the execution environment information E may be generated by summarizing the individual information in the production process optimization device 2.

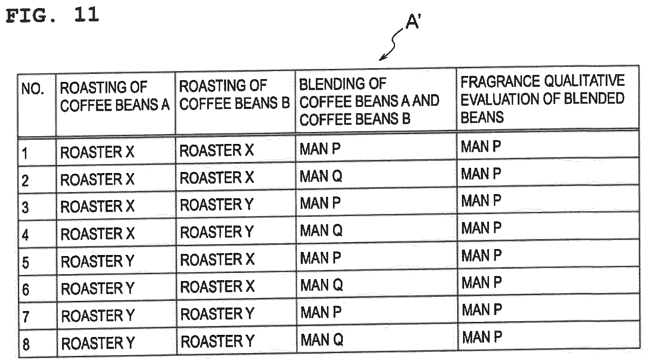

The execution schedule generation unit 19 specifies an operation node required to be allocated to an execution subject node (noted as "Actuator" in Fig. 8 and Fig. 9) included in the execution procedure abstract syntax tree t, from the acquired execution environment information E and the execution procedure abstract syntax tree t, allocates the execution subject defined by the execution environment information E to the execution subject node ("Actuator") of each operation node of the execution procedure abstract syntax tree t first without considering the constraint condition, and obtains a set A' in which the execution subject is allocated to each operation as illustrated in Fig. 11.

The set A' has a combination pattern by allocating all the execution subjects capable of executing the operation to the execution subject nodes in the execution procedure abstract syntax tree t, respectively, without considering the constraint condition.

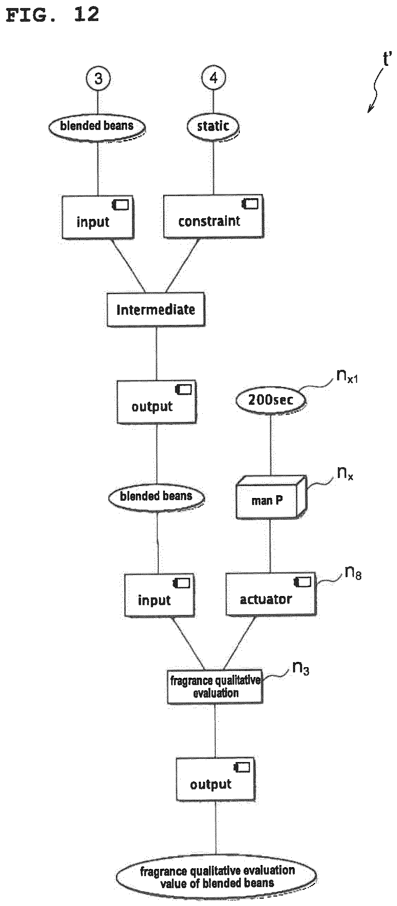

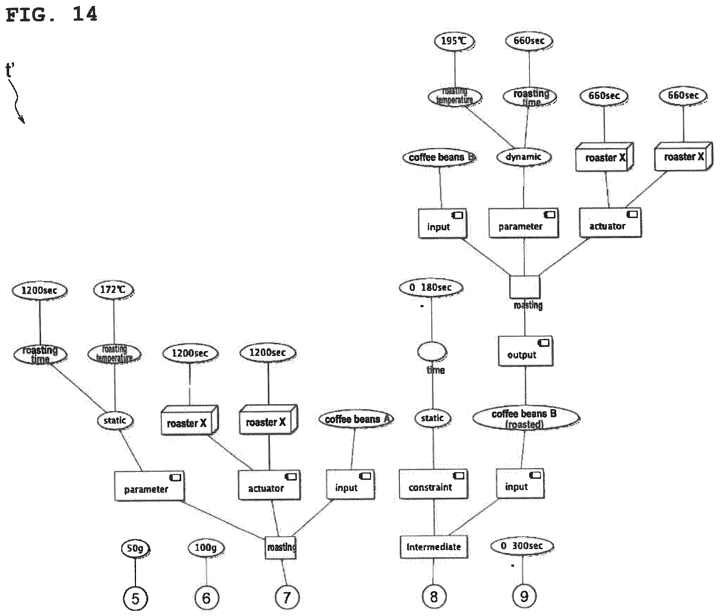

The execution schedule generation unit 19 reflects the result of the set A' in which the execution subject is allocated to each operation on the execution subject node in the execution procedure abstract syntax tree t, and generates an extended abstract syntax tree t' as illustrated in Fig. 12, Fig. 13, and Fig. 14.

Fig. 12, Fig. 13, and Fig. 14 illustrate an example of the extended abstract syntax tree t' that is a data structure with a tree structure in which the execution subject of the execution environment information E illustrated in Fig. 10A is allocated to the execution procedure illustrated in Fig. 6, in which the execution subject, the execution time, and the constraint condition are each associated with a set of operations of the roasting, the blending, and the fragrance qualitative evaluation of the coffee beans A and B. Note that, the generation of the extended abstract syntax tree t' will be described below.

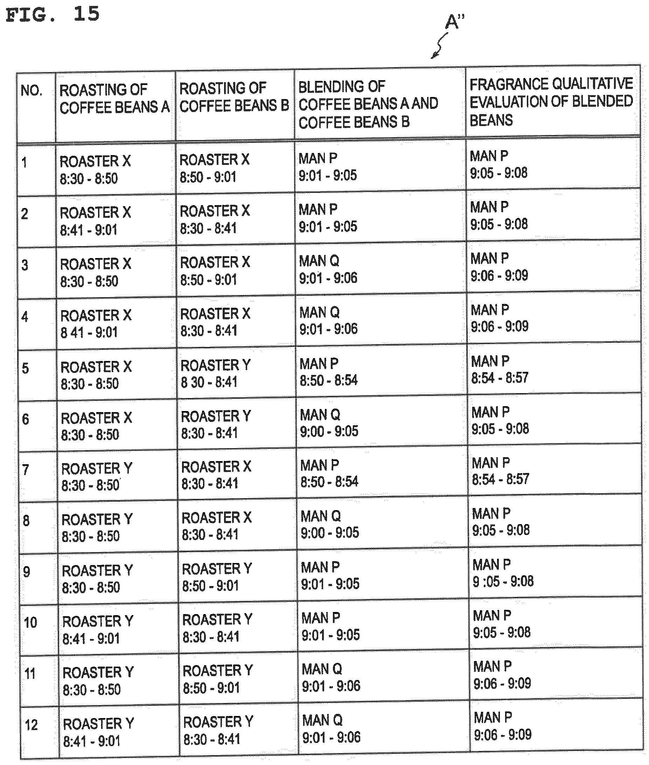

Next, as illustrated in Fig. 10B, the execution schedule generation unit 19 generates a partial order indicating operations that can be executed in series and operations that can be executed in parallel among the set of operations to be sequentially executed, on the basis of the extended abstract syntax tree t'. The execution schedule generation unit 19 determines a start time (here, 08:30 on January 2, 2020) for starting the execution procedure, allocates an execution start time and an execution end time to each element of the set A' in accordance with a sequence for executing the operations, on the basis of the partial order capable of analyzing the concurrency constraint for the set of operations of the execution procedure, and obtains a set A" as illustrated in Fig. 15.

In the execution procedure in which a plurality of operations can be simultaneously executed, simultaneously inexecutable operations or simultaneously executable operations can be defined as the concurrency constraint between the respective operations, and the concurrency constraint can be reflected on the extended abstract syntax tree t' or the partial order. In addition, in the concurrency constraint, whether to improve a time efficiency of the entire production process by performing only the blending operation of the coffee beans A and B in parallel is also defined.

The set A" has a combination pattern in which the execution start time and the execution end time at which the execution subject is capable of executing the operation are allocated to each operation in accordance with the sequence of the operation sequentially executed in the execution procedure from a predetermined start time (08:30 on January 2, 2020), without considering the constraint condition in the execution procedure.

In "No. 1" of the set A'' in Fig. 15, for "Roasting of Coffee Beans A" and "Roasting of Coffee Beans B" with no concurrency constraint, a time allocation schedule is shown in which first "Roasting of Coffee Beans A" is executed by "Roaster X" until 08:50 from the start time, the next "Roasting of Coffee Beans B" is executed by using the same "Roaster X" from 08:50 to 09:01 after "Roasting of Coffee Beans A" is ended, and then, "Blending" and "Fragrance Qualitative Evaluation" are sequentially executed by the man P.

In "No. 6" of the set A'' in Fig. 15, for "Roasting of Coffee Beans A" and "Roasting of Coffee Beans B" with no concurrency constraint, a time allocation schedule is shown in which "Roasting of Coffee Beans A" of "Roaster X" and "Roasting of Coffee Beans B" of "Roaster Y" are simultaneously executed from the start time, and then, "Blending" is executed by the man Q, and "Fragrance Qualitative Evaluation" is executed by the other man P.

As described above, when the constraint condition in the execution procedure is not considered, the execution schedule generation unit 19 generates all the combinations of the time allocation schedules with a possibility that the operation of the execution procedure can be executed by the execution subject, and obtains such a combination pattern as the set A".

Next, the execution schedule generation unit 19 reads out the constraint condition of each operation from the execution procedure, the execution procedure abstract syntax tree t, or the extended abstract syntax tree t', extracts a time allocation schedule satisfying all the constraints such as the execution time defined in the constraint condition as a candidate schedule from the set A", and obtains a set A‴ including the candidate schedule.

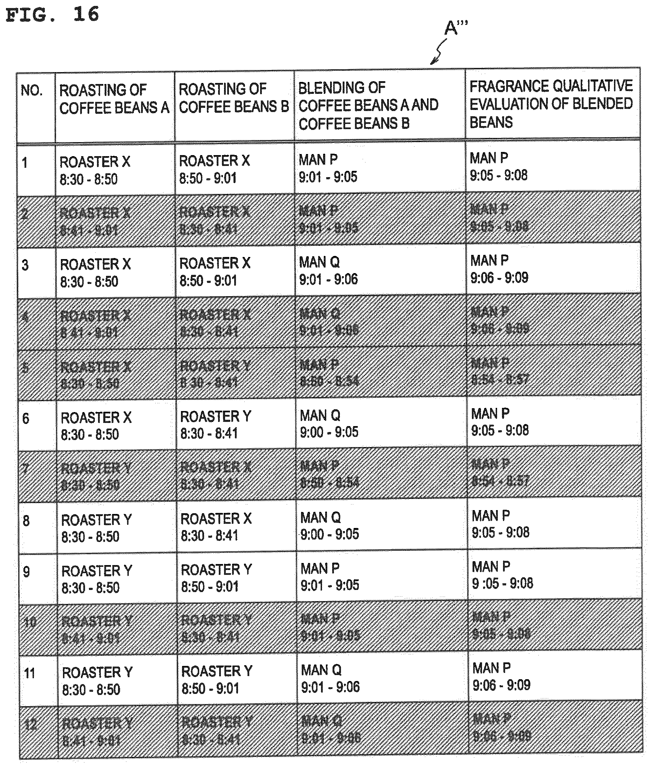

Fig. 16 illustrates an example of the set A‴ of combinations satisfying the constraint condition. For example, in the execution procedure in Fig. 6, in an operation outline section 25c of the "Blending of Coffee Beans A and Coffee Beans B", the constraint condition such as "within 180 Seconds after Roasting of Coffee Beans A Is Ended" is defined in the constraint condition item 26. Accordingly, as illustrated in Fig. 16, the execution schedule generation unit 19 extracts "No. 2", "No. 4", "No. 5", "No. 7", "No. 10", and "No. 12" satisfying the constraint condition described above as the candidate schedule, and obtains the set A‴ including such candidate schedules.

In the execution schedule generation unit 19, for example, a selection condition of selecting a candidate schedule with the earliest execution end time of "Fragrance Qualitative Evaluation of Blended Beans" that is the final operation of the execution procedure is set in advance by the manager. Accordingly, the execution schedule generation unit 19 selects one candidate schedule corresponding to the selection condition as the final execution schedule from the set A‴.

In the set A‴ illustrated in Fig. 16, there are two candidate schedules with the earliest execution end time of "No. 5" and "No. 7", and thus, for example, an index for determining superiority or inferiority is set in addition to the execution end time, and "No. 5" of which the value of the number (No) that is an identifier of the candidate schedule is small is selected as the execution schedule. Note that, in "No. 5", the roasting of the coffee beans A and B are executed in parallel.

The execution schedule generation unit 19 transmits the selected execution schedule to the execution instruction information generation unit 20. The execution instruction information generation unit 20 generates execution instruction information for instructing for each execution subject executing each operation to perform the operation in accordance with the execution schedule, with reference to the execution environment information E.

The execution instruction information is data in which information sufficient to allow the execution subject to execute each operation of the execution procedure in the execution environment 100 in accordance with the execution schedule is described. Typically, in addition to an operation manual in which operation contents are described in a natural language with respect to the men P and Q or a man operating the roasters X and Y, setting information such as a program for controlling and operating the roasters X and Y corresponds to the execution instruction information.

As described above, the arithmetic processing unit 7 transmits each execution schedule and each execution instruction information piece generated for each execution procedure, on the basis of the list of the execution procedures, to the transmission/reception unit 11, and transmits the execution schedule and the execution instruction information to each of the communication devices 3a, 3b, 3c, and 3d of the corresponding execution subject through the network 4.

The communication devices 3a, 3b, 3c, and 3d that receive the execution schedule and the execution instruction information present the execution schedule and the execution instruction information to the men P and Q or the roasters X and Y that are the corresponding execution subject, respectively, such that each operation is performed in the execution environment 100.

As a result thereof, in the production process optimization system 1, in a case where each execution subject executes each operation of the execution procedure on the basis of the execution schedule and the execution instruction information in the execution environment 100, and thus, the execution result or the evaluation result of the execution procedure is obtained, the execution result or the evaluation result is transmitted each time to the production process optimization device 2 from the communication devices 3a, 3b, 3c, and 3d.

In a case where the execution result or the evaluation result is received from the communication devices 3a, 3b, 3c, and 3d in the execution environment 100, the production process optimization device 2 associates each time the execution procedure, the variable parameter value set in the execution procedure, the execution result, and the evaluation result with each other to be recorded in the database 8, and analyzes the execution result or the evaluation result by the determination unit 18 of the arithmetic processing unit 7.

In a case where it is determined that (i) the progress of the actual execution procedure in the execution environment 100 is different from the execution schedule and the execution procedure is not executed in accordance with the execution schedule or (ii) there is an influence on an unexecuted part in the execution schedule and it is necessary to change the execution schedule, the rescheduling determination unit 23 of the determination unit 18 regenerates the execution schedule and the execution instruction information for executing the execution procedure in accordance with the execution schedule.

When the execution procedure is executed by the roaster X in accordance with the execution schedule in which the roasting of the coffee beans A is executed by the roaster X, and then, the roasting of the coffee beans B is also executed by the same roaster X, in a case where the execution result that it takes time longer than expected in the roasting of the coffee beans A by the roaster X and the execution of the subsequent roasting of the coffee beans B by the roaster X is delayed, is received from the roaster X, the determination unit 18 determines that the execution procedure of the roaster X is not executed in accordance with the execution schedule, and regenerates the execution schedule and the execution instruction information.

On the other hand, for example, when the execution procedure is executed by the roasters X and Y in accordance with the execution schedule in which the roasting of the coffee beans A is executed by the roaster X, and then, the roasting of the coffee beans B is executed by the roaster Y different from the roaster X, there is no influence on the roasting of the coffee beans B by the subsequent roaster Y even in a case where it takes time longer than expected in the roasting of the coffee beans A by the roaster X, and thus, the operation such as the roasting of the coffee beans B by the roaster Y and the blending can be executed in accordance with the execution schedule. In such a case, even when the execution result that it takes time in the roasting of the coffee beans A and the execution according to the execution schedule is not possible is received from the roaster X, the determination unit 18 may determine that there is no influence on the unexecuted part (the roasting of the coffee beans B by the roaster Y, the blending, the qualitative evaluation, and the like) in the execution schedule, and it is not necessary to change the execution schedule.

The determination unit 18 not only simply determines whether all the execution subjects execute the operations in accordance with the execution schedule, but also determines whether, even in a case where some execution subjects in the execution environment 100 do not execute the operations in accordance with the execution schedule, the operations of some execution subjects do not affect the operations of the other execution subjects, the other execution subjects execute the operations in accordance with the execution schedule, and the execution procedure is finally ended until an end date and time presented by the execution schedule.

In this example, the determination unit 18 determines that even in a case where some execution subjects in the execution environment 100 do not execute the operations in accordance with the execution schedule, the execution according to the execution schedule is possible insofar as the execution procedure is finally ended until the end date and time presented by the execution schedule, and it is not necessary to change the execution schedule.

When the execution schedule and the execution instruction information are regenerated, the production process optimization device 2 transmits again the regenerated execution schedule and the regenerated execution instruction information to each of the communication devices 3a, 3b, 3c, and 3d of the corresponding execution subject, and presents the execution schedule and the execution instruction information to the men P and Q or the roasters X and Y that are each the corresponding execution subject such that each operation is performed in the execution environment 100.

When the execution result or the evaluation result is received from the communication devices 3a, 3b, 3c, and 3d in the execution environment 100, the continuous determination unit 22 of the determination unit 18 determines again whether to search for a new variable parameter value reflecting the execution result or the evaluation result by the variable parameter value setting unit 16 on the basis of the execution result or the evaluation result received from the communication devices 3a, 3b, 3c, and 3d in the execution environment 100, on the basis of whether a continuous command is given from the manager through the operation unit 10, whether the evaluation result is a desired evaluation result, or whether the evaluation results is obtained a predetermined number of times.

When the continuous command is given from the manager through the operation unit 10, the continuous determination unit 22, for example, allows the variable parameter value setting unit 16 to generate again the regression model (the response surface) including the newly obtained execution result and the newly obtained evaluation result. Accordingly, the arithmetic processing unit 7 allows the variable parameter value setting unit 16 to newly select the plurality of variable parameter values from the search range by using the regression model, in accordance with the Bayesian optimization, the multitask Bayesian optimization, or the like, and allows the execution procedure generation unit 17 to generate the list of the plurality of execution procedures with the same variable parameter value or different variable parameter values.

When the list of the execution procedures with the same variable parameter value is generated, the execution procedure generation unit 17 allows the execution subject in the execution environment 100 to execute the same execution procedure a plurality of times, which is effective, for example, from the viewpoint of the verification of the certainty of the execution procedure or the verification of whether the same evaluation result is obtained. More specifically, in a case where it is possible to expect that there is a large noise in the execution result or the evaluation result of the production process (a case where the evaluation result obtained by the predetermined variable parameter value is greater than the previous maximum value by 5%, but it is not obvious from one observation whether such a state is due to the noise or the actual improvement), a statistic amount such as a standard deviation or an average is obtained, and evaluation with a higher accuracy can be performed.

As described above, the production process optimization device 2 regenerates the execution schedule and the execution instruction corresponding to the newly generated execution procedure, transmits again the execution schedule and the execution instruction to the communication devices 3a, 3b, 3c, and 3d of the execution subjects in the execution environment 100, presents the execution schedule and the execution instruction information to the men P and Q and the roasters X and Y that is each corresponding execution subject in the execution environment 100, and allows the execution subject to perform each operation in the execution environment 100.

As described above, the production process optimization system 1 repeats the generation of the execution schedule and the execution instruction information, the presentation of the execution schedule and the execution instruction information to the execution subject, the acquisition of the execution result and the evaluation result from the execution subject, based on the execution schedule and the execution instruction information, and the setting of the new variable parameter value reflecting the obtained execution result and evaluation result.

Accordingly, in the production process optimization system 1, it is possible to search for the optimum variable parameter value or the optimum execution schedule in which the maximum gain is obtained while reflecting the execution result and the evaluation result obtained by the execution subject actually executing the production process in the execution environment 100, and to obtain the optimum production process with a large gain.

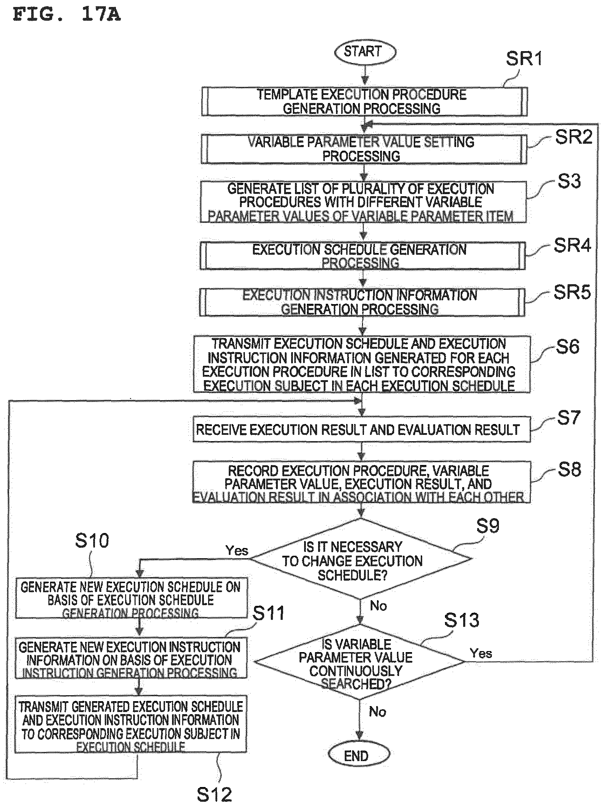

Next, the outline of the production process optimization method described above will be described by using a flowchart in Fig. 17A. Note that, in the production process optimization system 1, in practice, it is desirable that the plurality of execution schedules and the execution instruction information pieces generated for each listed execution procedure are presented to each execution subject, and a plurality of different execution procedures are simultaneously executed in the execution environment 100, and in this case, the execution result and the evaluation result may be received each time for each different execution procedure. Such a case will be described below by using Fig. 17B, and in the flowchart of Fig. 17A, in order to simplify the description, processing with respect to one execution procedure will be mainly described below.

As illustrated in Fig. 17A, in the flowchart in Fig. 17A, the production process optimization device 2 starts a production process optimization processing procedure from a start step, performs template execution procedure generation processing in subroutine SR1, and generates the template execution procedure. In the next subroutine SR2, the production process optimization device 2 performs variable parameter value setting processing, and selects the plurality of variable parameter values from the search range of the variable parameter items 26g and 26h defined in the template execution procedure.

In the next step S3, the production process optimization device 2 generates the list of the plurality of execution procedures in which the variable parameter values of the variable parameter items 26g and 26h are different from each other or the same. In the next subroutine SR4, the production process optimization device 2 performs execution schedule generation processing, and generates the execution schedule for each execution procedure generated in step S3. In the next subroutine SR5, the production process optimization device 2 performs execution instruction information generation processing, and generates the execution instruction information of the execution schedule generated in subroutine SR4.

In next step S6, the production process optimization device 2 transmits the execution schedule and the execution instruction information generated for each execution procedure in the list to the corresponding execution subject in each execution schedule. Accordingly, in the production process optimization system 1, each execution subject performs the operation of each execution procedure in the execution environment 100, in accordance with the execution schedule and the execution instruction information.

The production process optimization device 2 receives the execution result 21 and the evaluation result obtained in the execution environment 100 by the transmission/reception unit 11 in the next step S7, and records the execution procedure executed by the execution subject in the execution environment 100 on the basis of the execution schedule and the execution instruction information, the variable parameter value at this time, the execution result acquired from the execution environment 100, and the evaluation result acquired from the same execution environment 100 in the database 8 in association with each other, in the next step S8.

In the next step S9, the production process optimization device 2 determines whether the execution procedure is executed in accordance with the execution schedule presented to the execution subject from the execution result, the evaluation result, or the like. Here, in a case where the execution procedure is not executed in accordance with the execution schedule presented to the execution subject (No), in step S10, the production process optimization device 2 analyzes the unexecuted part in the execution schedule, and generates the execution schedule that is executable in the execution environment 100 by the execution schedule generation processing.

The production process optimization device 2 generates the execution instruction information of the newly generated execution schedule in the next step S11, and transmits the newly generated execution schedule and the execution instruction information to the corresponding execution subject in the execution schedule in the next step S12.

On the other hand, in a case where the execution procedure is executed in accordance with the execution schedule presented to the execution subject in step S9 described above (Yes), the production process optimization device 2 reflects the execution result and the evaluation result acquired from the execution subject in the execution environment 100 in the next step S13, and determines whether to search again for the optimum variable parameter value from the search range of the template execution procedure.

In a case where a search continuous command of the variable parameter value through the operation unit 10 is given to the manager who checks the execution result and the evaluation result acquired from the execution subject in the execution environment 100, a case where it is set to search for the variable parameter value until the evaluation result set in advance for the evaluation result acquired from the execution subject in the execution environment 100 is obtained, or a case where it is set to search for the variable parameter value only a predetermined number of times after the execution result and the evaluation result are acquired from the execution subject in the execution environment 100, the optimum variable parameter value is searched again from the search range of the template execution procedure (Yes).

In this case, the production process optimization device 2 returns again to subroutine SR2, and repeats the processing described above until a negative result (No) is obtained in step S13. On the other hand, in step S13, the production process optimization device 2 determines that the optimum variable parameter value is not searched again from the search range of the template execution procedure, the production process optimization processing described above is ended.

The flowchart of Fig. 17A focuses on one execution procedure in order to simplify the description, it is described that in a case where the optimum execution result and the optimum evaluation result are obtained, the production process optimization processing is ended. Therefore, the outline of the processing of the production process optimization device 2 when the plurality of execution schedules and the execution instruction information pieces are presented to the execution subject, and the production process optimization device 2 receives each execution result, each evaluation result, and the like of the plurality of different execution procedures from each execution subject will be described by using Fig. 17B.

In the example illustrated in Fig. 17B, for example, it is focused on a production process to the roasting and the blending of the coffee beans in which the execution subject in the execution environment 100 is roasters 1 and 2 and men A and B. In addition, an example will be described in which four execution procedures 0, 1, 2, and 3 are presented as the execution procedure of the production process. As described above, in the production process optimization system 1, it is desirable that the plurality of different execution procedures are presented to each execution subject through the execution schedule and the execution instruction information, and the plurality of different execution procedures are executed in parallel in the execution environment 100.

In the execution procedure 0, the roasting and the blending are ended, and the optimum execution result is obtained. On the other hand, in the execution procedure 2, the roasting is failed or delayed, and an execution result that there is an unexecuted operation (the blending) is obtained. The execution procedure 2 has not been executed, and the execution procedure 3 is currently being executed, and thus, each execution result is not obtained.

As illustrated in Fig. 17B, the production process optimization device 2 may receive the execution result that in the other execution procedure 2, the roasting is failed or delayed, and there is the unexecuted operation (the blending) after receiving the execution result of the execution procedure 0.

In this case, in the production process optimization device 2, the optimum execution result of the execution procedure 0 is stored in the database 8 and is utilized in the generation of the regression model subsequent to the next. In addition, in the production process optimization device 2, even after the optimum execution result is received in the execution procedure 0, the production process optimization processing is not immediately ended, and a non-optimum execution result of the execution procedure 1 that is subsequently obtained is stored in the database 8. Such a non-optimum execution result, as necessary, can be utilized as reference data subsequent to the next when generating the new execution procedure.

As described above, in the production process optimization system 1, it is desirable that the production process optimization processing is not ended only for one execution procedure 0, the execution results or the evaluation results of the other execution procedures 1, 2, and 3, as necessary, are also acquired and accumulated in the database 8, and in accordance with a situation, the production process optimization processing is ended by the determination of the manager or the like.

### (1-2) Template Execution Procedure Generation Processing

### (1-2-1) Configuration of Template Execution Procedure Generation Unit

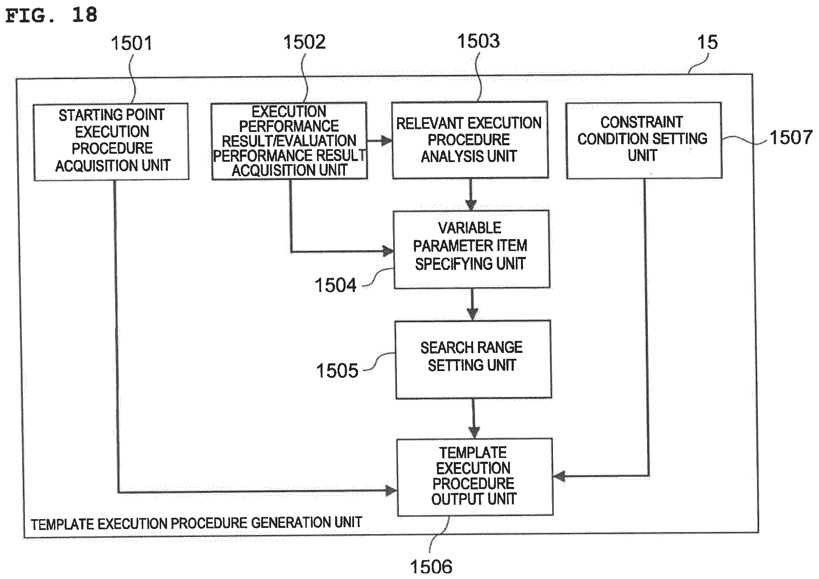

Next, the template execution procedure generation processing of generating the template execution procedure described above will be described. Fig. 18 is a block diagram illustrating the configuration of the template execution procedure generation unit 15. As illustrated in Fig. 18, the template execution procedure generation unit 15 includes a starting point execution procedure acquisition unit 1501, an execution performance result/evaluation performance result acquisition unit 1502, a relevant execution procedure analysis unit 1503, a variable parameter item specifying unit 1504, a search range setting unit 1505, a template execution procedure output unit 1506, and a constraint condition setting unit 1507.

The starting point execution procedure acquisition unit 1501 acquires the starting point execution procedure to be a starting point for optimization, with the contents (for example, the processing target, the product, the operation, and the like) common to the contents of the production process and the evaluation process, such as "Roasting and Blending of Two Types of Coffee Beans", "Coffee Beans A and B", "Roasting", and "Fragrance Qualitative Evaluation", which are input through the operation unit 10, as illustrated in Fig. 2, from the database 8.

As illustrated in Fig. 3 and Fig. 4, the execution performance result/evaluation performance result acquisition unit 1502 acquires the execution performance result and evaluation performance result of the same execution procedure as the starting point execution procedure, or, in a case where there are no execution performance result and evaluation performance result of the same execution procedure as the starting point execution procedure in the database 8, acquires the execution performance result and the evaluation performance result of the execution procedure (the relevant execution procedure) relevant to the starting point execution procedure from the database 8, on the basis of the contents of the production process and the evaluation process that are input through the operation unit 10, and the contents of the operation outline section in the starting point execution procedure.

Here, a case has been described in which the contents of the production process and the evaluation process that are input through the operation unit 10, and the execution performance result and the evaluation performance result that are the same as the contents of the operation outline section in the starting point execution procedure are acquired from the database 8, however, for example, the execution performance result and the evaluation performance result having similarity with the contents of the input production process and evaluation process, or the execution performance result and the evaluation performance result having similarity with the contents of the operation outline section in the starting point execution procedure may be acquired from the database 8.

The similarity, for example, is determined from the operation contents included in the production process and the evaluation process (hereinafter, collectively referred to as a process) and the sequence thereof, and the name or the characteristic value of the input and the output of the process. In the case of the operation contents and the sequence thereof, it is desirable to compare normalized intermediate representations. Specifically, for example, a distance between the abstract syntax trees of the processes is obtained. In addition, a tree automaton receiving the abstract syntax trees representing similar processes on the basis of the abstract syntax tree of one process is created, and whether the abstract syntax trees are received is determined. In the case of coffee beans, simply, it is desirable to compare distances between the respective names, and characteristic values of the raw beans, such as each component content, the moisture content, a production area, and a genomic sequence, as the comparison between the input and the output of the process.

The similarity is defined in advance in the execution performance result/evaluation performance result acquisition unit 1502, and thus, the execution performance result and the evaluation performance result having similarity with the contents of the input production process and evaluation process, or the execution performance result and the evaluation performance result having similarity with the contents of the operation outline section in the starting point execution procedure can be acquired from the database 8.

When there are no execution performance result and evaluation performance result of the same execution procedure as the starting point execution procedure in the database 8, but the execution performance result and the evaluation performance result of the execution procedure (the relevant execution procedure) relevant to the starting point execution procedure are read out from the database 8, the relevant execution procedure analysis unit 1503 analyzes the execution performance result and the evaluation performance result of the relevant execution procedure in order to specify the variable parameter item or the search range thereof from the starting point execution procedure. Note that, a case will be described below in which the execution performance result and the evaluation performance result of the relevant execution procedure are analyzed, and the variable parameter item or the search range thereof is specified from the starting point execution procedure.

The variable parameter item specifying unit 1504 specifies the execution parameter item 26d and the like capable of setting the variable parameter items 26g and 26h for setting the search range of the variable parameter value from the starting point execution procedure, on the basis of the execution performance result and the evaluation performance result. The search range setting unit 1505 specifies the search range set by the variable parameter items 26g and 26h to set the range thereof, on the basis of the execution performance result and the evaluation performance result.

The setting of the variable parameter items 26g and 26h and the search range thereof may be set by the manager through the operation unit 10.

Examples of the search range set in the variable parameter items 26g and 26h include (i) a search range indicating the maximum variable assume range in which a predetermined region range is further widened on the basis of the range of variable parameter value specified by the arithmetic processing unit 7 or the manager and (ii) a search range indicating the minimum variable assume range in which a promising predetermined region range (for example, a range specified from the previous empirical measurement or the previous knowledge of the manager, the constraint condition, or the like) is further narrowed on the basis of the range of the variable parameter value specified by the arithmetic processing unit 7 or the manager.

In a case where the variable parameter value is optimized while constant quality or a constant yield is secured by an actual manufacturing line, the search range setting unit 1505, for example, may narrow the search range of the variable parameter item or may narrow the search range to optimize an accumulated value of a set of evaluation performance results by performing an inverse operation from an allowable variation in quality and a production amount.

The template execution procedure output unit 1506 sets the search range obtained by the search range setting unit in the starting point execution procedure, generates the template execution procedure on the basis of the starting point execution procedure, and outputs the template execution procedure. The constraint condition setting unit 1507, as necessary, adds a new constraint condition to the constraint condition item 26e in the template execution procedure or corrects the constraint condition.

### (1-2-2) Case Where There Are No Execution Performance Result and Evaluation Performance Result of Same Execution Procedure as Starting Point Execution Procedure

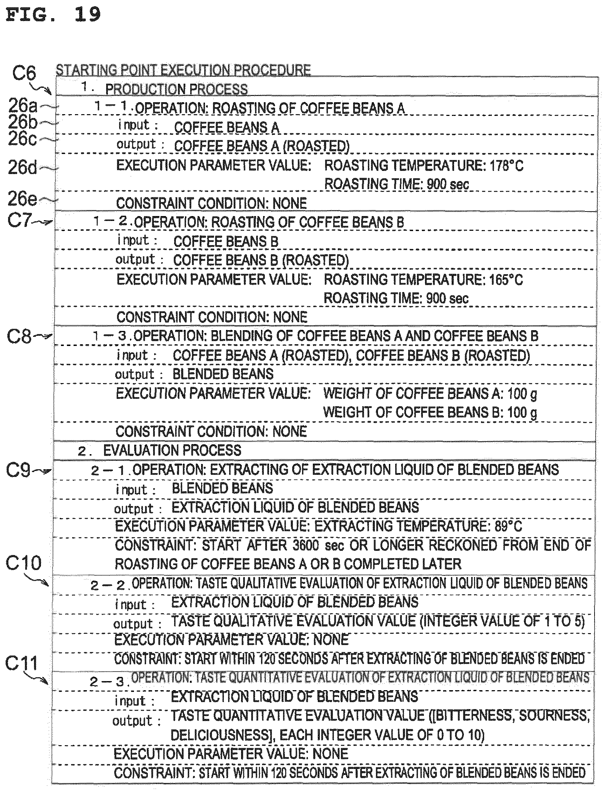

A case will be described below in which when there are no execution performance result and evaluation performance result of the same execution procedure as the starting point execution procedure in the database 8, the execution performance result and the evaluation performance result of the relevant execution procedure are analyzed, and the variable parameter item or the search range thereof is specified from the starting point execution procedure, by using Fig. 19 to Fig. 27.

Fig. 19 is a schematic view illustrating an example of the starting point execution procedure in which a production process for producing the blended beans blending the coffee beans A and B, and an evaluation process for executing taste qualitative evaluation and quantitative evaluation by extracting an extraction liquid of the blended beans from the obtained blended beans are defined.

In this case, in a case where terms such as "Roasting of Coffee Beans A", "Roasting of Coffee Beans B", and "Blending of Coffee Beans A and B" for specifying the production process desired to be optimized by the manager are input through the operation unit 10, and terms such as "Extracting of Extraction Liquid of Blended Beans", "Taste Qualitative Evaluation", and "Taste Quantitative Evaluation" for specifying the evaluation process are further input through the operation unit 10, the starting point execution procedure acquisition unit 1501, for example, searches the execution procedure of the same production process and the same evaluation process from the database 8 on the basis of the terms, and acquires the execution procedure as the starting point execution procedure.

Here, in order to simplify the description, a case is described in which on the basis of the terms input by the manager, the execution procedure including the same terms is searched from the database 8 and is acquired as the defined execution procedure, but the invention is not limited thereto. For example, in addition to the terms, the starting point procedure may be acquired from the database 8 on the basis of the degree of similarity defined in advance between the type indicated by the term (for example, the operation, the input, the output, the constraint, and the like), the procedure of the operation, a usage sequence of the processing target before performing the operation, an appearance sequence of the product obtained by the operation, the structure of the intermediate representation (for example, the abstract syntax tree), and the like.

Fig. 19 illustrates an example of the configuration of the starting point execution procedure searched from the database 8. As illustrated in Fig. 19, in the starting point execution procedure, the contents relevant to the operation performed in the production process and the evaluation process are defined in operation outline sections C6, C7, C8, C9, C10, and C11 for each operation. As with the starting point execution procedure in Fig. 2 described above, for example, the operation outline sections C1, C2, C3, and C4 of the starting point execution procedure include the operation item 26a in which the contents of the operation are defined, the input item 26b in which the processing target of the operation is defined, the output item 26c in which the product obtained by the operation is defined, the execution parameter item 26d in which the numerical value relevant to the operation is defined, and the constraint condition item 26e in which the constraint condition relevant to the operation is defined.

Next, the execution performance result/evaluation performance result acquisition unit 1502 searches whether the execution performance result and the evaluation performance result of the same execution procedure as the starting point execution procedure are recorded in the database 8, and in a case where the execution performance result and the evaluation performance result of the same execution procedure as the starting point execution procedure are not recorded in the database 8, the execution performance result and the evaluation performance result of the execution procedure (the relevant execution procedure) relevant to the starting point execution procedure are acquired from the database 8.

In this case, the execution performance result/evaluation performance result acquisition unit 1502, for example, on the basis of terms such as "Roasting of Coffee Beans A", "Roasting of Coffee Beans B", "Roasting", "Blending of Coffee Beans A and B", and "Blending" defined in the production process in the starting point execution procedure, and terms such as "Extracting of Extraction Liquid", "Taste Qualitative Evaluation", and "Taste Quantitative Evaluation" defined in the evaluation process, specifies the execution procedure including such terms from the execution procedure recorded in the database 8, and acquires the execution performance result and the evaluation performance result of the relevant execution procedure from the database 8 by using the specified execution procedure as the relevant execution procedure.

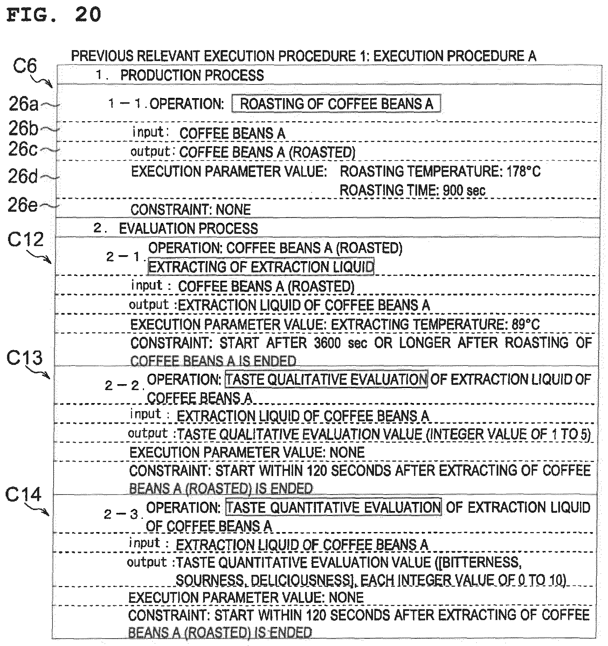

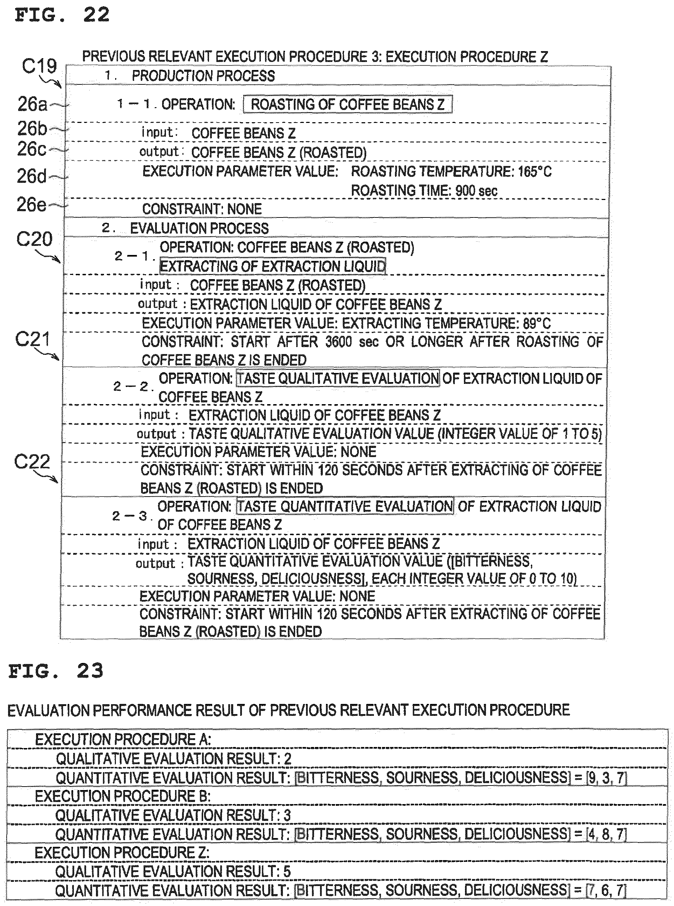

Fig. 20, Fig. 21, and Fig. 22 illustrate an example of the configuration of the execution performance result and the evaluation process of the relevant execution procedure. In addition, Fig. 23 illustrates the evaluation performance result of the relevant execution procedure (execution procedures A, B, and Z) illustrated in Fig. 20, Fig. 21, and Fig. 22.

The relevant execution procedure (the execution procedure A) illustrated in Fig. 20 does not include the operation outline section C7 of "Roasting of Coffee Beans B" and the operation outline section C8 of "Blending of Coffee Beans A and B" in the starting point execution procedure, but the operation outline sections C6, C12, C13, and C14 include the terms such as "Roasting of Coffee Beans A", "Extracting of Extraction Liquid", "Taste Qualitative Evaluation", and "Taste Quantitative Evaluation" in the starting point execution procedure. Accordingly, the execution performance result/evaluation performance result acquisition unit 1502 acquires the evaluation performance result of the relevant execution procedure illustrated in Fig. 20 and the execution procedure A illustrated in Fig. 23 as the execution performance result and the evaluation performance result of the relevant execution procedure.

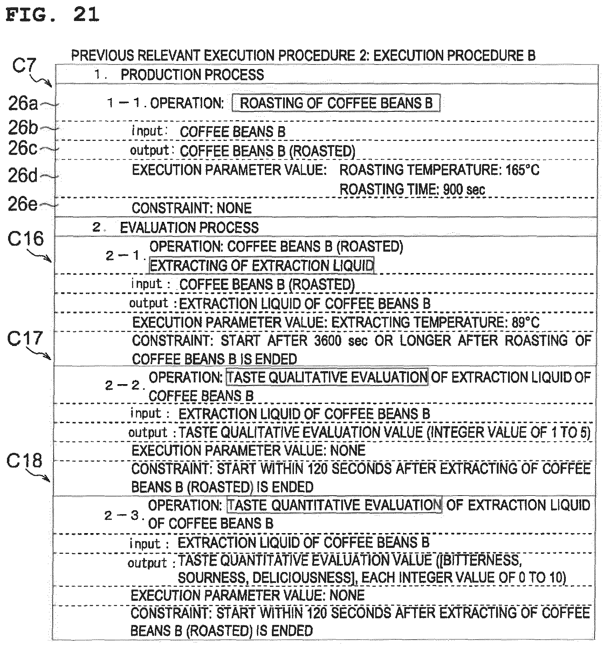

The relevant execution procedure (the execution procedure B) illustrated in Fig. 21 does not include the operation outline section C6 of "Roasting of Coffee Beans A" and the operation outline section C8 of "Blending of Coffee Beans A and B" in the starting point execution procedure, but the operation outline sections C7, C16, C17, and C18 include the terms such as "Roasting of Coffee Beans B", "Extracting of Extraction Liquid", "Taste Qualitative Evaluation", and "Taste Quantitative Evaluation" in the starting point execution procedure. Accordingly, the execution performance result/evaluation performance result acquisition unit 1502 acquires the execution performance result illustrated in Fig. 21 and the evaluation performance result of the execution procedure B illustrated in Fig. 23 as the execution performance result and the evaluation performance result of the relevant execution procedure.

The relevant execution procedure (the execution procedure Z) illustrated in Fig. 22 does not include the operation outline section C6 of "Roasting of Coffee Beans A", the operation outline section C7 of "Roasting of Coffee Beans B", and the operation outline section C8 of "Blending of Coffee Beans A and B" in the starting point execution procedure, but the operation outline sections C19, C20, C21, and C22 include the terms such as "Roasting", "Extracting of Extraction Liquid", "Taste Qualitative Evaluation", and "Taste Quantitative Evaluation" in the starting point execution procedure. Accordingly, the execution performance result/evaluation performance result acquisition unit 1502 acquires the execution performance result illustrated in Fig. 22 and the evaluation performance result of the execution procedure Z illustrated in Fig. 23 as the execution performance result and the evaluation performance result of the relevant execution procedure.

The relevant execution procedure analysis unit 1503 compares the contents of the execution performance result shown in the operation outline sections C6, C7, and C19 of each production process of the relevant execution procedures illustrated in Fig. 20, Fig. 21, and Fig. 22, with the contents of each evaluation performance result illustrated in Fig. 23, analyzes relativity, dependency, or the like between the contents of the execution performance result (the fluctuation and the like of the numerical value of the execution parameter value) obtained by the production process and the contents of the evaluation performance result obtained by the evaluation process, and assumes the execution parameter item of the production process that affects the evaluation performance result.

The relevant execution procedure analysis unit 1503 according to this embodiment, for example, is capable of forming a hypothesis that a roasting condition and a blending ratio for deriving a result close to the value ([Bitterness, Sourness, Deliciousness] = [7, 6, 7]) of "Quantitative Evaluation Result" that is the evaluation performance result of "Execution Procedure Z" from the fact that "Qualitative Evaluation Result" that is the evaluation performance result of "Execution Procedure Z" illustrated in Fig. 23 is the highest value of "5" may be searched.

The relevant execution procedure analysis unit 1503 analyzes the contents of "Quantitative Evaluation Result" of the execution procedures A and B, and obtains an analysis result that the bitterness relevant to "Execution Procedure A" is "9", which is higher than "7" of "Execution Procedure Z", and the sourness of "Execution Procedure A" is "3", which is lower than "6" of "Execution Procedure Z".

The relevant execution procedure analysis unit 1503 obtains an analysis result that the bitterness relevant to "Execution Procedure B" is "4", which is lower than "6" of "Execution Procedure Z", and the sourness of "Execution Procedure B" is "8", which is higher than "6" of "Execution Procedure Z". In addition, the relevant execution procedure analysis unit 1503 obtains an analysis result that the execution procedure Z is close to a line segment connecting the execution procedure A and the execution procedure B, in the quantitative evaluation result.

Accordingly, in a case where the coffee beans A (roasted) produced by "Execution Procedure A" and the coffee beans B (roasted) produced by "Execution Procedure B" are blended at a suitable ratio, the relevant execution procedure analysis unit 1503 obtains an analysis result that a blend with a taste similar to that of coffee beans Z (roasted) produced by "Execution Procedure Z" can be likely created.

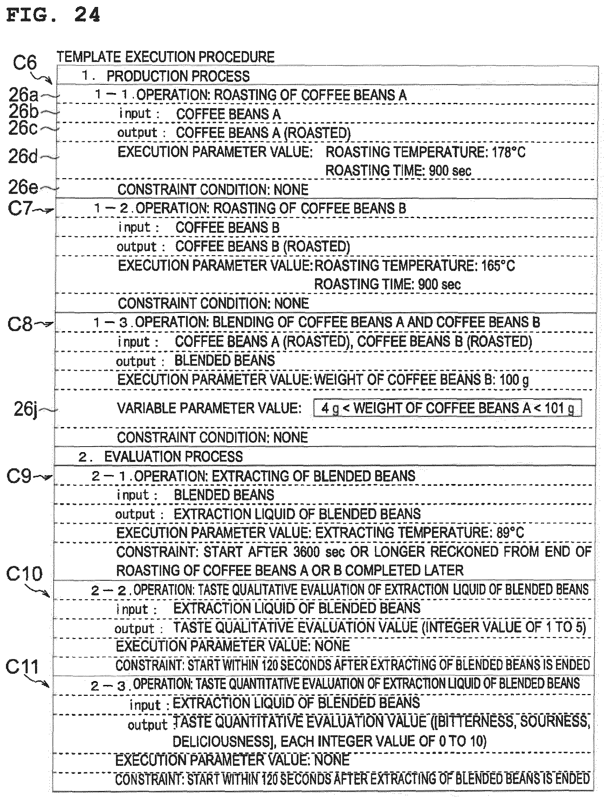

The relevant execution procedure analysis unit 1503 transmits such an analysis result to the variable parameter item specifying unit 1504. As illustrated in Fig. 24, the variable parameter item specifying unit 1504 sets "Weight of Coffee Beans A" of the execution parameter item defined in the operation outline section C8 of "Blending of Coffee Beans A and Coffee Beans B" in the starting point execution procedure, as the variable parameter item 26j, on the basis of the analysis result received from the relevant execution procedure analysis unit 1503, and the execution performance result and the evaluation performance result of the relevant execution procedure.

The variable parameter item specifying unit 1504 assumes the search range of the variable parameter item 26j, on the basis of the analysis result from the relevant execution procedure analysis unit 1503, the execution performance result and the evaluation performance result of the relevant execution procedure, and the starting point execution procedure in which "Weight of Coffee Beans A" of the operation outline section C8 is set as the variable parameter item 26j, and for example, "4 g < Weight of Coffee Beans A < 101 g" is set. Accordingly, the template execution procedure output unit 1506 outputs the template execution procedure as illustrated in Fig. 24, on the basis of such information.

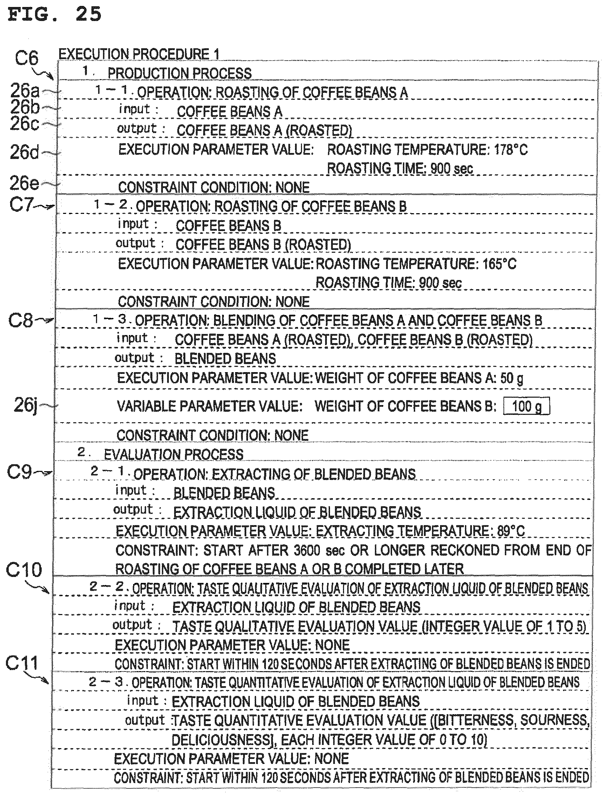

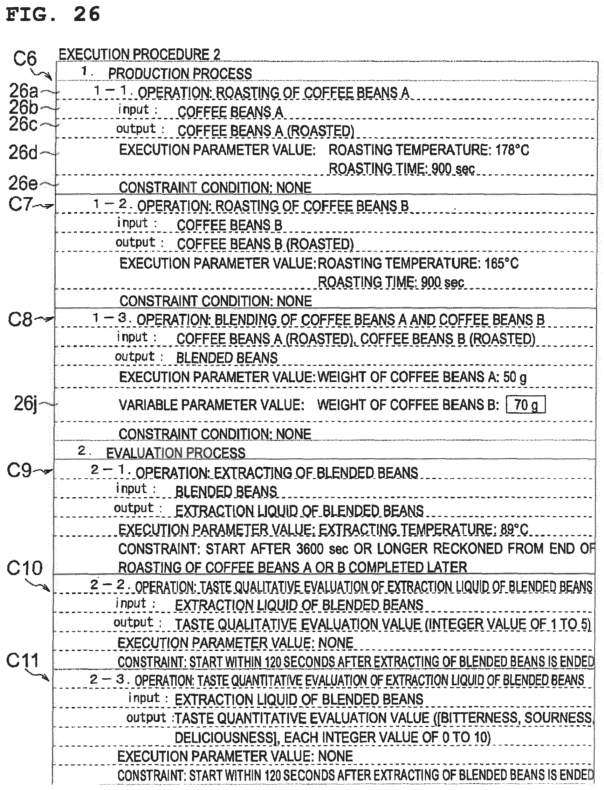

Fig. 25 and Fig. 26 illustrate an example of the configuration of the execution procedure generated on the basis of the template execution procedure illustrated in Fig. 24. In the arithmetic processing unit 7, in a case where the variable parameter value setting unit 16 receives the template execution procedure illustrated in Fig. 24 from the template execution procedure generation unit 15, the variable parameter value setting processing is performed by the variable parameter value setting unit 16, the plurality of variable parameter values (in this example, "100 g" or "70 g") are selected from the search range of the variable parameter item 26j, and the list of the plurality of execution procedures in which each variable parameter value is set is generated by the execution procedure generation unit 17.

### (1-2-3) Flowchart of Template Execution Procedure Processing Procedure

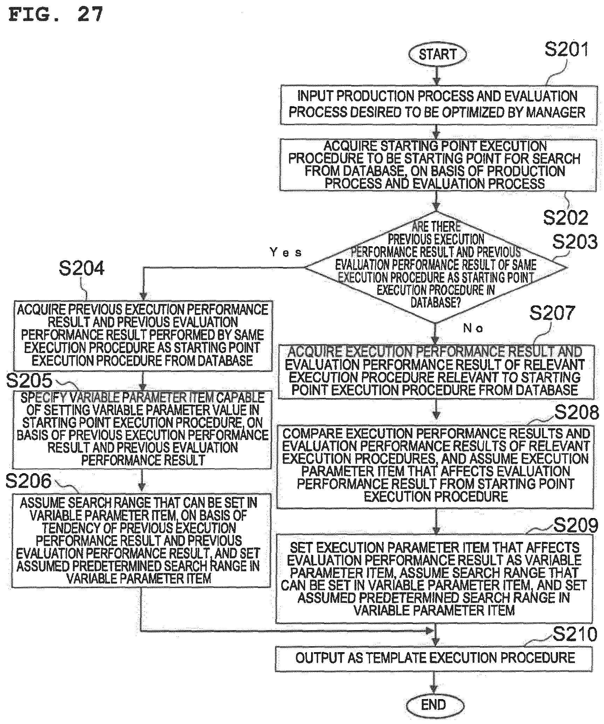

Next, the template execution procedure generation processing described above will be described below by using the flowchart in Fig. 27. As illustrated in Fig. 27, the production process optimization device 2 starts a template execution procedure generation processing procedure from the start step, and in the next step S201, the production process and the evaluation process desired to be optimized are input by the manager.

In the next step S202, the template execution procedure generation unit 15 acquires the starting point execution procedure to be the starting point for the search from the database 8, on the basis of the production process and the evaluation process.

Here, in order to simplify the description, a case has been described in which the database 8 is searched and the starting point execution procedure defining the search is acquired, but the invention is not limited thereto. For example, in a case where the database 8 is searched, but there is no starting point execution procedure defining the search, and the starting point execution procedure is not capable of being acquired from the database 8, in the template execution procedure generation unit 15, the starting point execution procedure may be newly created, and the starting point execution procedure may be acquired. As the creation of the new starting point execution procedure, the manager may create and acquire the new starting point execution procedure by oneself through the operation unit 10, or the template execution procedure generation unit 15 may automatically create and acquire the approximate starting point execution procedure on the model of the operation of a predetermined production process and a predetermined evaluation process from the tendency of an operation name, a used device name, or the like input by the manager.

In the next step S203, the template execution procedure generation unit 15 determines whether there are the previous execution performance result and the previous evaluation performance result of the same execution procedure as the starting point execution procedure in the database 8. Here, in a case where it is determined that there are the execution performance result and the evaluation performance result of the same execution procedure as the starting point execution procedure in the database 8 (YES), in the next step S204, the template execution procedure generation unit 15 acquires the execution performance result and the evaluation performance result of the same execution procedure as the starting point execution procedure from the database 8.

In the next step S205, the template execution procedure generation unit 15 specifies the variable parameter item capable of setting the variable parameter value in the starting point execution procedure, on the basis of the previous execution performance result and the previous evaluation performance result acquired in step S204.

In the setting of the variable parameter item, the manager may closely examine the item from the starting point execution procedure, and may set a predetermined item as the variable parameter item, on the basis of the input of a selection command by the manager through the operation unit 10.

In the next step S206, the template execution procedure generation unit 15 assumes the search range that can be set in the variable parameter item, on the basis of the previous execution performance result and the previous evaluation performance result acquired in step S204, and sets the assumed predetermined search range in the variable parameter item. In the next step S210, the template execution procedure generation unit 15 outputs the template execution procedure in which the search range is set in the variable parameter item, and ends the template execution procedure generation processing procedure described above.

In the setting of the search range in the variable parameter item, the manager may closely examine the range of the variable parameter value, and may set the search range, on the basis of the input of an input command by the manager through the operation unit 10.

On the other hand, in step S203 described above, in a case where it is determined that there are no execution performance result and evaluation performance result of the same execution procedure as the starting point execution procedure in the database 8 (NO), in the next step S207, the template execution procedure generation unit 15 acquires the execution performance result and the evaluation performance result of the relevant execution procedure relevant to the starting point execution procedure from the database 8, on the basis of the input production process and evaluation process.

In the next step S208, the template execution procedure generation unit 15 compares the execution performance results and the evaluation performance results of the plurality of relevant execution procedures, and assumes the execution parameter item that affects the evaluation performance result from the starting point execution procedure.

In the next step S209, the template execution procedure generation unit 15 sets the execution parameter item that affects the evaluation performance result as the variable parameter item, and assumes the search range that can be set in the variable parameter item, on the basis of the execution performance result and the evaluation performance result of the relevant execution procedure. Then, the template execution procedure generation unit 15 sets the assumed predetermined search range in the variable parameter item. In the next step S210, the template execution procedure generation unit 15 outputs the template execution procedure in which the search range is set in the variable parameter item, and ends the template execution procedure generation processing procedure described above.

### (1-3) Variable Parameter Value Setting Processing

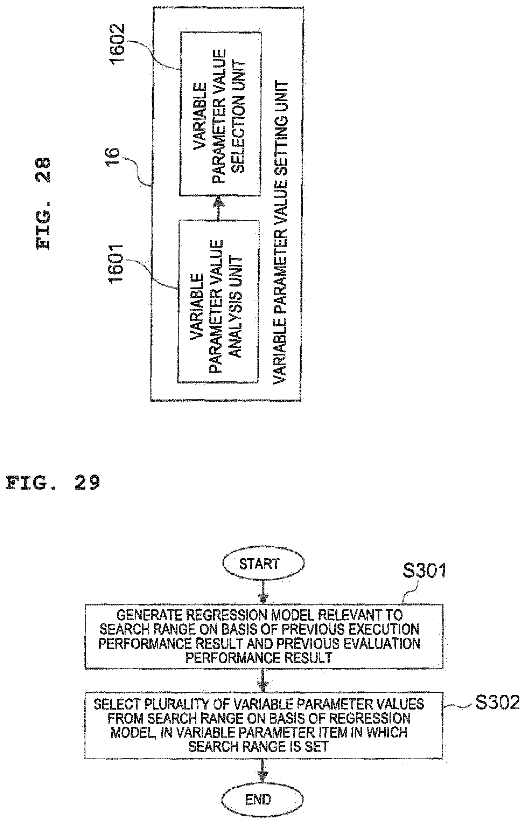

Next, the variable parameter value setting processing procedure described above will be described. Fig. 28 is a block diagram illustrating the configuration of the variable parameter value setting unit 16. As illustrated in Fig. 28, the variable parameter value setting unit 16 includes a variable parameter value analysis unit 1601 and a variable parameter value selection unit 1602. The variable parameter value analysis unit 1601, for example, acquires the execution performance result and the evaluation performance result identical or relevant to the starting point execution procedure from the database 8, and analyzes the variable parameter value that affects the evaluation performance result from the search range by the regression model or the like using the execution performance result and the evaluation performance result.

As the regression model, for example, principal component analysis (PCA) in which the execution parameter value of the execution performance result in a part corresponding to the variable parameter item for setting the search range by the template execution procedure is set as an explanatory variable, and the evaluation performance result is set as an objective variable, partial least squares (PLS) in which the execution parameter value and the evaluation performance result of the execution performance result in a part corresponding to the variable parameter item for setting the search range by the template execution procedure are set as an explanatory variable, and the evaluation performance result is set as an objective variable, and various regression models applying linear or non-linear transformation, such as polynomial regression, Gaussian process regression, random forest regression, and the like can be applied. In addition, as the regression model, for example, a machine learning model in which the execution performance result and the evaluation performance result are generated by machine learning may be applied.

As the machine learning model, for example, a neural network defined by combining at least one matrix operation and at least one linear or non-linear transformation can be applied. When the machine learning model is learned, there are supervised learning and unsupervised learning. When an unlearned machine learning model is subjected to supervised learning, the execution performance result, the evaluation performance result thereof, and a truth label (for example, an accuracy indicating whether the evaluation performance result is a desired evaluation performance result) indicating whether the evaluation performance result is a desired result are used, and when the execution performance result and the evaluation performance result are learned, learning is performed by applying a truth label.

When the unlearned machine learning model is subjected to the unsupervised learning, the execution performance result and the evaluation performance result thereof are used, and the regularity or the characteristic of the execution performance result and the evaluation performance result is learned.

The variable parameter value setting unit 16 allows the variable parameter value analysis unit 1601 to obtain a prediction result (for example, the accuracy in the case of the supervised learning, and a prediction evaluation result in the case of the unsupervised learning) by inputting the arbitrarily selected variable parameter value to the learned machine learning model, and allows the variable parameter value selection unit 1602 to select the variable parameter value on the basis of the prediction result.

In such a regression model, it is desirable to add the execution result and the evaluation result received from the execution environment 100 each time, as the explanatory variable, the objective variable, the learning data, or the like. Accordingly, it is possible to generate the regression model reflecting the latest data of the execution procedure executed in the execution environment 100, and to further optimize the production process.

The variable parameter value selection unit 1602 selects a predetermined number of variable parameter values from the search range of the variable parameter item, for example, in accordance with Bayesian optimization, an orthogonal table, a Latin hypercube method, or the like, on the basis of an analysis result of the variable parameter value analysis unit 1601.

Specifically, for example, the variable parameter value selection unit 1602 selects the variable parameter value by using the regression model generated by the variable parameter value analysis unit 1601 on the basis of the previous execution performance result and the previous evaluation performance result. As a method for selecting the variable parameter value by using the regression model, the variable parameter value can be algorithmically selected by defining some functions on the search space on the basis of the regression model, and by optimizing the functions, and a part or all of the variable parameter values generated as described above may be replaced by the determination of the manager.

The function defined on the search space on the basis of the regression model, for example, is a function (for example, upper confidence bound, expected improvement, parallel knowledge gradient, mutual information, and the like) that quantitatively defines how much improvement or information of the evaluation result is newly obtained after the variable parameter value is generated at which point of the search space, and it is possible to obtain a list of the predetermined number of variable parameter values by performing the optimization (for example, maximization, minimization, weighted sampling, and the like) of the given procedure with respect to the function.

In a case where there are the plurality of variable parameter values, and it is necessary to allocate a priority order to the variable parameter values, the priority order can be algorithmically determined by a given criterion (for example, in addition to sorting based on the value of the function, in a case where the variable parameter value is sequentially generated by a method such as local penalization, the priority order is allocated to a generation order of the variable parameter value in ascending order) that is suitably determined, the priority order may be arbitrarily allocated by the determination of the manager.

The variable parameter setting unit 16 may have a function of transforming or constraining the search range by reflecting an attribute value of the variable parameter value (for example, in the case of a substance concentration in a solution, a flow rate, and the like, it is effective to multiply the variable parameter value by log such that the change of the objective variable is more even with respect to the change of the explanatory variable, and the contribution is easily seen, and thus, for example, a value obtained by multiplying the variable parameter value by log) such that the variable parameter value is assumed from the transformed or constrained search range. For example, in a case where it is found that a certain variable parameter value is logarithmically changed with respect to the evaluation value, the cases of also correspondingly performing logarithmic transformation with respect to the variable parameter value are included.

In the case of performing the optimization while securing the constant quality and the constant yield by the actual manufacturing line, the variable parameter setting unit 16, for example, may narrow the variable parameter value from the search range by performing the inverse operation from the allowable variation in the quality and the production amount, or may select the variable parameter value for optimizing the accumulated value of the set of evaluation performance results from the search range.

In the case of describing the variable parameter value setting processing described above by using the flowchart in Fig. 29, the variable parameter value setting unit 16 starts the variable parameter value setting processing procedure from the start step, and for example, generates the regression model relevant to the search range on the basis of the previous execution performance result and the previous evaluation performance result, in the next step S301.

In the next step S302, the variable parameter value setting unit 16 selects the plurality of variable parameter values from the search range on the basis of the regression model, in the variable parameter item in which the search range is set, and ends the variable parameter value setting processing procedure.

### (1-4) Execution Schedule Generation Processing

### (1-4-1) Outline of Execution Schedule Generation Processing

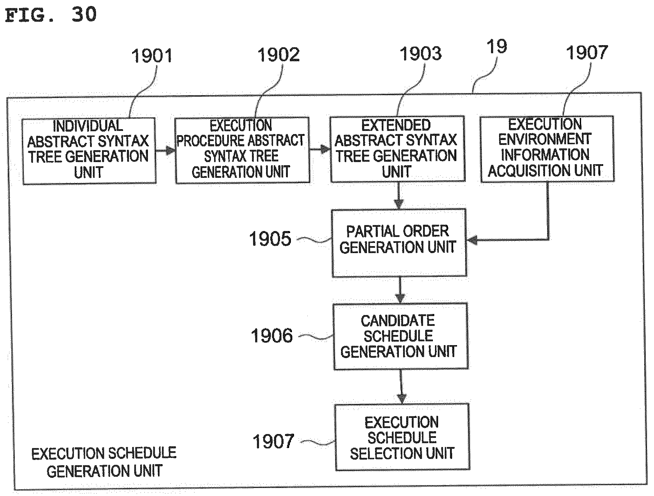

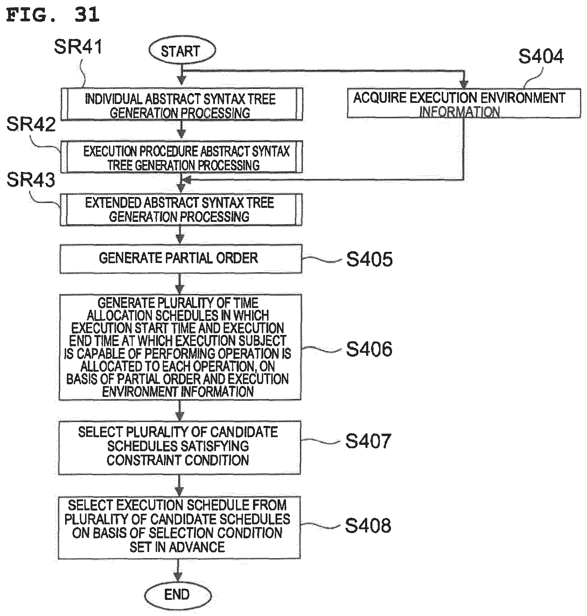

Next, the execution schedule generation processing procedure described above will be described. Fig. 30 is a block diagram illustrating the configuration of the execution schedule generation unit 19. In addition, Fig. 31 is a flowchart illustrating the execution schedule generation processing procedure. Note that, here, an example of generating the execution schedule of the execution procedure illustrated in Fig. 6 will be described below.

As illustrated in Fig. 30, the execution schedule generation unit 19 includes an individual abstract syntax tree generation unit 1901, an execution procedure abstract syntax tree generation unit 1902, an extended abstract syntax tree generation unit 1903, an execution environment information acquisition unit 1904, a partial order generation unit 1905, a candidate schedule generation unit 1906, and an execution schedule selection unit 1907.

In this case, as illustrated in Fig. 31, the execution schedule generation unit 19 starts the execution schedule generation processing procedure from the start step, and proceeds to the next subroutine SR41 and step S404. In subroutine SR41, the execution schedule generation unit 19 allows the individual abstract syntax tree generation unit 1901 to perform the individual abstract syntax tree generation processing (described below), and as illustrated in Fig. 6, to generate each individual abstract syntax tree for each operation defined in the operation outline sections C1, C2, C3, and C4 in the execution procedure.

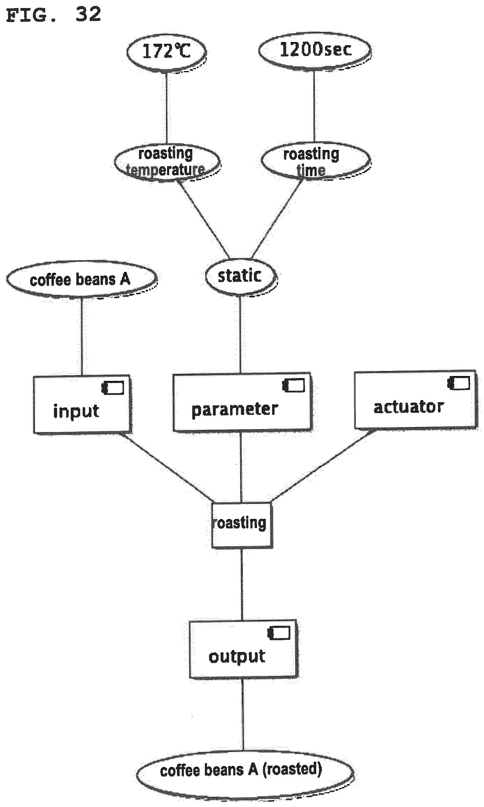

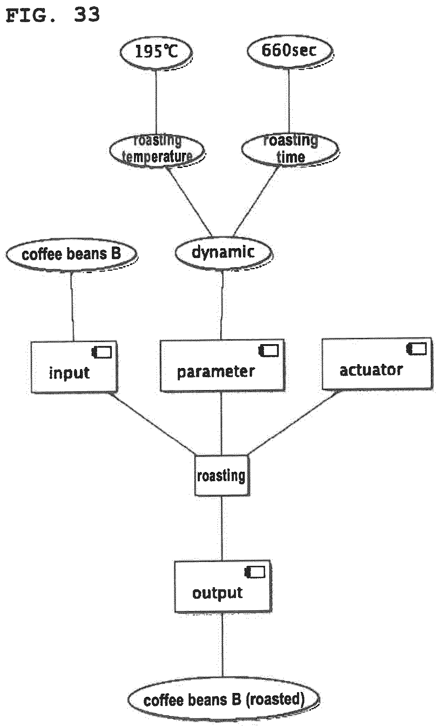

Fig. 32 illustrates the configuration of the individual abstract syntax tree generated from the operation outline section C1 of "Roasting of Coffee Beans A" in the execution procedure illustrated in Fig. 6 by the individual abstract syntax tree generation processing. Fig. 33 illustrates the configuration of the individual abstract syntax tree generated from the operation outline section C2 of "Roasting of Coffee Beans B" in the execution procedure illustrated in Fig. 6 by the individual abstract syntax tree generation processing.

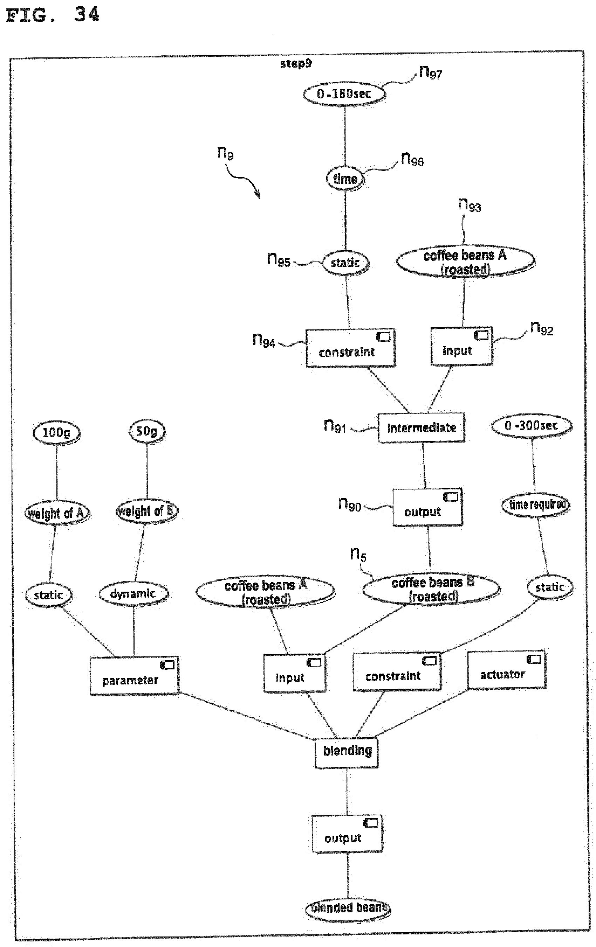

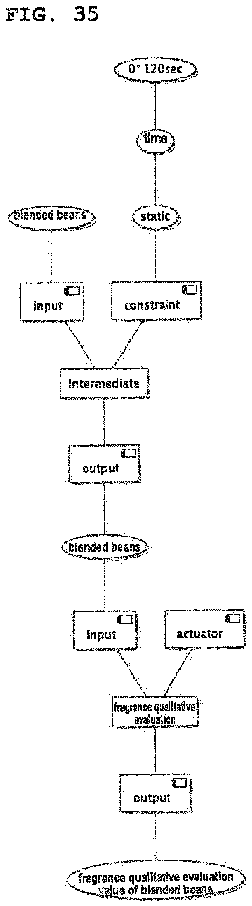

Fig. 34 illustrates the configuration of the individual abstract syntax tree generated from the operation outline section C3 of "Blending of Coffee Beans A and Coffee Beans B" in the execution procedure illustrated in Fig. 6 by the individual abstract syntax tree generation processing. Fig. 35 illustrates the configuration of the individual abstract syntax tree generated from the operation outline section C1 of "Fragrance Qualitative Evaluation of Blended Beans" in the execution procedure illustrated in Fig. 6 by the individual abstract syntax tree generation processing.

On the other hand, in step S404, the execution schedule generation unit 19 allows the execution environment information acquisition unit 1904 to acquire the execution environment information E as illustrated in Fig. 10A, for example, from the database 8 or the execution environment 100.

In subroutine SR42, the execution schedule generation unit 19 allows the execution procedure abstract syntax tree generation unit 1902 to perform the execution procedure abstract syntax tree generation processing (described below), to integrate a plurality of individual abstract syntax trees generated in subroutine SR41 described above, and to generate the execution procedure abstract syntax tree t as illustrated in Fig. 8 and Fig. 9. Note that, when there is only one individual abstract syntax tree, the individual abstract syntax tree is handled as the execution procedure abstract syntax tree.

In the next subroutine SR43, the execution schedule generation unit 19 allows the extended abstract syntax tree generation unit 1903 to perform extended abstract syntax tree generation processing (described below), to reflect the contents of the execution environment information E illustrated in Fig. 10 on the execution procedure abstract syntax tree t illustrated in Fig. 8 and Fig. 9, and to generate the extended abstract syntax tree t' illustrated in Fig. 12, Fig. 13, and Fig. 14.

In the next step S405, the execution schedule generation unit 19 allows the partial order generation unit 1905 to generate the partial order as illustrated in Fig. 10B from the extended abstract syntax tree t'. In the next step S406, the execution schedule generation unit 19 allows the candidate schedule generation unit 1906 to determine the start time (for example, 08:30 on January 2, 2020) for starting the execution procedure, and to generate the set A'' (Fig. 15) of a plurality of time allocation schedules in which the execution start time and the execution end time at which the execution subject is capable of performing the operation is allocated to each operation in accordance with the sequence for executing the operation, on the basis of the partial order and the execution environment information E.

The execution schedule generation unit 19 allows the candidate schedule generation unit 1906 to select the candidate schedule satisfying the constraint condition defined in the execution procedure or the like from the plurality of time allocation schedules, and to generate the set A‴ (Fig. 16) of the candidate schedules.

In the next step S408, the execution schedule generation unit 19 allows the execution schedule selection unit 1907, for example, to select the execution schedule from a plurality of candidate schedules on the basis of the selection condition set in advance such as "Selecting Candidate Schedule with Earliest Execution End Time of "Fragrance Qualitative Evaluation of Blended Beans" That Is Final Operation in Execution Procedure", and ends the execution schedule generation processing procedure.

### (1-4-2) Individual Abstract Syntax Tree Generation Processing

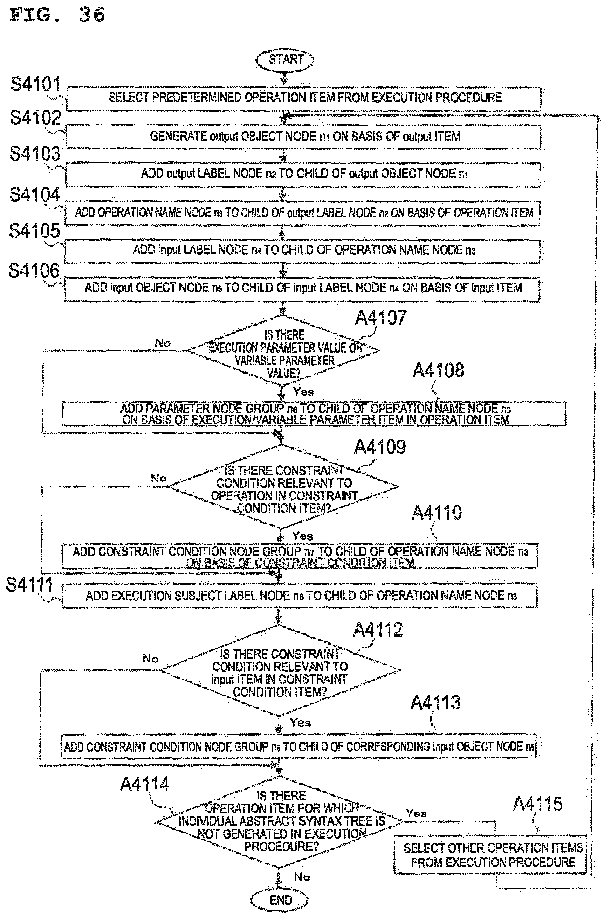

Next, the individual abstract syntax tree generation processing described above will be described. Fig. 36 is a flowchart illustrating an example of an individual abstract syntax tree generation processing procedure. Here, an example of generating the individual abstract syntax tree as illustrated in Fig. 34 on the basis of the operation outline section C3 of "Blending of Coffee Beans A and Coffee Beans B", in the execution procedure illustrated in Fig. 6.

As illustrated in Fig. 36, the individual abstract syntax tree generation unit 1901 starts the individual abstract syntax tree generation processing procedure from the start step, and for example, selects the operation item 26a of the operation outline section C1 for generating the individual abstract syntax tree from the execution procedure, in the next step S4101.

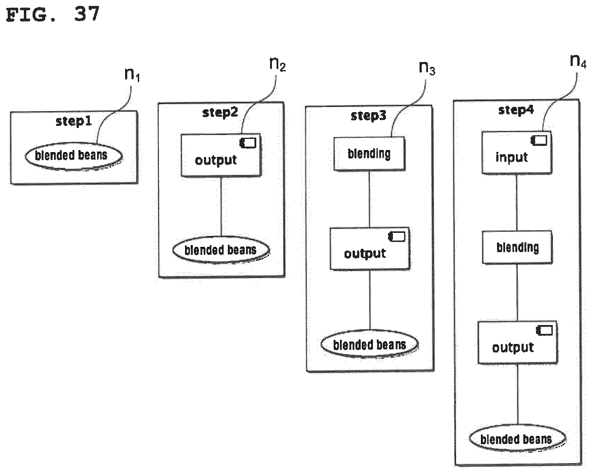

In the next step S4102, the individual abstract syntax tree generation unit 1901 generates an output object node n₁ indicating the contents (here, "Blending") of the output item 26c on the basis of the output item 26c of the operation outline section C3, as illustrated in "step1" of Fig. 37. In the next step S4103, the individual abstract syntax tree generation unit 1901 adds an output label node n₂ indicating "output" to the child of the output object node n₁ through an edge, as illustrated in "step2" of Fig. 37.

In the next step S4104, the individual abstract syntax tree generation unit 1901 adds an operation name node n₃ indicating the operation contents (here, "Blending" indicating the operation contents) of the operation item 26a to the child of the output label node n₂ through the edge on the basis of the operation item 26a of the operation outline section C3, as illustrated in "step3" of Fig. 37. In the next step S4105, the individual abstract syntax tree generation unit 1901 adds an input label node n₄ indicating "input" to the child of the operation name node n₃ through the edge, as illustrated in "step4" of Fig. 37.

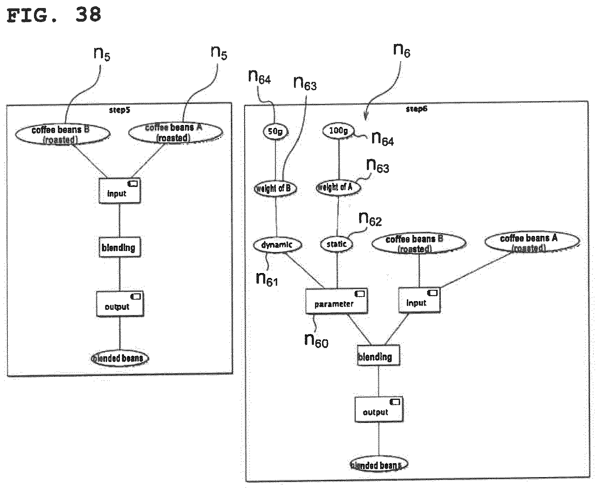

In the next step S4106, the individual abstract syntax tree generation unit 1901 adds an input object node n₅ indicating the contents (here, "Coffee Beans A (Roasted)" and "Coffee Beans B (Roasted)") of the input item 26b through the edge on the basis of the input item 26b of the operation outline section C3, as illustrated in "step5" of Fig. 38.

In the next step S4107, the individual abstract syntax tree generation unit 1901 determines whether there is the execution parameter value or the variable parameter value in the operation outline section C3. Here, in the operation outline section C3 of the execution procedure illustrated in Fig. 6, there is the execution parameter value in the execution parameter item 26d, there is the variable parameter value in the variable parameter item 26h, and an affirmative result (Yes) is obtained in step S4107, and thus, the individual abstract syntax tree generation unit 1901 proceeds to the next step S4108.

In step S4108, the individual abstract syntax tree generation unit 1901 adds a parameter node group n₆ indicating the contents of the execution parameter item 26d and the variable parameter item 26h to the child of the operation name node n₃ through the edge, as illustrated in "step6" of Fig. 38.

The parameter node group n₆ includes a parameter label node n₆₀ indicating the node of the parameter, a static label node n₆₂ indicating the execution parameter value, which is added to the child of the parameter label node n₆₀ through the edge, and a dynamic label node n₆₁ indicating the variable parameter value, which is added to the child of the parameter label node n₆₀ through the edge.

A parameter name node n₆₃ indicating a parameter name defined by the execution parameter value or the variable parameter value is added as the child to each of the static label node n₆₂ indicating the execution parameter value and the dynamic label node n₆₁ indicating the variable parameter value through the edge, and a parameter value node n₆₄ indicating the numerical value of the execution parameter value or the variable parameter value is added to the child of the parameter name node n₆₃ through the edge.

When it is determined that there is no execution parameter value or variable parameter value in step S4107 described above, the individual abstract syntax tree generation unit 1901 proceeds to the next step S4109.

In step S4109, the individual abstract syntax tree generation unit 1901 determines whether there is the constraint condition relevant to the operation in the constraint condition item 26e of the operation outline section C3, and proceeds to the next step S4110 in a case where there is the constraint condition. Note that, whether the constraint condition defined in the constraint condition item 26e is the constraint condition relevant to the operation, a constraint condition relevant to the input item 26b, a constraint condition relevant to the output item 26c, or a constraint condition relevant to the execution parameter item 26d or the variable parameter item 26h is determined when the execution procedure is generated.

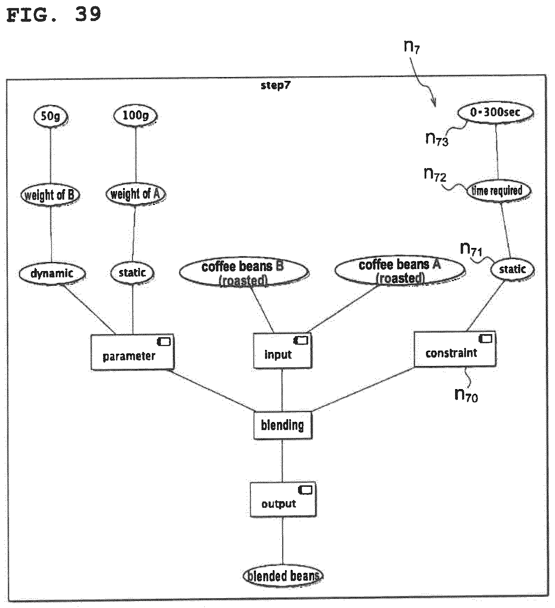

In step S4110, the individual abstract syntax tree generation unit 1901 adds a constraint condition node group n₇ indicating the contents of the constraint condition relevant to the operation, to the child of the operation name node n₃ on the basis of the constraint condition item 26e, as illustrated in "step7" of Fig. 39.

In the constraint condition node group n₇, a constraint label node n₇₀ indicating the contents of the constraint condition relevant to the operation is added to the child of the operation name node n₃ through the edge, and a static label node n₇₁ indicating a static constraint condition (a fixed condition without a fluctuation) is added to the child of the constraint label node n₇₀ through the edge. In addition, as the child of the static label node n₇₁, a constraint name node n₇₂ indicating a constrained target name is added through the edge, and as the child of the constraint name node n₇₂, a parameter value node n₇₃ indicating a constrained parameter value is added through the edge.

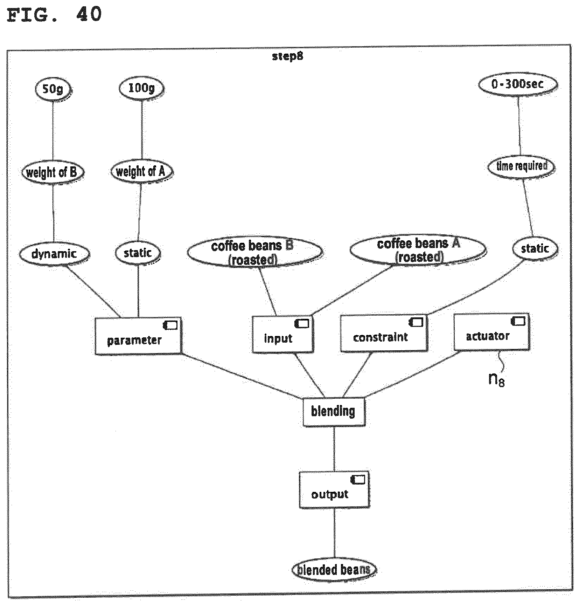

When it is determined that there is no constraint condition relevant to the operation in step S4109 described above, the individual abstract syntax tree generation unit 1901 proceeds to the next step S4111. In step S4111, the individual abstract syntax tree generation unit 1901 adds an actuator label node n₈ indicating the execution subject of the operation to the child of the operation name node n₃ through the edge, as illustrated in "step8" of Fig. 40.

In the next step S4112, the individual abstract syntax tree generation unit 1901 determines whether there is the constraint condition relevant to the input item 26b in the constraint condition item 26e of the operation outline section C3, and proceeds to the next step S4113 in a case where there is the constraint condition.

In step S4113, the individual abstract syntax tree generation unit 1901 adds a constraint condition node group n₉ indicating the contents of the constraint condition relevant to the input item 26b to the child of the corresponding input object node n₅ on the basis of the constraint condition item 26e, as illustrated in "step9" of Fig. 34.

In the constraint condition node group n₉, an output label node n₉₀ is added to the child of the corresponding input object node n₅ through the edge, and an intermediate label node n₉₁ is added to the child of the output label node n₉₀. In addition, in the constraint condition node group n₉, an input label node n₉₂ is added to the child of the intermediate label node n₉₁ through the edge, and an input object node n₉₃ indicating an input target to be an operation start/end determination criterion defined by the constraint condition (in this case, since an operation start constraint condition of starting the blending within 180 seconds after the roasting of the coffee beans A is ended is defined, here, "Coffee Beans A (Roasted)" is an operation start determination criterion defined by the constraint condition) is added to the child of the input label node n₉₂ through the edge.

In the constraint condition node group n₉, a constraint label node n₉₄ indicating the contents of the constraint condition relevant to the input item 26b is added to the child of the intermediate label node n₉₁ through the edge, and a static label node n₉₅ indicating the static constraint condition (the fixed condition without a fluctuation), a constraint name node n₉₆ indicating the constrained target name, and a parameter value node n₉₇ indicating the constrained parameter value are serially added to the child of the constraint label node n₉₄ through the edge.

When it is determined that there is no constraint condition relevant to the input item 26b in step S4112 described above, the individual abstract syntax tree generation unit 1901 proceeds to the next step S4114.

As described above, the individual abstract syntax tree generation unit 1901, for example, is capable of generating the individual abstract syntax tree for the operation outline section C3 of the execution procedure.

In step S4114, the individual abstract syntax tree generation unit 1901 determines whether there is the operation item 26a for which the individual abstract syntax tree is not generated in the execution procedure. Here, in a case where it is determined that there is the operation item 26a for which the individual abstract syntax tree is not generated in the execution procedure (YES), in the next step S4115, the individual abstract syntax tree generation unit 1901 selects the operation items 26a of other operation outline sections C1, C2, and C4 for which the individual abstract syntax tree is not generated from the execution procedure, returns again to step S4102 described above, and repeats the processing described above until a negative result (NO) is obtained in step S4114.

On the other hand, in step S4114, in a case where it is determined that there is no operation item 26a for which the individual abstract syntax tree is not generated in the execution procedure (NO), this indicates that the individual abstract syntax tree is generated for the operation items 26a of all the operation outline sections C1, C2, C3, and C4 in the execution procedure, and the individual abstract syntax tree generation unit 1901 ends the individual abstract syntax tree generation processing procedure described above.

### (1-4-3) Execution Procedure Abstract Syntax Tree Generation Processing

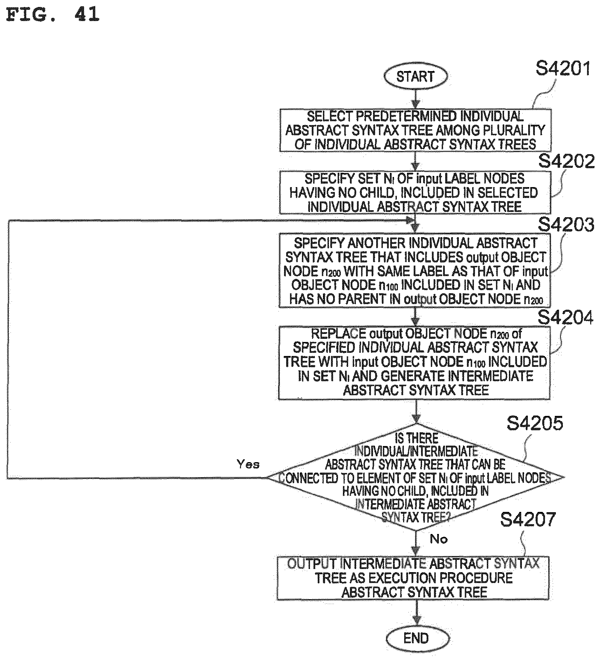

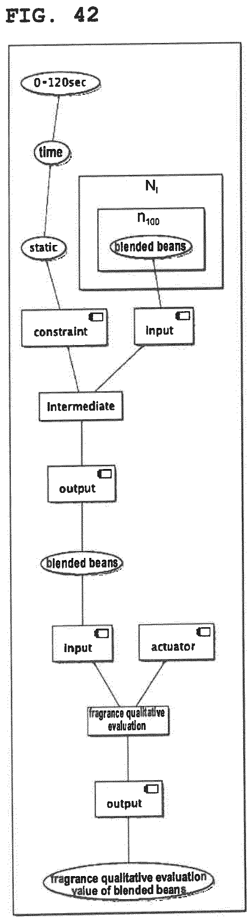

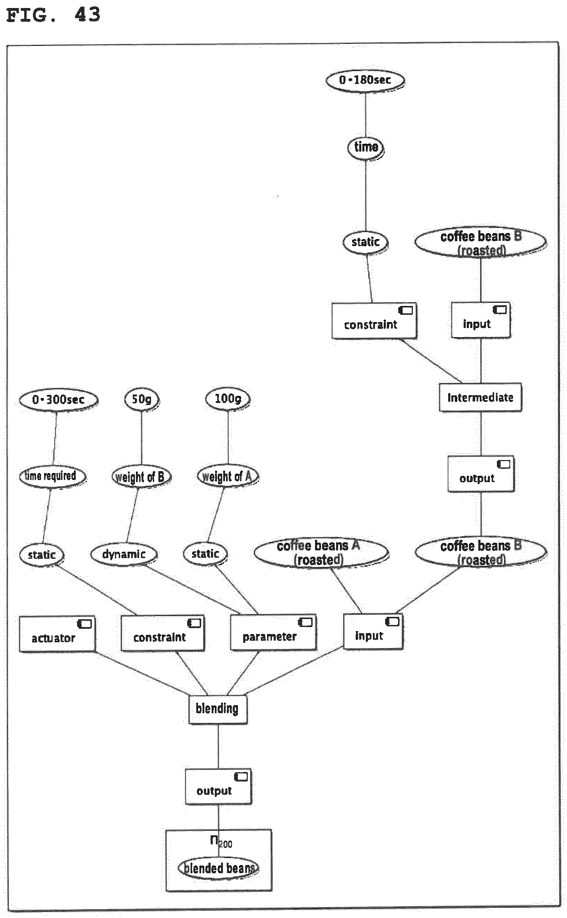

Next, the execution procedure abstract syntax tree generation processing of integrating individual abstract syntax trees described above will be described. Fig. 41 is a flowchart illustrating an example of the execution procedure abstract syntax tree generation processing procedure. Note that, here, an example of integrating an individual abstract syntax tree in Fig. 42 that is generated on the basis of the operation outline section C3 of "Blending of Coffee Beans A and Coffee Beans B", and an individual abstract syntax tree illustrated in Fig. 43 that is generated on the basis of the operation outline section C4 of "Fragrance Qualitative Evaluation of Blended Beans", in the execution procedure illustrated in Fig. 6, will be described.

Here, a case will be described in which the plurality of individual abstract syntax trees are generated, and the individual abstract syntax trees are integrated, and in accordance with the template execution procedure, there may be only one operation outline section, and only one individual abstract syntax tree may be generated. In this case, as described above, one individual abstract syntax tree that is generated is handled as the execution procedure abstract syntax tree.

As illustrated in Fig. 41, the execution procedure abstract syntax tree generation unit 1902 starts the execution procedure abstract syntax tree generation processing procedure from the start step, and selects a predetermined individual abstract syntax tree (here, for example, the individual abstract syntax tree relevant to the operation of "Fragrance Qualitative Evaluation of Blended Beans" that is finally performed (Fig. 42)) among the plurality of individual abstract syntax trees illustrated in Fig. 32, Fig. 33, Fig. 34, and Fig. 35 (Fig. 42 has the same configuration as that in Fig. 35), in the next step S4201.

As illustrated in Fig. 42, in the next step S4202, the execution procedure abstract syntax tree generation unit 1902 specifies a set Nₗ of the input label nodes having no child, included in the individual abstract syntax tree of "Fragrance Qualitative Evaluation of Blended Beans" selected in the previous step S4201.

As illustrated in Fig. 43, in the next step S4203, the execution procedure abstract syntax tree generation unit 1902 specifies the individual abstract syntax tree of "Blending of Coffee Beans A and Coffee Beans B" that includes an output object node n₂₀₀ with the same label (for example, a node name capable of identifying the node) as that of an input object node (here, an input object node with the label of "Blended Beans") n₁₀₀ included in the set Nₗ of Fig. 42, and has no parent in the output object node n₂₀₀.

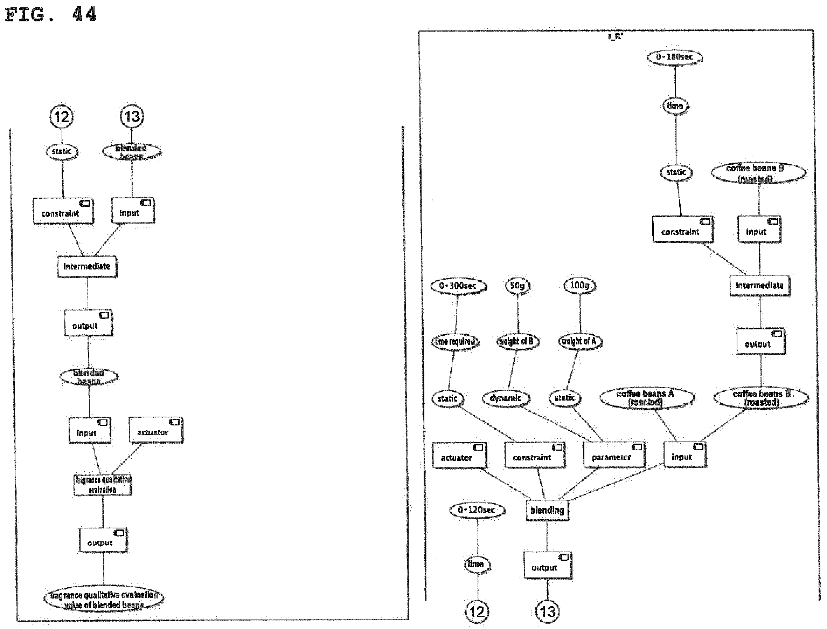

In the next step S4204, the execution procedure abstract syntax tree generation unit 1902 replaces the output object node n₂₀₀ of the individual abstract syntax tree of "Blending of Coffee Beans A and Coffee Beans B" illustrated in Fig. 43 specified in previous step S4203 with the input object node nₗ₀₀ included in the set Nₗ of individual abstract syntax trees of "Fragrance Qualitative Evaluation of Blended Beans" illustrated in Fig. 42, connects the individual abstract syntax tree in Fig. 42 and the individual abstract syntax tree in Fig. 43, and generates an intermediate abstract syntax tree as illustrated in Fig. 44.

In the next step S4205, the execution procedure abstract syntax tree generation unit 1902 determines whether there is the individual abstract syntax tree or the intermediate abstract syntax tree that can be connected to the element of the set Nₗ of the input label nodes having no child, included in the intermediate abstract syntax tree. Here, in a case where there are one or more individual abstract syntax trees or intermediate abstract syntax trees that can be connected to the set Nₗ of the input label nodes having no child, included in the intermediate abstract syntax tree, the execution procedure abstract syntax tree generation unit 1902 proceeds again to step S4203 described above, and specifies the individual abstract syntax tree that can be connected to the new set Nₗ included in the intermediate abstract syntax tree. As described above, in step S4205, the processing described above is repeated until there is no individual abstract syntax tree or intermediate abstract syntax tree that can be connected to the element of the set Nₗ of the input label nodes having no child, included in the intermediate abstract syntax tree.

On the other hand, in step S4205, in a case where there is no individual abstract syntax tree or intermediate abstract syntax tree that can be connected to the element of the set Nₗ of the input label nodes having no child, included in the intermediate abstract syntax tree, in the next step S4207, the execution procedure abstract syntax tree generation unit 1902 outputs the intermediate abstract syntax tree as the final execution procedure abstract syntax tree t' (Fig. 8 and Fig. 9), and ends the execution procedure abstract syntax tree generation processing procedure described above.

### (1-4-4) Extended Abstract Syntax Tree Generation Processing

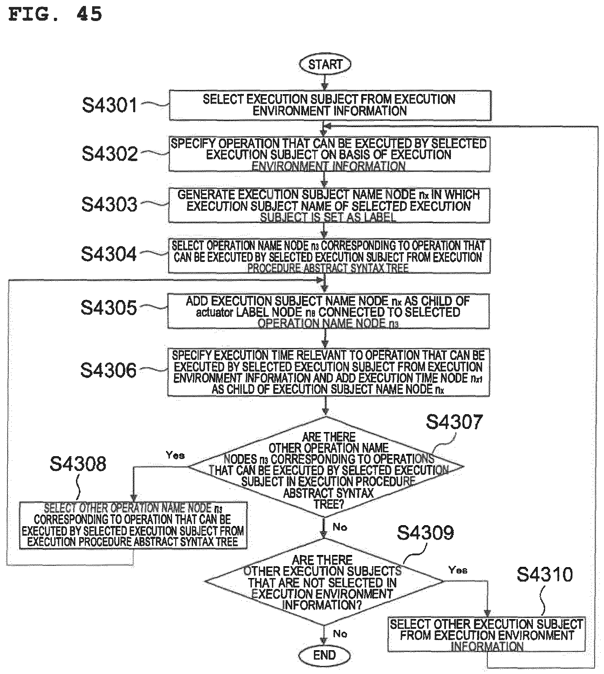

Next, the extended abstract syntax tree generation processing procedure described above will be described. Fig. 45 is a flowchart illustrating an example of the extended abstract syntax tree generation processing procedure. Note that, here, an example of generating the extended abstract syntax tree (Fig. 12, Fig. 13, and Fig. 14) on the basis of the execution environment information E illustrated in Fig. 10A and the execution procedure abstract syntax tree t' illustrated in Fig. 8 and Fig. 9 will be described.

As illustrated in Fig. 45, the extended abstract syntax tree generation unit 1903 starts the extended abstract syntax tree generation processing procedure from the start step, and selects a predetermined execution subject from the execution environment information E in Fig. 10A, in the next step S4301. Note that, here, in order to simplify the description, an example of selecting, for example, the "Man P" as the execution subject will be described. In the next step S4302, the extended abstract syntax tree generation unit 1903 specifies the operation that can be executed by the execution subject "Man P" selected in the previous step S4301 from the information of the execution environment information E.

For example, in the execution environment information E illustrated in Fig. 10A, it is specified that only the operations of the blending and the fragrance evaluation are executable in the case of the man P that can be the execution subject, only the operation of the roasting is executable in the case of the roasters X and Y that can be the execution subject, and only the operation of the blending is executable in the case of the man Q that can be the execution subject.

In the next step S4303, the extended abstract syntax tree generation unit 1903 generates an execution subject name node nₓ of "Man P" in which the execution subject selected in the previous step S4301 is set as a label (for example, an execution subject name that is capable of identifying the execution subject). More specifically, for example, execution subject name node nₓ is the execution subject name node nₓ in which "Man P" that is capable of identifying the man P is set as the label in the case of the man P, and is the execution subject name node nₓ in which "Roaster X" that is capable of identifying the roaster X is set as the label in the case of the roaster X.

In the next step S4304, the extended abstract syntax tree generation unit 1903 selects the operation name node n₃ corresponding to the operation that can be executed by "Man P" that is the execution subject selected in the previous step S4301 from the execution procedure abstract syntax tree t. In a case where "Man P" is selected in step S4301, as illustrated in Fig. 12, for example, the operation name node n₃ of "Fragrance Qualitative Evaluation" is selected.

In the next step S4305, the extended abstract syntax tree generation unit 1903 adds the execution subject name node nₓ of "Man P" as the child of the actuator label node n₈ connected to the operation name node n₃ of "Fragrance Qualitative Evaluation" selected in the previous step S4304 through the edge.

In the next step S4306, the extended abstract syntax tree generation unit 1903 specifies an execution time relevant to the operation of "Fragrance Qualitative Evaluation" that can be executed by "Man P" selected in the previous step S4301 from the execution environment information E, and as illustrated in Fig. 12, adds an execution time node nₓ₁ indicating the execution time (here, "200 sec") as the child of the execution subject name node nₓ of "Man P" through the edge.

In the next step S4307, the extended abstract syntax tree generation unit 1903 determines whether there are other operation name nodes n₃ corresponding to other operations that can be executed by "Man P" selected in the previous step S4301 in the execution procedure abstract syntax tree t.

In a case where "Man P" is selected, there is the operation of "Blending" as the other operation that can be executed by "Man P", and as illustrated in Fig. 9, there is operation name node n₃ of "Blending" that can be executed by "Man P" in the execution procedure abstract syntax tree t. Accordingly, in this case, in the next step S4308, the extended abstract syntax tree generation unit 1903 selects the operation name node n₃ of "Blending" corresponding to the operation of "Blending" that can be executed by "Man P" selected in the previous step S4301 from the execution procedure abstract syntax tree t, returns again to step S4305, and repeats the processing described above.

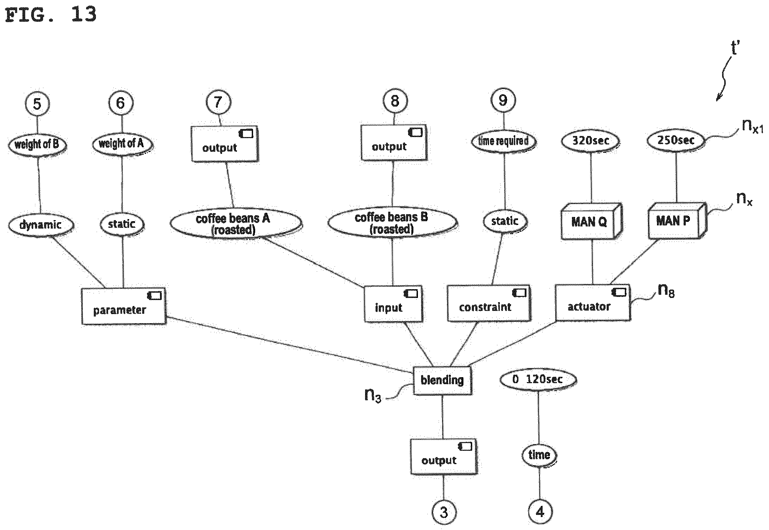

On the other hand, in a case where a negative result is obtained in step S4307, this indicates that the execution subject name node nₓ or the execution time node nₓ₁ of "Man P" is added to all the operation name nodes n₃ (as illustrated in Fig. 13, the operation name node n₃ of "Blending") that can be executed by "Man P" in the execution procedure abstract syntax tree t, and in this case, the extended abstract syntax tree generation unit 1903 proceeds to the next step S4309.

In step S4309, the extended abstract syntax tree generation unit 1903 determines whether there are other execution subjects (for example, the roasters X and Y and the man Q) that are not selected in the execution environment information E, and in a case where there are no other execution subjects, this indicates that the extended abstract syntax tree t' in which all the execution subjects in the execution environment information E are defined as the node in the execution procedure abstract syntax tree t is generated, and the extended abstract syntax tree generation unit 1903 ends the extended abstract syntax tree generation processing procedure described above.

On the other hand, in step S4309, in a case where there are other execution subjects (for example, the roasters X and Y and the man Q) that are not selected in the execution environment information E, in the next step S4310, the extended abstract syntax tree generation unit 1903 selects the other execution subject from the execution environment information E, returns again to step S4302, and repeats the processing described above until a negative result is obtained in step S4309.

### (1-4-5) Partial Order Generation Processing

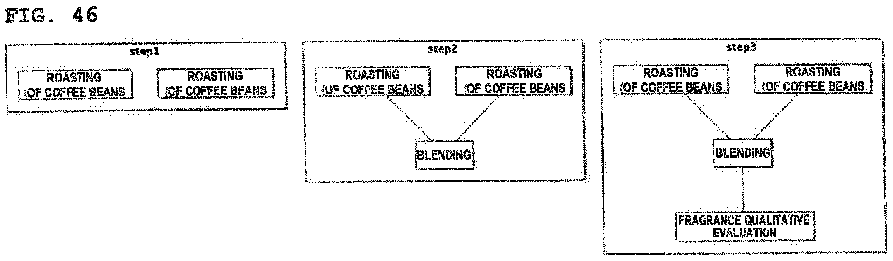

Next, a processing procedure of generating the partial order described above will be described. In this case, the partial order generation unit 1905 generates the partial order as illustrated in Fig. 10B from the extended abstract syntax tree. The partial order generation unit 1905 extracts the operation name nodes n₃ of "Roasting (of Coffee Beans A)" and "Roasting (of Coffee Beans B)" having no operation name node n₃ as a descendant among the operation name nodes n₃ of extended abstract syntax tree t', as illustrated in "step1" of Fig. 46.

The partial order generation unit 1905 extracts the operation name node n₃ of "Blending" including all the operation name nodes n₃ of "Roasting (of Coffee Beans A)" and "Roasting (of Coffee Beans B)" having no operation name node n₃ as the descendant among the operation name nodes n₃ of the extended abstract syntax tree t', and adds the operation name nodes n₃ of "Roasting (of Coffee Beans A)" and "Roasting (of Coffee Beans B)" as the child of the operation name node n₃ of "Blending" through the edge, as illustrated in "step2" of Fig. 46.

The partial order generation unit 1905 repeats the processing, and obtains the partial order as illustrated in "step3" of Fig. 46 as the final processing result.

### (1-5) Execution Instruction Information Generation Processing

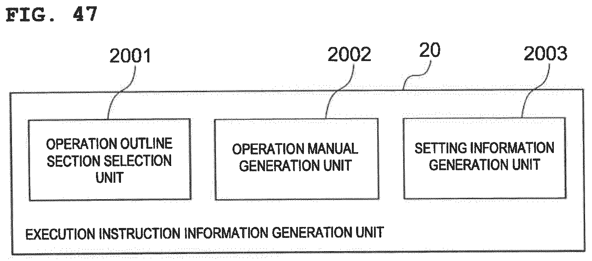

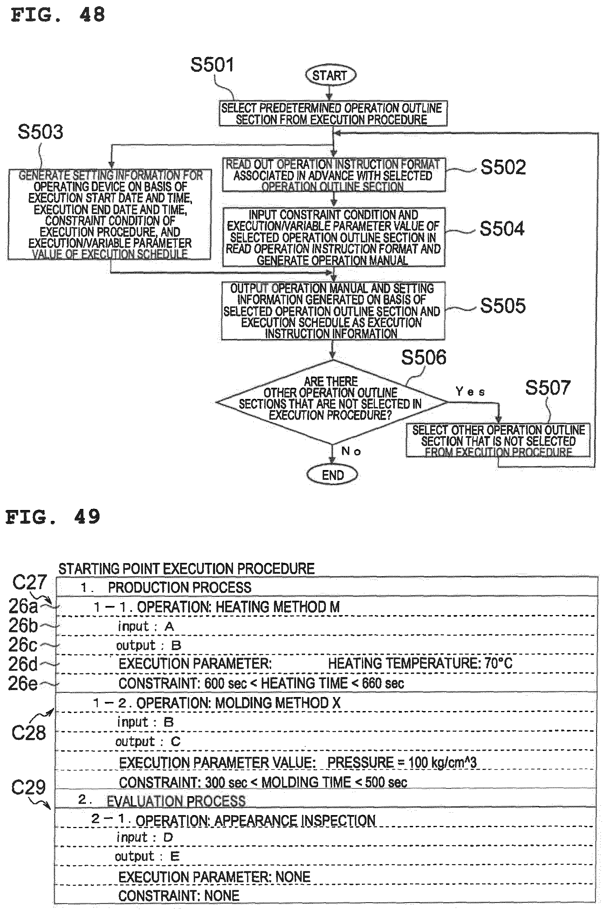

Next, the execution instruction information generation processing procedure described above will be described. Fig. 47 is a block diagram illustrating the configuration of the execution instruction information generation unit 20. In addition, Fig. 48 is a flowchart illustrating the execution instruction information generation processing procedure. As illustrated in Fig. 47, the execution instruction information generation unit 20 includes an operation outline section selection unit 2001, an operation manual generation unit 2002, and a setting information generation unit 2003.

In this embodiment, an operation manual and setting information described below are set as the execution instruction information, but the invention is not limited thereto, and for example, only the operation manual may be set as the execution instruction information, or only the setting information may be set as the execution instruction information.

In this case, as illustrated in Fig. 48, the execution instruction information generation unit 20 starts the execution schedule generation processing procedure from the start step. In step S501, the operation outline section selection unit 2001, for example, selects the predetermined operation outline section C1 from the execution procedure illustrated in Fig. 6, and proceeds to the next step S502 and step S503.

In the next step S502, the operation manual generation unit 2002 reads out an operation instruction format associated in advance with the operation outline section C1 selected in step S501 from the database 8.

For example, the operation instruction format is sentences in a format set in advance by a natural language, and may be any format insofar as it is possible to present the contents of the execution procedure, or the contents of the execution schedule generated on the basis of the execution procedure such that the men P and Q that are the execution subject are capable of understanding the contents by the natural language.

In the next step S504, the operation manual generation unit 2002 reads out constraint information, the execution parameter value, the variable parameter value, and the like of the operation outline section C1 selected in step S501, time information of the execution schedule, and the like, inputs the read contents to each region set in advance in the operation instruction format, and generates the operation manual.

The operation manual may be in various formats insofar as it is possible to create the contents of the execution procedure or the contents of the execution schedule generated on the basis of the execution procedure such that the men P and Q that are the execution subject is capable of understanding the contents by the natural language.

On the other hand, in step S503, the setting information generation unit 2003, for example, generates the setting information such as a program for operating the roasters X and Y that are the execution device, on the basis of an execution start date and time when the execution subject starts the execution of the operation, an execution end date and time when the execution subject ends the execution of the operation, the constraint condition of the execution procedure, the execution parameter value, and the variable parameter value, which are set by the execution schedule.

In step S505, the execution instruction information generation unit 20 outputs the operation manual and the setting information generated on the basis of the operation outline section C1 selected in step S501 and the execution schedule as the execution instruction information.

In the next step S506, the execution instruction information generation unit 20 determines whether there is the operation outline section that is not selected in the execution procedure, and in a case where there is the operation outline section (Yes), in step S507, the operation outline section selection unit 2001 selects the operation outline section C2 or the like that is not selected in step S501, and returns again to step S502 described above.

As described above, the execution instruction information generation unit 20 repeats the processing described above until a negative result (No) is obtained in step S506, and thus, is capable of generating the execution instruction information for each of all the operation outline sections C1, C2, C3, and C4 in the execution procedure.

### (1-6) Functions and Effects

In the configuration described above, in the production process optimization method according to this embodiment, the starting point execution procedure to be the starting point for the search in which each of the plurality of operations sequentially performed in the production process is defined as the operation item and information relevant to the operation is defined is acquired (an acquisition step). In the production process optimization method, one or a plurality of variable parameter items capable of setting the variable parameter value in the starting point execution procedure are specified (a variable parameter item specifying step), and the execution procedure is generated by setting the variable parameter value in variable parameter item specified in the variable parameter item specifying step on the basis of the previous execution performance result and the evaluation performance result thereof (an execution procedure generation step).

In the production process optimization method, the execution result when the execution subject executes the execution according to the execution procedure in the execution environment is acquired (an execution result acquisition step), and the evaluation result with respect to the execution result is acquired (an evaluation result acquisition step). In the production process optimization method, the execution procedure, the variable parameter value, the execution result, and the evaluation result are recorded in association with each other (a storage step).

Accordingly, the production process optimization method can be utilized as a clue for the execution subject to actually execute the production process in the execution environment 100 on the basis of the execution procedure, the variable parameter value, the execution result, and the evaluation result, and to search for the execution procedure of the optimum production condition in which the maximum gain is obtained, and thus, the optimum production condition with a large gain can be obtained by the minimum number of times of the experiment execution. In addition, in the production process optimization method, the optimum production condition with a large gain can be obtained by the minimum number of times of the experiment execution, and thus, the total cost and the effort for searching for the production condition can be reduced, and the optimum production process with a large gain can be obtained.

### (1-7) Embodiment of Production Process for Producing Molding Product by Processing Target to Be Processed

In the first embodiment described above, the case of applying the production process for producing the blended beans by blending the coffee beans A and B has been described, and here, as another embodiment, for example, the case of applying a production process for producing a molding product C by heating and molding a target A to be processed will be described.

In this case, as with the first embodiment described above, the production process optimization device 2 generates an execution procedure of a production process for producing the molding product C from the target A to be processed and an evaluation process thereof, an execution schedule that is data indicating when each execution subject collaboratively performs each operation in the execution procedure, and execution instruction information for instructing the execution subject in the execution environment 100 to execute each corresponding operation in accordance with the execution schedule, by the production process optimization processing.

In a case where the production process (for example, a heating method M, a molding method X, and the like) and the evaluation process (an appearance inspection) desired to be optimized by the manager are selected through the operation unit 10, the template execution procedure generation unit 15 selects an execution procedure corresponding to the production process and the evaluation process as the starting point execution procedure from the plurality of execution procedures stored in the database 8.

Fig. 49 illustrates an example of the configuration of the starting point execution procedure relevant to the production process for producing the molding product C and the evaluation process. In the starting point execution procedure, contents relevant to the operation performed in the production process and the evaluation process are defined in operation outline sections C27, C28, and C29 for each operation. The operation outline sections C27, C28, and C29 of the starting point execution procedure according to this embodiment, for example, include the operation item 26a in which the contents of the operation are defined, the input item 26b in which the processing target of the operation is defined, the output item 26c in which the product to be obtained by the operation is defined, the execution parameter item 26d in which the numerical value relevant to the operation is defined, and the constraint condition item 26e in which the constraint condition relevant to the operation is defined.

The template execution procedure generation unit 15 selects the execution parameter item 26d in which the execution parameter value can be changed in the starting point execution procedure as the variable parameter item on the basis of the execution performance result of the previous execution procedure and the evaluation performance result thereof stored in the database 8, and generates the template execution procedure for determining by which execution procedure of the execution parameter value the production process and the evaluation process are executed in the execution environment 100 and the execution result is evaluated, subsequently.

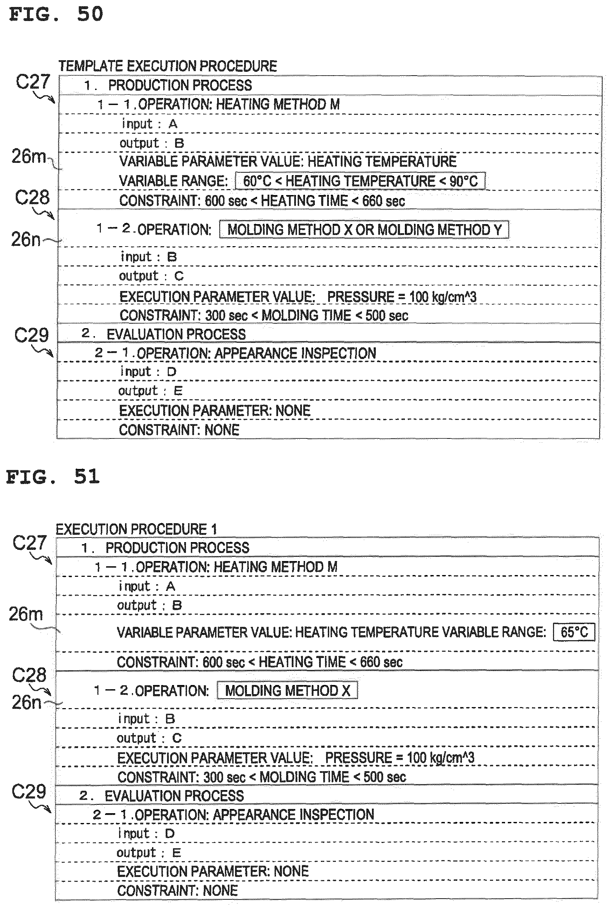

Fig. 50 illustrates an example of the configuration of the template execution procedure in which variable parameter items 26m and 26n are set in the starting point execution procedure illustrated in Fig. 49, and a search range is set in each of the variable parameter items 26m and 26n, with reference to the execution performance result and the evaluation performance result.

In this embodiment, "Heating Temperature" in the operation outline section C27 of "Heating Method M" is set as the variable parameter item 26m, and "60°C < Roasting Temperature < 90°C" is set as the search range of the heating temperature. In addition, in this embodiment, the operation item 26a in the operation outline section C28 of "Molding Method" is set as the variable parameter item 26n, and "Molding Method X or Molding Method Y" but not a numerical value is set as the search range of the molding method. As described above, it is not necessary that the variable parameter value is a numerical value, and the variable parameter value includes the specification of the molding method, the specification of the heating method, a raw material name, and the like. Here, "Molding Method Y" is set as the search range, with reference to the execution performance result and the evaluation performance result.

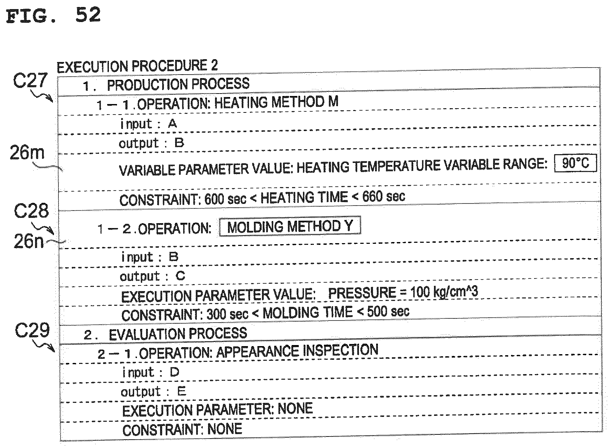

Fig. 51 and Fig. 52 illustrate an example of the configuration of the execution procedure generated on the basis of the template execution procedure illustrated in Fig. 50. In the execution procedure of Fig. 51, the heating temperature is set to "60°C" in the operation outline section C27 of "Heating Method M", and the operation item 26a that is the variable parameter item 26n in the operation outline section C28 of "Molding Method" is set to "Molding Method X". In the execution procedure of Fig. 52, the heating temperature is set to "90°C" in the operation outline section C27 of "Heating Method M", and the operation item 26a that is the variable parameter item 26n in the operation outline section C28 of "Molding Method" is set to "Molding Method Y".

In this embodiment, a processing method for setting the search range and a processing method for setting the variable parameter value from the search range are the same as those in the embodiment described above, and thus, here, the description thereof will be omitted.

### (2) Production Process Optimization Method according to Second Embodiment

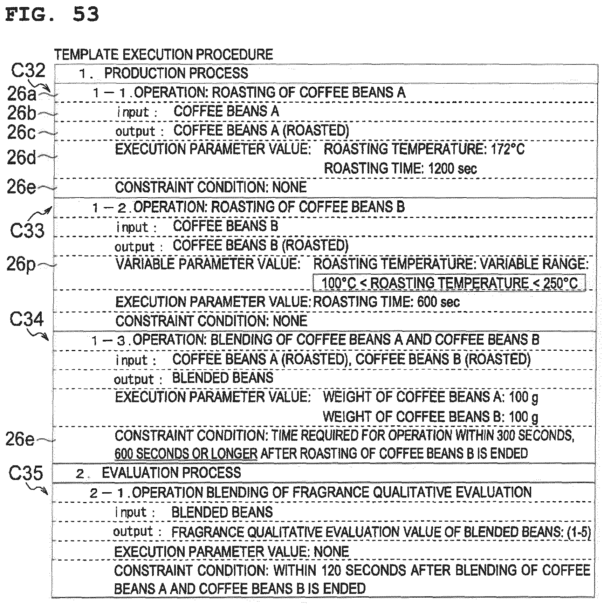

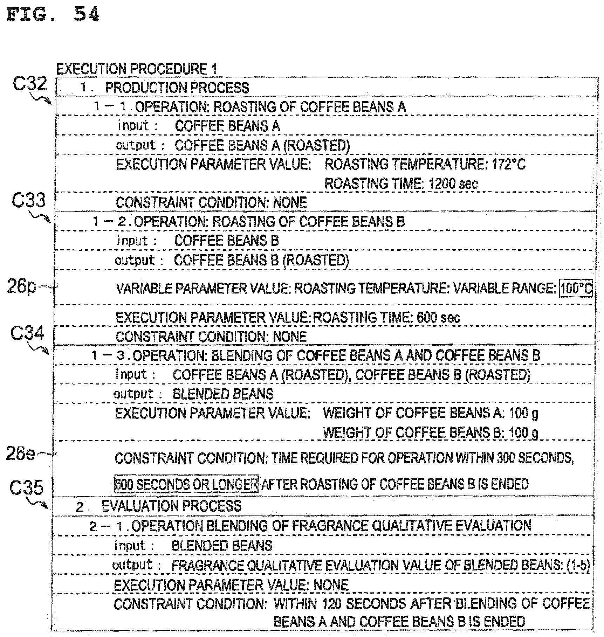

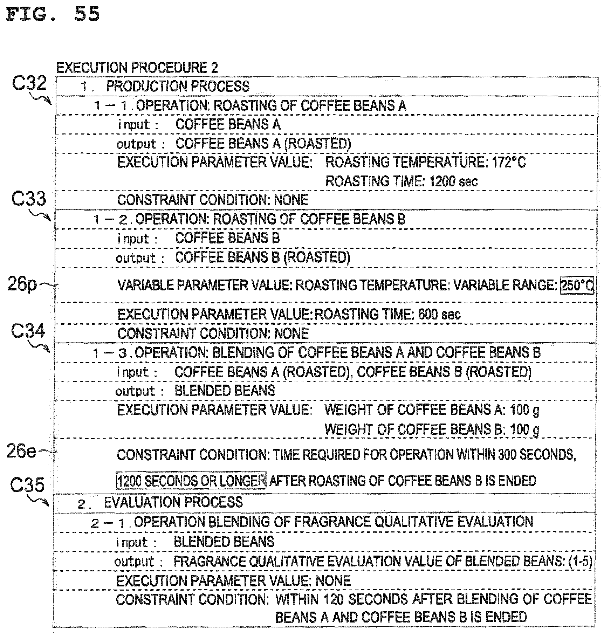

Next, a production process optimization method according to a second embodiment will be described. In the production process optimization method according to the second embodiment, when the variable parameter value is set from the search range defined in the variable parameter value setting item, a verification rule for correcting the contents set in the constraint condition item to the optimum contents in accordance with the variable parameter value is set. Here, the production process optimization method according to the second embodiment will be described by using the template execution procedure illustrated in Fig. 53 and the execution procedures illustrated in Fig. 54 and Fig. 55.

The second embodiment is different from the first embodiment only in the configuration of the constraint condition setting unit 1507 of the template execution procedure generation unit 15 illustrated in Fig. 18, and other configurations of the second embodiment are the same as the configurations of the first embodiment described above, and thus, here, the constraint condition setting unit 1507 with a different configuration will be mainly described below.

The template execution procedure illustrated in Fig. 53 relates to the production process for producing the blended beans by blending the coffee beans A and B and the evaluation process, and the contents relevant to the operation performed in the production process and the evaluation process are defined in operation outline sections C32, C33, C34, and C35 for each operation.

The constraint condition setting unit 1507, for example, is capable of setting the verification rule of "rewriting the contents of the constraint condition of the constraint condition item when the roasting temperature of the coffee beans B is 200°C or higher, and doubling the standby time until the blending operation is started after the roasting of the coffee beans B is ended, in order to perform the blending operation of the coffee beans A and the coffee beans B after the temperature of the coffee beans B decreases to a room temperature by natural cooling" in the operation outline section C34 of "Blending of Coffee Beans A and Coffee Beans B" of the template execution procedure.

It is desirable that the verification rule put in the constraint condition setting unit 1507 is set by determining the contents on the basis of the previous execution performance result and the evaluation performance result.

In this case, for example, in the template execution procedure, as illustrated in Fig. 53, first, a constraint condition of "Time Required for Operation within 300 Seconds" and a constraint condition of "600 Seconds or Longer after Roasting of Coffee Beans B Is Ended" are set in the constraint condition item 26e of the operation outline section C34 of "Blending of Coffee Beans A and Coffee Beans B".

In the production process optimization device 2 according to the second embodiment, as with the first embodiment described above, for example, the plurality of variable parameter values are selected from the search range of the roasting temperature (here, 100°C < Roasting Temperature < 250°C) defined in the operation outline section C33 of "Roasting of Coffee Beans B" by the regression model or the like, on the basis of the execution performance result of the previous execution procedure and the evaluation performance result thereof stored in the database 8.

Fig. 54 and Fig. 55 illustrate an example of the configuration of the execution procedure in which the variable parameter value selected as described above is set. In the execution procedure illustrated in Fig. 54, 100°C is set as the roasting temperature in the variable parameter item 26p of the operation outline section C33 of "Roasting of Coffee Beans B". On the other hand, in the execution procedure illustrated in Fig. 55, 250°C is set as the roasting temperature in the variable parameter item 26p of the operation outline section C33 of "Roasting of Coffee Beans B".

In this case, in the execution procedure illustrated in Fig. 54, the constraint condition setting unit 1507 does not satisfy the condition of the verification rule of "rewriting the contents of the constraint condition of the constraint condition item when the roasting temperature of the coffee beans B is 200°C or higher", and thus, keeps the constraint condition defined in the template execution procedure.

On the other hand, in the case of the execution procedure illustrated in Fig. 55, the constraint condition setting unit 1507 satisfies the condition of the verification rule of "rewriting the contents of the constraint condition of the constraint condition item when the roasting temperature of the coffee beans B is 200°C or higher", and thus, rewrites the contents of the constraint condition to a constraint condition of ""1200 Seconds or Longer" after Roasting of Coffee Beans B Is Ended" in accordance with the verification rule.

In the configuration described above, as with the first embodiment, in the production process optimization method according to the second embodiment, the execution procedure of the production process for producing the blended beans and the evaluation process thereof, the execution schedule that is the data indicating when each execution subject collaboratively performs each operation in the execution procedure, and the execution instruction information for instructing the execution subject in the execution environment 100 to execute each corresponding operation in accordance with the execution schedule are generated by the production process optimization processing.

Accordingly, in the production process optimization method according to the second embodiment, the same effects as those in the first embodiment can be obtained. In addition, in the production process optimization method according to the second embodiment, in accordance with the variable parameter value set in the execution procedure, by setting the verification rule of rewriting the contents of the constraint condition to the contents of the constraint condition practical for the execution environment 100, it is possible to allow the execution subject to execute the practical execution procedure, and thus, it is possible to obtain the optimum production condition with a large gain by the minimum number of times of the experiment execution.

### (3) Production Process Optimization Method according to Third Embodiment

Next, a production process optimization method according to a third embodiment will be described. In the production process optimization method according to the third embodiment, when the template execution procedure is generated, and the constraint condition that is not in the starting point execution procedure is in the previous execution performance result and the evaluation performance result or a correction history of the constraint condition is in the previous execution performance result and the evaluation performance result, the template execution procedure is generated in which the constraint condition of the starting point execution procedure is added or corrected. Note that, other configurations are the same as those of the first embodiment described above, and thus, here, the description thereof will be omitted.

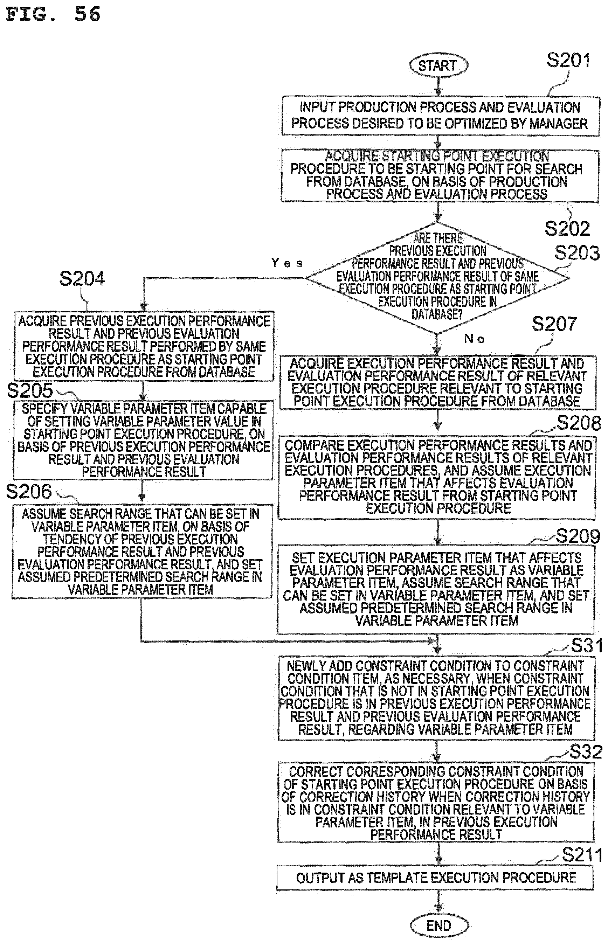

Fig. 56 is a flowchart illustrating a template execution procedure generation processing procedure of the production process optimization method according to the third embodiment. In this case, since step S201 to step S210 are the same as those of Fig. 27 in the first embodiment described above, the description thereof will be omitted. In the third embodiment, in step S206 or step S210, the predetermined search range is set in the variable parameter item, and then, the process proceeds to step S31.

In step S31, the template execution procedure generation unit 15 according to the third embodiment determines whether the constraint condition that is not in the starting point execution procedure is in the previous execution performance result and the previous evaluation performance result, and when the constraint condition that is not in the starting point execution procedure is in the previous execution performance result and the previous evaluation performance result, newly adds the constraint condition that is in the previous execution performance result and the previous evaluation performance result but is not in the starting point execution procedure to the constraint condition item, as necessary.

Here, when the constraint condition that is not in the starting point execution procedure is in the previous execution performance result and the previous evaluation performance result, for example, the constraint condition is newly added to the constraint condition item by the determination of the manager, as necessary, but the invention is not limited thereto. For example, when the constraint condition that is not in the starting point execution procedure is in the previous execution performance result and the previous evaluation performance result, the constraint condition that is in the previous execution performance result and the previous evaluation performance result but is not in the starting point execution procedure may be newly added to the constraint condition item as it is.

In step S32, the template execution procedure generation unit 15 according to the third embodiment determines whether the correction history of the constraint condition is in the previous execution performance result and the previous evaluation performance result, and when the correction history of the constraint condition is in the previous execution performance result and the previous evaluation performance result, performs the same correction as the correction history with respect to the constraint condition of the starting point execution procedure, on the basis of the correction history of the constraint condition of the previous execution performance result and the previous evaluation performance result.

In the third embodiment, the template execution procedure to which the same constraint condition as the constraint condition of the previous execution performance result and the previous evaluation performance result is added, and the template execution procedure including the constraint condition corrected as with the correction history of the constraint condition of the previous execution performance result and the previous evaluation performance result are generated (step S211).

In the configuration described above, as with the first embodiment, in the production process optimization method according to the third embodiment, the execution procedure of the production process for producing the blended beans and the evaluation process thereof, the execution schedule that is the data indicating when each execution subject collaboratively performs each operation in the execution procedure, and the execution instruction information for instructing the execution subject in the execution environment 100 to execute each corresponding operation in accordance with the execution schedule are generated by the production process optimization processing.

As described above, in the production process optimization method according to the third embodiment, the same effects as those in the first embodiment can be obtained, and the template execution procedure including the constraint condition more practical for the execution environment 100 reflecting the previous experimental rule can be generated by matching the constraint condition of the previous execution performance result and the previous evaluation performance result.

In the third embodiment, step S32 is performed subsequent to step S31, but the invention is not limited thereto, and for example, on the contrary, step S31 may be performed subsequent to step S32, only step S31 may be performed, or only step S32 may be performed.

### (4) Production Process Optimization Method according to Fourth Embodiment

Next, a production process optimization method according to a fourth embodiment will be described. In the production process optimization method according to the fourth embodiment, when the production process optimization device 2 generates the execution schedule and the execution instruction information, it is checked whether the production process and the evaluation process can be executed by each execution subject in the execution environment 100 by an execution availability simulation, in accordance with the execution schedule and the execution instruction information before being presented to each execution subject in the execution environment 100.

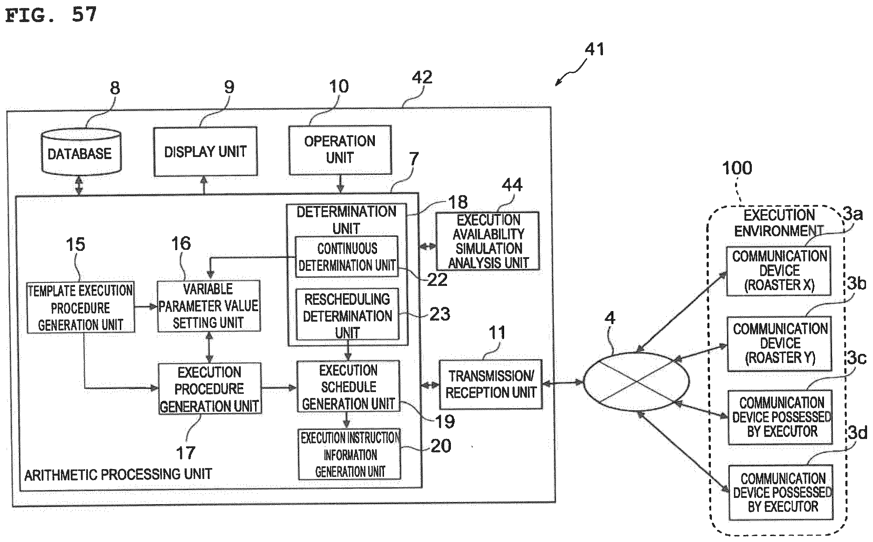

Fig. 57 is a block diagram illustrating the configuration of a production process optimization system 41 according to the fourth embodiment. The production process optimization system 41 illustrated in Fig. 57 is different from the production process optimization system 1 according to the first embodiment described above in that an execution availability simulation analysis unit 44 is provided. Note that, other configurations are the same as those of the first embodiment described above, and thus, here, the description thereof will be omitted.

When each execution subject in the execution environment 100 executes the operation of the execution procedure in accordance with the execution schedule and the execution instruction information, each execution subject executes the operation, in a situation of satisfying various constraints of the actual execution environment 100. Therefore, a production process optimization device 42 according to the third embodiment generates the execution schedule and the execution instruction information, and the execution availability simulation analysis unit 44 verifies whether each execution subject is capable of executing the execution procedure by the virtual execution of the execution availability simulation, in the current situation of each execution subject in the execution environment 100, in accordance with the execution schedule and the execution instruction information before being presented to each execution subject in the execution environment 100.

In a case where the execution subject is a robot arm, the execution schedule and the execution instruction information are presented to the robot arm such that the robot arm is operated by a predetermined trajectory, but when the robot arm is operated by the predetermined trajectory in accordance with the execution instruction information, it is considered that the robot arm is installed in an environment where the robot arm collides with an obstacle.

In a case where the execution subject is a three-dimensional cutting and processing machine, the execution schedule and the execution instruction information are presented to the robot arm such that a cutting unit of the three-dimensional cutting and processing machine is operated by the predetermined trajectory, but when the cutting unit is operated by the predetermined trajectory in accordance with the execution instruction information, it is considered that the cutting unit is not actually sufficiently movable in accordance with the execution instruction information, and the cutting processing is not performed in accordance with the execution instruction information, due to the specification (when improving a cutting accuracy, it is suggested that a movable speed of the cutting unit is constrained), the aging degradation, or the like of the three-dimensional cutting and processing machine.

As described above, the production process optimization device 42 acquires an execution environment constraint condition indicating a constraint condition relevant to an environmental state of the execution environment 100, such as the fact that there is a constraint condition when the execution subject in the execution environment 100 executes the operation of the execution procedure, due to reasons existing in the real world such as the current situation of the robot arm or the specification of the three-dimensional cutting and processing machine, a mutual relationship between the execution subjects, and the like, and stores the execution environment constraint condition in the database 8.

In a case where the execution schedule and the execution instruction information are generated, the execution availability simulation analysis unit 44 acquires the execution environment constraint condition indicating that there is a constraint when each execution subject executes the operation in the execution environment 100 from the database 8, and virtually executes the execution schedule and the execution instruction information by reflecting the execution environment constraint condition.

The execution availability simulation analysis unit 44 executes such an execution availability simulation, and for example, when the robot arm is operated in a movable range indicated by the execution instruction information, is capable of obtaining a simulation result that the robot arm collides with the obstacle from the current state of the robot arm specified on the basis of the execution environment constraint condition. In a case where such a simulation result is obtained, the execution availability simulation analysis unit 44 analyzes the simulation result, and analyzes whether there are the execution schedule and the execution instruction information that satisfy the execution environment constraint condition such that each execution subject is capable of executing the operation of the execution procedure.

For example, the execution availability simulation analysis unit 44 performs analysis in which since the movable range of the robot arm is constrained in the current execution instruction information, it is not possible to execute a predetermined operation, but in a case where the robot arm is movable in a sequence different from a movable sequence of the robot arm that is indicated by the current execution instruction information, the same operation can also be executed in the constrained movable range, as a result. In a case where such an analysis result is obtained, the execution availability simulation analysis unit 44 regenerates the execution schedule or the execution instruction information reflecting a solving method for changing the movable sequence of the robot arm.

The execution availability simulation analysis unit 44 performs analysis in which since the movable range of the robot arm is constrained in the current execution instruction information, it is not possible to execute the predetermined operation, but in the case of a certain time zone, the obstacle constraining the movable range of the robot arm is moved, and thus, the robot arm can be executed by the operation according to the execution instruction information. In a case where such an analysis result is obtained, the execution availability simulation analysis unit 44 regenerates the execution schedule or the execution instruction information reflecting a solving method for changing a movable time of the robot arm.

The execution schedule generation unit 19 and the execution instruction information generation unit 20 generate the execution schedule and the execution instruction information in which the execution subject in the current state of the execution environment 100 is also capable of executing the execution procedure, on the basis of the analysis result from the execution availability simulation analysis unit 44. Accordingly, the production process optimization device 42 presents the regenerated execution schedule and execution instruction information to each corresponding execution subject in the execution environment 100, and enables each execution subject to execute the execution procedure in accordance with the execution schedule and the execution instruction information.

In the case of obtaining an analysis result in the execution availability simulation analysis unit 44 in which it is not possible to allow a predetermined execution subject to execute the operation of the execution procedure by the execution environment constraint condition, the production process optimization device 42 executes error response processing described below.

As the error response processing, for example (representatively), there are four processing pieces of (i) to (iv) described below, and predetermined processing among four processing pieces is set in advance in the production process optimization device 42, and thus, the corresponding processing may be executed in accordance with the setting, and inexecutable information indicating the inexecutability and the cause of the inexecutability may be notified to the manager through the display unit 9.
(i) The inexecutability is ignored, and the execution schedule and the execution instruction information in the current state in which it is inexecutable are transmitted to the corresponding execution subject in the execution environment 100.
(ii) The entire production process optimization processing that is currently performed in the production process optimization device 42 is ended.
(iii) The execution procedure in which an analysis result that it is inexecutable is obtained is skipped (the skipping indicates continuing the subsequent processing relevant to the remaining execution procedures excluding the execution procedure in which the analysis result that it is inexecutable is obtained, among the plurality of execution procedures), and the execution schedule and the execution instruction are regenerated and transmitted to the corresponding execution subject in the execution environment 100.
(iv) The execution schedule and the execution instruction information in the current state are discarded, the list itself of the execution procedures is newly regenerated, and a new execution schedule and a new execution instruction are generated from the list of the execution procedures.

In a case where the inexecutable information is notified to the manager through the display unit 9, for example, the production process optimization device 42 is capable of urging the manager to resolve the factor of the inexecutability in the inexecutable information.

When the execution schedule and the execution instruction information are transmitted to the corresponding communication device 3a or the like from the transmission/reception unit 11 through the network 4, in accordance with (i), (iii), or (iv) described above, the production process optimization device 42 is capable of allowing the execution subject to execute the execution procedure in accordance with the execution schedule and the execution instruction information. Accordingly, in a case where the execution result and the evaluation result are received from the execution subject in the execution environment 100, as necessary, the production process optimization device 42 is capable of regenerating the new execution schedule and the new execution instruction information reflecting the execution result and the evaluation result, and in this case, presents the regenerated execution schedule and execution instruction information to the execution subject.

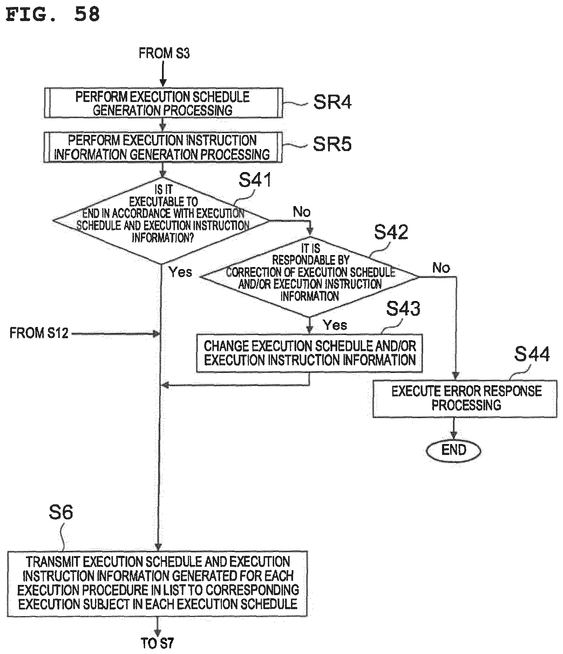

Next, the production process optimization method according to the fourth embodiment described above will be described by using a flowchart. Here, Fig. 58 is a flowchart illustrating characteristic steps of a production process optimization processing procedure according to the third embodiment by diverting a production process optimization processing procedure according to the first embodiment illustrated in Fig. 17A. In Fig. 58, the same subroutine SR1, subroutine SR2, step S3, and the like as those in the production process optimization processing procedure according to the first embodiment illustrated in Fig. 17A are omitted, and only characteristic step S41 to step S44 in the third embodiment are extracted.

The production process optimization device 42 according to the fourth embodiment starts the production process optimization processing procedure from the start step as illustrated in Fig. 17A, and in a case where the processing from subroutine SR1 to subroutine SR5 is performed, proceeds to step S41. In step S41, the execution availability simulation analysis unit 44 determines whether the execution subject is capable of executing the operation of the execution procedure to the end in accordance with the execution schedule and the execution instruction information by executing the execution availability simulation, in the execution environment 100 with the execution environment constraint condition.

In a case where a simulation result that the execution subject is not capable of executing the operation of the execution procedure to the end in accordance with the execution schedule and the execution instruction information is obtained (No), in the next step S42, the execution availability simulation analysis unit 44 analyzes the execution environment constraint condition, and determines whether it is respondable by a change in any one or both of the execution schedule and the execution instruction information.

In step S42, in a case where the execution availability simulation analysis unit 44 determines that the execution environment constraint condition is respondable by a changed in the execution schedule and/or the execution instruction information (Yes), in the next step S43, the production process optimization device 42 allows the execution schedule generation unit 19 or the execution instruction information generation unit 20 to perform the execution schedule generation processing such that the execution schedule is changed, or to perform the execution instruction information generation processing such that the execution instruction information is changed.

In the determination of step S42, for example, the simulation result of the execution availability simulation may be notified to the manager through the display unit 9, and thus, the manager may determine whether it is resolvable by a change in the execution schedule and/or the execution instruction information. Accordingly, the manager may consider the solution, and the execution schedule and/or the execution instruction information may be changed by the manager.

Next, in step S6, the production process optimization device 42 transmits the execution schedule and the execution instruction information to the corresponding execution subject in each execution schedule.

On the other hand, in step S41, in a case where a simulation result that the execution subject is capable of executing the operation of the execution procedure to the end in accordance with the execution schedule and the execution instruction information is obtained (Yes), the execution availability simulation analysis unit 44 proceeds to step S6 described above. In step S42, in a case where the execution availability simulation analysis unit 44 determines that it is not respondable by a change in the execution schedule and the execution instruction information (No), in the next step S44, the error response processing described above is executed, and the production process optimization processing procedure described above is ended.

As a modification example of the error response processing described above, in a case where the execution availability simulation analysis unit 44 determines that it is unsolvable by a change in the execution instruction information, the execution availability simulation analysis unit 44 may generate the inexecutable information indicating that it is inexecutable to the corresponding execution subject, and may transmit the inexecutable information to the corresponding execution subject.

When the inexecutable information is obtained, the execution availability simulation analysis unit 44 may first determine whether the inexecutability can be solved only by a change in the execution schedule, and then, may determine whether the inexecutability can be solved only by a change in the execution instruction information. On the contrary, first, it may be determined whether the inexecutability can be solved only by a change in the execution instruction information, and then, it may be determined whether the inexecutability can be solved only by a change in the execution schedule. In a case where the inexecutability can be solved only by a change in the execution schedule or in a case where the inexecutability can be solved only by a change in the execution instruction information, it is desirable to change the execution schedule or the execution instruction information, respectively.

In step S42, in a case where the execution availability simulation analysis unit 44 determines that it is solvable only by a change in the execution schedule (Yes), in the next step S43, the production process optimization device 42 allows the execution schedule generation unit 19 to perform the execution schedule generation processing such that the execution schedule is changed.

On the other hand, in step S42, in a case where it is determined that it is unsolvable only by a change in the execution schedule (No), in the next step S44, the execution availability simulation analysis unit 44 determines whether it is solvable by a change in the execution instruction information.

In step S44, in a case where the execution availability simulation analysis unit 44 determines that it is solvable by a change in the execution instruction information (Yes), in the next step S45, the production process optimization device 42 allows the execution instruction information generation unit 20 to perform the execution instruction information generation processing such that the execution instruction is changed.

In a case where information such as the fact that the execution is not available by a certain specific variable parameter value or a combination of a plurality of variable parameter values is obtained by the verification of the execution availability simulation analysis unit 44 described above, the information may be stored in the database 8, and may be newly reflected on the constraint condition item of the template execution procedure (for example, a condition that is inexecutable in a certain execution environment is defined as the constraint condition). As described above, in a case where it is assumed that the execution subject is not capable of executing the operation in the execution environment in accordance with the execution procedure by the execution availability simulation, the production process optimization device 42 may newly generate the execution procedure reflecting the execution environment constraint condition. In this case, the production process optimization device 42 regenerates the execution schedule and the execution instruction information in accordance with the newly generated execution procedure.

In the configuration described above, as with the first embodiment, in the production process optimization method according to the fourth embodiment, the execution procedure of the production process for producing the blended beans and the evaluation process thereof, the execution schedule that is the data indicating when each execution subject collaboratively performs each operation in the execution procedure, and the execution instruction information for instructing the execution subject in the execution environment 100 to execute each corresponding operation in accordance with the execution schedule are generated by the production process optimization processing.

As described above, in the production process optimization method according to the fourth embodiment, the same effects as those in the first embodiment can be obtained, and the execution schedule and the execution instruction information practical for the execution environment 100 can be generated.

In the production process optimization method according to the fourth embodiment, various errors (a condition in which the execution procedure is inexecutable) that are not defined in the constraint condition of the execution procedure are acquired in advance, the execution subject in the execution environment 100 can be prevented from executing a useless execution procedure, and thus, the production process can be efficiently optimized.

### (5) Production Process Optimization Method according to Fifth Embodiment

Next, a production process optimization method according to a fifth embodiment will be described. In the production process optimization method according to the fifth embodiment, when the variable parameter item set in the template execution procedure is selected, an item selection simulation is executed, and the variable parameter item is selected from the starting point execution procedure, on the basis of the result of the item selection simulation.

In the production process optimization method according to the fifth embodiment, when the variable parameter value is selected from the search range set in the variable parameter item of the template execution procedure, a variable parameter value selection simulation is executed, and the variable parameter value is selected from the search range in each variable parameter item, on the basis of the result of the variable parameter value selection simulation.

In the production process optimization method according to the fifth embodiment, when the execution procedure for the execution in the execution environment 100 is optimized by the sequential optimization, the type of variable parameter item is narrowed in advance by the item selection simulation or the range of the variable parameter value is constrained in advance by using a simulation analysis result obtained on the basis of the variable parameter value selection simulation, before the sequential optimization is performed by actually executing the execution procedure in the execution environment 100, and thus, it is possible to reduce the number of times of condition consideration in the execution environment 100.

When the execution procedure that is executed in a certain execution environment 100 is optimized, a huge number of experiments are required to perform the search by using simple sequential optimization in a case where there are a large number of variables that can be an optimization target or in a case where there is a categorical variable (for example, the type of reagent to be added) in the variables. In general, most of the production processes that are executed in the execution environment 100 require a large temporal and financial cost to execute one execution procedure, and thus, it is not realistic for the execution subject to perform the execution procedure a huge number of times in order for the optimization, in accordance with the execution procedure generated by the production process optimization system 1.

In the production process optimization method according to the fifth embodiment, by using the simulation analysis result, the execution subject actually executes the execution procedure in the execution environment 100, and the range of the variable parameter item or the variable parameter value to be optimized is constrained. The narrowing is performed by the production process optimization method, and thus, the number of times of the execution procedure actually performed in the execution environment 100 can be drastically reduced.

In particular, in the case of a system such as a bioplant in which the execution environment 100 is a complicated system and there are many hidden variables, a prediction accuracy of the behavior of the system by the simulation is degraded (+ it is also difficult to align the dimension), and thus, there are many cases where a prediction value of the optimum condition by the simulation is not directly coincident with the actual optimum production condition, but a relationship in the responsiveness of an objective function with respect to the type of variable of the condition to be changed may be common between the simulation and the real world to some extents. In such a case, even when the execution environment 100 is the complicated system, an experiment condition (the variable parameter item or the variable parameter value) globally fluctuates by the simulation, and thus, for example, a variable for changing the value of the objective function and a variable not for changing the value can be broadly classified, or the responsiveness of the objective variable with respect to the explanatory variable can be broadly grasped. With reference to such information, a search range (the variable parameter item or the variable parameter value) is set among the variables predicted to contribute to the value of the objective function, or the shape of the regression model to be used is determined, and thus, it is possible to efficiently search for the variable parameter item or the variable parameter value.

In particular, the production process optimization method according to the fifth embodiment will be described by using a bioplant with many hidden variables as an example. More specifically, for example, a bioplant is considered in which there are the coli bacteria X to which a plasmid for the expression of the enzyme P for producing a certain compound A is introduced, and the coli bacteria X are cultured in the culture medium M to derive the expression of the enzyme P, and thus, the compound (hereinafter, also referred to as an objective substance) A is produced, and hereinafter, the item selection simulation and the variable parameter value selection simulation will be sequentially described.

### (5-1) Template Execution Procedure Generation Processing Using Item Selection Simulation

First, in the production process optimization method, the case of generating the template execution procedure in which several optimum types of raw materials composing the culture medium M are specified as the variable parameter item by using the item selection simulation such that the yield [g/L] of the objective substance A is maximized will be described.

For example, in a case where there are several hundred types of candidate raw materials composing the culture medium M, in order to obtain the culture medium M that is capable of maximizing the yield of the objective substance A, there is a great burden to allow the execution subject to actually execute the execution procedure in the execution environment 100, and to specify which is the optimum raw material to be selected or which is the optimum raw material to be combined among the several hundred types of candidate raw materials, or which is the optimum composition for mixing each raw material, from the obtained execution result and evaluation result.

Therefore, in the fifth embodiment, when the template execution procedure is generated, the item selection simulation is executed, and thus, the narrowing of the raw materials composing the culture medium M among the several hundred types of candidate raw materials composing the culture medium M, which is capable of maximizing the yield of the objective substance A, is performed in advance, and the number of times of the execution procedure actually performed in the execution environment 100 is drastically reduced.

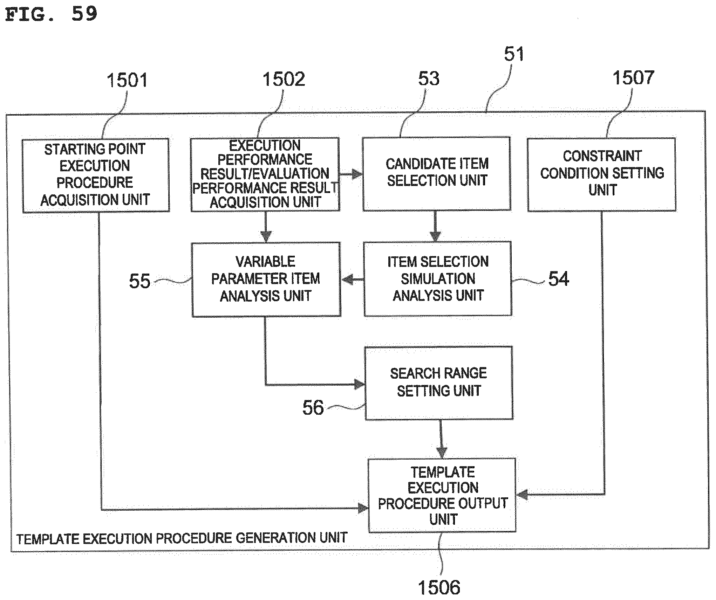

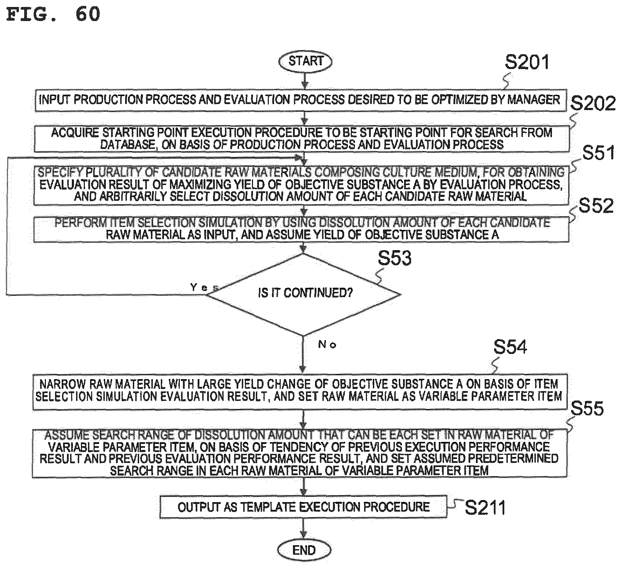

Fig. 59 is a block diagram illustrating the configuration of a template execution procedure generation unit 51 according to the fifth embodiment. In addition, Fig. 60 is a flowchart illustrating the template execution procedure generation processing procedure according to the fifth embodiment. As illustrated in Fig. 59, the template execution procedure generation unit 51 includes a starting point execution procedure acquisition unit 1501, an execution performance result/evaluation performance result acquisition unit 1502, a candidate item selection unit 53, an item selection simulation analysis unit 54, a variable parameter item analysis unit 55, a search range setting unit 56, a template execution procedure output unit 1506, and a constraint condition setting unit 1507.

As illustrated in Fig. 60, the production process optimization device 2 starts the template execution procedure generation processing procedure from the start step, and in the next step S201, the production process and the evaluation process desired to be optimized are input by the manager.

In the next step S202, the starting point execution procedure acquisition unit 1501 acquires the starting point execution procedure to be the starting point for the search from the database 8, on the basis of the production process and the evaluation process. In step S51, the candidate item selection unit 53 specifies a plurality of candidate raw materials (also referred to as a candidate variable parameter item) composing the culture medium M, for obtaining an evaluation result of maximizing the yield of the objective substance A by the evaluation process, and arbitrarily selects a predetermined dissolution amount as an item selection parameter value of each candidate raw material. Note that, the number of candidate variable parameter items (candidate raw materials) is not particularly limited, but here, two or more (a plurality of) candidate variable parameter items such as nine or ten candidate variable parameter items are set, and one candidate variable parameter item may be set. In addition, the candidate variable parameter item (the candidate raw material) may be specified by the manager, or may be specified on the basis of an item selection simulation evaluation result described below, which was performed in the past, and a specifying method thereof is not particularly limited.

In a case where m candidate raw materials composing the culture medium M are specified from a metabolic network, for example, the execution performance result/evaluation performance result acquisition unit 1502 acquires the previous execution performance result and the previous evaluation performance result relevant to the culture medium M from the database 8, and for example, m candidate raw materials may be specified among the raw materials of the culture medium M used in the execution performance result and the like, or m candidate raw materials may be specified from a predetermined region of the metabolic network, with a focus on the raw materials of the culture medium M used in the execution performance result and the like.

The metabolic network is data indicating the route of a chained chemical reaction that occurs in cells in the biochemistry, and in this case, is stored in advance in the database 8. The candidate item selection unit 53 acquires the metabolic network from the database 8, and selects m candidate raw materials composing the culture medium M on the basis of the metabolic network.

In step S52, the item selection simulation analysis unit 54 performs the item selection simulation by using the dissolution amount of m candidate raw materials specified in step S51 as input, and obtains an output result assuming the level of yield of the objective substance A as the item selection simulation evaluation result.

Here, as an example, the raw material composing the culture medium M is described, and thus, the item selection parameter value is the dissolution amount, but in other production processes, for example, it is obvious that the item selection parameter value is a concentration, a mixed amount, a temperature, a time, and the like.

As the item selection simulation, for example, a cell simulation such as an E-cell, a biochemical reaction system that is operated in a non-ideal condition such as molecular congestion or localization, or the like is used by being modelized in advance, and thus, for example, when the coli bacteria X are assumed to be cultured in the culture medium M containing m selected raw materials to derive the expression of the enzyme P, it is possible to virtually simulate how much the yield of the objective substance A is predicted.

For the item selection simulation evaluation result, the item selection simulation analysis unit 54, for example, sets a time when a predetermined time T has elapsed from the start of the item selection simulation as a start time T, and on the basis of an item selection simulation result, calculates an integral value of the yield of the objective substance A from the start time T to a time (T + Δt), as the item selection simulation evaluation result.

In the next step S53, the candidate item selection unit 53 newly selects the item selection parameter value (that is, the dissolution amount of the candidate raw material) of the candidate variable parameter item (the candidate raw material), and determines whether to continue the processing of performing the item selection simulation. Note that, whether to continuously execute the item selection simulation, for example, may be determined by the manager, whether the item selection simulation is executed a predetermined number of times may be determined by the candidate item selection unit 53, or whether a desired item selection simulation evaluation result (here, a raw material with a large yield change of the objective substance A) is obtained may be determined by the candidate item selection unit 53.

In step S53, when the candidate item selection unit 53 determines to continue the item selection simulation (Yes), that is, when the manager determines to continue the item selection simulation, the candidate item selection unit 53 determines that the item selection simulation is not executed a predetermined number of times, or the candidate item selection unit 53 determines that a desired item selection simulation evaluation result group is not obtained, the candidate item selection unit 53 returns again to step S51, selects a new dissolution amount (item selection parameter value) for the candidate raw material, and in the next step S52, performs the item selection simulation by using the newly selected dissolution amount as input.

As described above, a plurality of candidate raw materials with different dissolution amounts are generated, the item selection simulation is performed for each candidate raw material, and the integral value of the yield of the objective substance A is calculated as the item selection simulation evaluation result for each combination of the candidate raw materials with different dissolution amounts.

On the other hand, in step S53, when the candidate item selection unit 53 determines not to continue the item selection simulation (No), that is, when the manager determines not to continue the item selection simulation, the candidate item selection unit 53 determines that the item selection simulation is executed a predetermined number of times, or the candidate item selection unit 53 determines that the desired item selection simulation evaluation result group is obtained, the candidate item selection unit 53 proceeds to the next step S54.

In step S54, the variable parameter item analysis unit 55 is capable of specifying whether the candidate raw material is a raw material that greatly affects a yield change or a yield increase from the yield change (or the yield increase) of the objective substance A, which occurs due to a change in the dissolution amount of the candidate raw material, on the basis of the obtained item selection simulation evaluation result, and on the basis thereof, constrains the raw material to be the variable parameter item.

In the next step S55, the search range setting unit 56 assumes each search range of the dissolution amount that can be set, for each raw material of the variable parameter item narrowed in step S54, which affects the yield change (or the yield increase) of the objective substance A, on the basis of the tendency of the previous actual execution performance result and the previous evaluation performance result, and sets the assumed predetermined search range in each raw material of the variable parameter item.

In step S211, the template execution procedure output unit 1506 sets the search range obtained by search range setting unit in the starting point execution procedure, generates the template execution procedure on the basis of the starting point execution procedure, outputs the template execution procedure, and ends the template execution procedure generation processing procedure described above.

In the embodiment described above, a case has been described in which the type and the number (m) of candidate raw materials are fixed, each dissolution amount of the candidate raw materials of the fixed combination is changed, and the item selection simulation is repeatedly performed, and for example, it is obvious that the item selection simulation may be repeatedly performed by suitably changing the type and the number of candidate raw materials to be combined.

### (5-2) Template Execution Procedure Generation Processing Using Variable Parameter Value Selection Simulation

Next, the variable parameter value selection simulation will be described. In this case, in the production process optimization method, when the variable parameter value is selected from the search range of the template execution procedure, the range of each dissolution amount (mol/L) in 1 (L) that maximizes the yield [g/L] of the objective substance A for a plurality of (for example, m1) raw materials composing the culture medium M is narrowed by using the variable parameter value selection simulation, and on the basis thereof, the variable parameter value is selected.

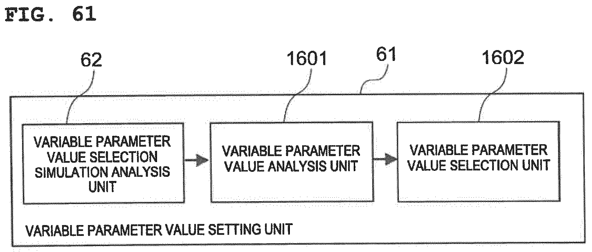

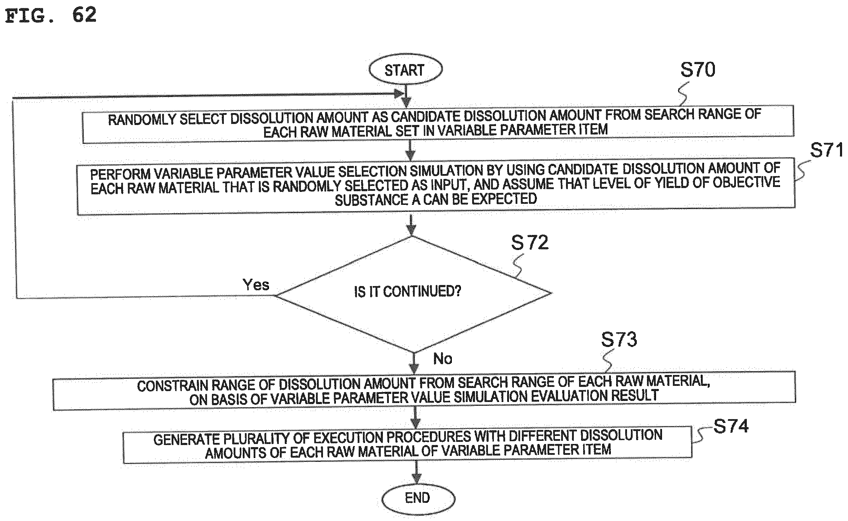

Fig. 61 is a block diagram illustrating the configuration of a variable parameter value setting unit 61 according to the fifth embodiment. In addition, Fig. 62 is a flowchart illustrating a variable parameter value setting processing procedure according to the fifth embodiment. As illustrated in Fig. 61, the variable parameter value setting unit 61 includes a variable parameter value selection simulation analysis unit 62, a variable parameter value analysis unit 1601, and a variable parameter value selection unit 1602.

As illustrated in Fig. 62, the variable parameter value selection simulation analysis unit 62 starts the variable parameter value setting processing procedure from the start step, and in the next step S70, randomly selects each predetermined dissolution amount (for example, a dissolution amount L₁ of a raw material m₁, a dissolution amount L₂ of a raw material m₂, a dissolution amount L₃ of a raw material m₃, ..., in 1 (L)) as a candidate variable parameter value (hereinafter, also referred to as a candidate dissolution amount) from the search range of each raw material set in the variable parameter item.

In the next step S71, the variable parameter value selection simulation analysis unit 62 performs the variable parameter value selection simulation by using the candidate dissolution amount of each raw material randomly selected in step S70 as input, obtains information relevant to how the yield of the objective substance A is distributed when inputting different concentrations of the culture media, as a variable parameter value selection simulation evaluation result.

In the variable parameter value selection simulation, for example, a biochemical reaction system that is operated in a non-ideal condition such as molecular congestion or localization, or the like is modelized in advance by using a cell simulation such as an E-cell, and for example, when the coli bacteria X are assumed to be cultured in the culture medium M containing m raw materials at a predetermined dissolution amount (for example, the dissolution amount L₁ of the raw material m₁, the dissolution amount L₂ of the raw material m₂, the dissolution amount L₃ of the raw material m₃, ... or the like) to derive the expression of the enzyme P, it is possible to virtually simulate how much the yield of the objective substance A can be predicted.

For the variable parameter value selection simulation evaluation result, the variable parameter value selection simulation analysis unit 62, for example, sets a time when the predetermined time T has elapsed from the start of the variable parameter value selection simulation as the start time T, and on the basis of the item selection simulation result, calculates the integral value of the yield of the objective substance A from the start time T to the time (T + Δt), as the variable parameter value selection simulation evaluation result.

In the next step S72, the variable parameter value selection simulation analysis unit 62 newly selects the candidate dissolution amount from the search range, and determines whether to continue the processing of performing the variable parameter value selection simulation. In step S72, when the variable parameter value selection simulation analysis unit 62 determines to continue the variable parameter value selection simulation (Yes), that is, when the manager determines to continue the variable parameter value selection simulation, the variable parameter value selection simulation analysis unit 62 determines that the variable parameter value selection simulation is not executed a predetermined number of times, or the variable parameter value selection simulation analysis unit 62 determines that a desired variable parameter value selection simulation evaluation result group is not obtained, the variable parameter value selection simulation analysis unit 62 returns to step S70 described above, randomly selects the candidate dissolution amount from the search range, and performs again the variable parameter value selection simulation.

As described above, a plurality of combination candidates with different dissolution amounts of m raw materials are generated, the variable parameter value selection simulation is performed for each combination candidate, and the integral value of the yield of the objective substance A is calculated as the variable parameter value selection simulation evaluation result for each combination candidate.

On the other hand, in step S72, when the variable parameter value selection simulation analysis unit 62 determines not to continue the variable parameter value selection simulation (No), that is, when the manager determines not to continue the variable parameter value selection simulation, the variable parameter value selection simulation analysis unit 62 determines that the variable parameter value selection simulation is executed a predetermined number of times, or the variable parameter value selection simulation analysis unit 62 determines that the desired variable parameter value selection simulation evaluation result group is obtained, the variable parameter value selection simulation analysis unit 62 proceeds to the next step S73.

In step S73, for example, the variable parameter value analysis unit 1601 obtains the distribution tendency of the candidate variable parameter value and the variable parameter value selection simulation evaluation result, on the basis of the variable parameter value selection simulation evaluation result, and constrains the range of the dissolution amount from the search range of each raw material from the distribution tendency. In the next step S74, the variable parameter value selection unit 1602 selects the variable parameter value (the dissolution amount) of each raw material from the range of the variable parameter value constrained on the basis of the distribution tendency of the variable parameter value and the variable parameter value selection simulation evaluation result, generates a plurality of execution procedures with different dissolution amounts of each raw material of the variable parameter item, and ends the variable parameter value setting processing procedure described above.

A method for constraining the range of the variable parameter value from the result of the variable parameter value selection simulation, and for selecting the variable parameter value from the constrained range is not particularly limited, and it is desirable to analyze the variable parameter value selection simulation evaluation result or the like, and to select the variable parameter value in which it is possible to expect that the optimum evaluation result is obtained.

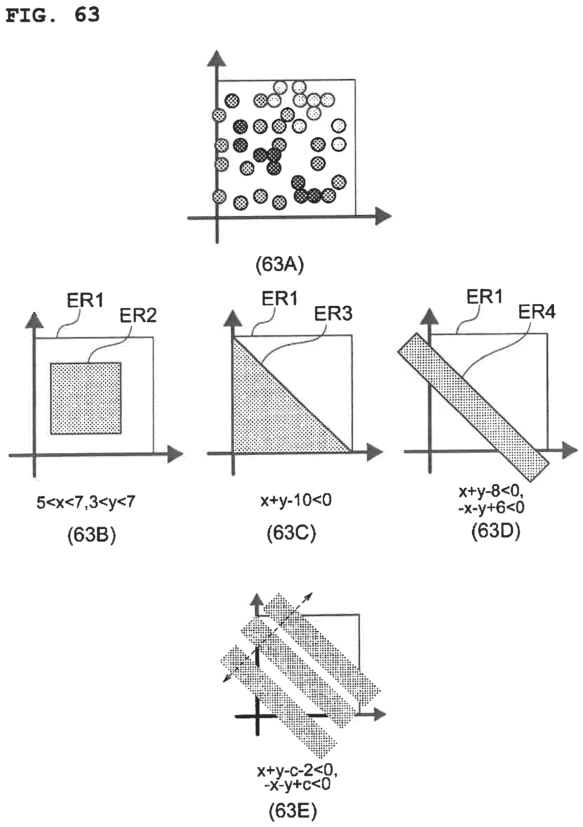

63A in Fig. 63, for example, in order to simplify the description, illustrates a schematic view in which the distribution tendency of the candidate variable parameter value and the variable parameter value selection simulation evaluation result when the variable parameter value selection simulation is performed by changing the candidate variable parameter value (the candidate dissolution amount) for each variable parameter item using two types of variable parameter items (raw materials), and an output result of assuming how much the yield of the objective substance A can be expected is obtained as each variable parameter value selection simulation evaluation result is imaged.

63A in Fig. 63, for example, is an example in which in the variable parameter value selection simulation, a candidate dissolution amount of the first raw material a1 is represented on a horizontal axis, a candidate dissolution amount of the second candidate raw material b1 is represented on a vertical axis, and each obtained variable parameter value selection simulation evaluation result is color-coded. The range of the variable parameter value that is assumed to be the optimum variable parameter value is narrowed from the distribution tendency of the variable parameter value selection simulation evaluation result, and the variable parameter value (the dissolution amount) of each raw material defined in the execution procedure is selected from the narrowed range of the variable parameter value.

Here, the variable parameter value analysis unit 1601, for example, may generate a regression model by setting the candidate dissolution amount of each raw material used in the variable parameter value selection simulation as an explanatory variable and by setting the variable parameter value selection simulation evaluation result as an objective variable, may constrain the range of the optimum dissolution amount of the raw material, on the basis of an analysis result of the regression model, and may select the variable parameter value from the constrained range.

In this case, the variable parameter value analysis unit 1601, for example, may generate the regression model by using the previous execution performance result or the previous execution result (the dissolution amount) stored in the database 8 as the explanatory variable, in addition to setting the candidate dissolution amount of each raw material used in the variable parameter value selection simulation as the explanatory variable, and by setting the evaluation performance result or the evaluation result (the yield) of the execution performance result, or the variable parameter value selection simulation evaluation result as the objective variable, may constrain the range of the optimum dissolution amount of the raw material, on the basis of the analysis result of the regression model, and may select the variable parameter value from the constrained range.

Here, the variable parameter value selection simulation is executed, the range of the variable parameter value (the dissolution amount) of the raw material in which the yield change of the objective substance A increases is constrained, and on the basis thereof, the variable parameter value of the raw material is selected, but the invention is not limited thereto.

As another embodiment, for example, a machine learning model (the regression model) such as a neural network may be learned by using the input and the output of the variable parameter value selection simulation as learning data to obtain a learned regression model that is capable of differentiating the output with the input, an analysis result approximate to the variable parameter value selection simulation may be obtained with the learned regression model, and the range of the optimum variable parameter value may be constrained by a regression model a.

In this case, it is desirable to store such a learned regression model a in advance in the database 8. Accordingly, when constraining each dissolution amount of each raw material in which the yield change of the objective substance A increases, the variable parameter value analysis unit 1601 is capable of constraining the range of the optimum dissolution amount of the raw material by using the learned regression model a without executing the variable parameter value selection simulation.

In the case of using the learned regression model a, the burden of arithmetic processing can be reduced compared to the variable parameter value selection simulation, an analysis result approximate to the variable parameter value selection simulation evaluation result can be obtained in a short time compared to the variable parameter value selection simulation, and the dissolution amount to be the variable parameter value can be efficiently searched by using the simulation.

When learning the regression model a, the machine learning model (the regression model a) may be learned by using not only the input and the output of the variable parameter value selection simulation, but also the execution performance result, the evaluation performance result, and the like stored in the database 8 as the learning data.

As another embodiment, the range of the variable parameter value may be constrained by using a regression model b described below. For example, the learned regression model a for extracting a characteristic hyper parameter value obtained by changing the variable parameter value (the dissolution amount of the raw material) as a feature amount is generated by using the input and the output of the variable parameter value selection simulation as the learning data.

Next, the final regression model b may be generated by setting the previous execution performance result (the raw material of the culture medium M used in the past) or the previous evaluation performance result (the yield of the objective substance A at this time) as the explanatory variable, and by setting the evaluation performance result as the objective variable, with reference to the feature amount such as the hyper parameter value extracted from the learned regression model.

Generating the final regression model b with reference to the feature amount such as the hyper parameter value extracted from the learned regression model a, for example, is as follows.
1. Here, in a regression model f (x/w), a d-dimensional vector x is taken as input. In addition, it is assumed that there are k (an integer of 1 ≤ k) weight variables w.
2. When the regression model of 1 described above performs the regression with respect to data, it is indicated that among k weight variables w, i (an integer of 1 ≤ i ≤ k) weight variables are updated such that the output of the regression model is suitable for the data (for example, the weight of the regression model for approximating the input and the output of the variable parameter value selection simulation is obtained).
3. As a method for transitioning the feature amount of the regression model a obtained in 2 described above to the other regression model b (in the case of transplanting the knowledge of the regression model a learned to approximate the input and the output of the variable parameter value selection simulation into the final regression model b used to actually select the variable parameter value), there are broadly two patterns (1) and (2) described below. For example, in a case where the regression model a and the final regression model b are put in the same function form,
   (1) A part or all of k weight variables of the regression model a after learning is assigned to the corresponding weight variable of the final regression model b.
   (2) One or more relational expressions or inequations such as c (w) = 0 or c (w) > 0, which are established between k weight variables of the regression model a, are extracted (or created by the manager), and similarly, the weight variable w of the final regression model b (during learning) satisfies such a relationship.

In a case where the regression model a and the final regression model b are not in the same function form, it is possible to transition the feature amount of the regression model a to the other regression model b by a method for training the final regression model b to approximate the input and the output of the regression model a.

The variable parameter value analysis unit 1601 is capable of constraining the range of the dissolution amount of the raw material in which the yield change of the objective substance A increases, by using the final regression model obtained as described above.

A simpler example of the case of generating the final regression model b with reference to the feature amount extracted from the learned regression model a described above will be described below by using 63B, 63C, 63D, and 63E in Fig. 63.

63B, 63C, and 63D in Fig. 63, for example, are schematic views in which two raw materials are defined as the variable parameter item, a search range ER1 of each variable parameter value defined in the template execution procedure is imaged, and the feature amount extracted from the learned regression model a by using the variable parameter value selection simulation evaluation result is imaged as regions ER2, ER3, and ER4.

In this case, by explicitly describing the constraint condition (there is no unknown or freedom degree), it is possible to constrain the search range ER1 similar to the regions ER2, ER3 and ER4, which can be extracted as the feature amount.

63E in Fig. 63 is a schematic view in which the search range is not limited to a region that can be explicitly written down as 63D, and one or more unknowns or freedom degrees may be provided. In 63D, the narrowed search range is uniquely specified, but in 63E, the search range itself is characterized by an unknown c. When actually performing the search, for example, the search range characterized by the unknown c is described in the regression model b for generating the variable parameter value for actual execution, and thus, there is an effect of constraining the search range.

### (5-3) Functions and Effects

In the configuration described above, as with the first embodiment, in the production process optimization method according to the fifth embodiment, the execution procedure of the production process and the evaluation process thereof, the execution schedule that is the data indicating when each execution subject collaboratively performs each operation in the execution procedure, and the execution instruction information for instructing the execution subject in the execution environment 100 to execute each corresponding operation in accordance with the execution schedule are generated by the production process optimization processing. Accordingly, in the production process optimization method according to the fifth embodiment, the same effects as those in the first embodiment can be obtained.

In the production process optimization method according to the fifth embodiment, the item selection parameter value (the dissolution amount) of the candidate variable parameter item (the candidate raw material) that can be the variable parameter item assumed to obtain a predetermined evaluation result is selected, the item selection simulation in which the item selection parameter value of the selected candidate raw material is set as input and the evaluation result (the yield change of the objective substance) is set as output is executed by the arithmetic processing, and the variable parameter item is constrained in advance, on the basis of the result of the item selection simulation (the variable parameter item specifying step). Accordingly, in the fifth embodiment, the narrowing of the raw materials composing the culture medium M among several hundred types of candidate raw materials composing the culture medium M, which is capable of maximizing the yield of the objective substance A, can be performed in advance, and thus, the number of times of the execution procedure that is actually performed in the execution environment 100 can be drastically reduced.

In the production process optimization method according to the fifth embodiment, the candidate variable parameter value (the candidate raw material) assumed to obtain the predetermined evaluation result is selected, the variable parameter value selection simulation in which the selected candidate variable parameter value is set as input and the evaluation result (the yield change of the objective substance) is set as output is executed by the arithmetic processing, and the range of the variable parameter value is constrained in advance, on the basis of the result of the variable parameter value selection simulation (the variable parameter value specifying step). Accordingly, in the fifth embodiment, in the raw materials composing the culture medium M, the narrowing of the range of the dissolution amount of the raw material, which is capable of maximizing the yield of the objective substance A, can be performed in advance, and thus, the number of times of the execution procedure that is actually performed in the execution environment 100 can be drastically reduced.

As an example of the variable parameter value specifying step, the learned regression model that is capable of differentiating the output with the input may be generated by using the input and the output of the variable parameter value selection simulation as the learning data, and the range of the variable parameter value may be constrained on the basis of the learned regression model. Accordingly, the analysis result approximate to the variable parameter value selection simulation evaluation result can be obtained in a short time compared to the variable parameter value selection simulation, and the variable parameter value can be efficiently searched.

As an example of the variable parameter value specifying step, the learned regression model for extracting the feature amount according to a change in the candidate variable parameter value may be generated by using the input and the output of the variable parameter value selection simulation as the learning data, the final regression model using the feature amount extracted from the learned regression model may be generated, and the range of the variable parameter value may be constrained on the basis of the final regression model.

As described above, in the production process optimization method, the variable parameter item of the template execution procedure or the variable parameter value of the execution procedure can be constrained to some extents by the item selection simulation and the variable parameter value selection simulation, and thus, the number of times of the execution procedure that is actually performed in the execution environment 100 can be drastically reduced.

In particular, in a case where there are many hidden variables and the execution environment 100 is a complicated system, as with a bioplant, by using the item selection simulation and the variable parameter value selection simulation, it is effective to reduce the number of times for the execution subject to search for the optimum production condition by the execution procedure in the execution environment 100.

In the production process optimization method according to the fifth embodiment, the production process for producing the compound A by culturing the coli bacteria X in the culture medium M to derive the expression of the enzyme P has been described as an example, and it is obvious that the production process optimization method can be applied to various production processes such as the production process for producing the blended beans by blending a plurality of types of coffee beans, the production process for producing the casting of the ferric alloy by mixing a plurality of types of raw materials, and the production process for producing the predetermined cooking by using a plurality of foodstuffs.

### (6) Other Embodiments

This embodiment has been described above, but the embodiment described above is to facilitate the understanding of the invention, and is not intended to limitedly interpret the invention. The invention can be modified and improved without departing from the gist thereof, and the invention also includes equivalents thereof.

A production process optimization method may be obtained by suitably combining the contents of the first embodiment to the fifth embodiment described above. For example, the production process optimization method according to the fifth embodiment in which the item selection simulation or the like is executed may be combined with the production process optimization method according to the second embodiment in which the constraint condition is rewritten on the basis of the verification rule, or the production process optimization method according to the fourth embodiment in which the execution availability simulation is executed may be combined with the production process optimization method according to the third embodiment in which the constraint condition of the template execution procedure is added/corrected on the basis of the addition/correction and the like of the constraint condition of the previous execution performance result.

In the first embodiment to the fifth embodiment described above, the execution subject in which the variable parameter value set in the execution procedure may not be coincident with the variable parameter value that is obtained by the execution result and is executed by the execution subject may be assumed from the previous execution performance result executed by the execution subject.

In the production process for producing the blended beans by blending two types of coffee beans, a case is considered in which the roasting time is set to "700 sec" in the operation of "Roasting of Coffee Beans B" defined in the execution procedure and the operation of "Roasting of Coffee Beans B" is executed by the roaster X.

In this case, when the previous execution performance result that the roaster X is not capable of ensuring the roasting time of 650 sec or longer is obtained, in the production process optimization method, it can be assumed that "Roasting Time 700 sec" instructed to the roaster X in the execution procedure may not be coincident with the variable parameter value (for example, "Roasting Time 650 sec") that is obtained by the execution result and is executed by the roaster X even in the case of allowing the roaster X to execute the execution procedure.

In this case, in the production process optimization method, it is desirable to generate the execution procedure corrected to a roasting time that is executable by the roaster X.

In the first embodiment to the fifth embodiment described above, a correction step of calculating a deviation between the variable parameter value set in the execution procedure and the actually measured value of the variable parameter value executed by the execution subject in accordance with the execution procedure, and of changing the variable parameter value of the execution procedure subsequent to the next to correct the deviation may be included.

In the production process for producing the blended beans by blending two types of coffee beans, when the variable parameter value of "Roasting Time 700 sec" is set in the execution procedure, and the actually measured value at the time of being executed by the roaster X that is the execution subject in accordance with the execution procedure is "Roasting Time 650 sec", a deviation (50 sec) between the variable parameter value and the measured value is calculated. In the production process optimization method, the contents of the execution instruction information with respect to the execution subject subsequent to the next are changed such that the deviation (50 sec) is corrected with respect to the execution subject obtaining the measured value.

A presenting step of presenting information obtained by comparing the distribution of the deviation with the distribution of the evaluation result to the execution subject may be provided.

### (7) Search in Relevant Execution Procedure

In the embodiment described above, the execution performance result and the evaluation performance result of the relevant execution procedure are searched and acquired from the database 8, on the basis of the terms defined in the operation item 26a in the starting point execution procedure, but the invention is not limited thereto. For example, the execution performance result and the evaluation performance result of the relevant execution procedure may be searched and acquired from the database 8, on the basis of the terms defined not only in the operation item 26a in the starting point execution procedure, but also in any one of the input item 26b, the output item 26c, the execution parameter item 26d, and the constraint condition item 26e.

In addition to a search according to simple term identity, for example, the matters relevant to a type, property, specifying, a component, a composition, a breed variety, a gene, homology, a production condition, and the like may be set in advance with respect to (i) a technical treatment/processing method such as a processing method, a heating method, a cooling method, a molding method, a compressing method, or a sorting method, (ii) the processing target of the operation such as the coffee beans, the raw material, or the foodstuff, (iii) the product obtained by the operation such as the coffee beans (roasted), the blended beans, the objective substance, the molding product, or the cooking, and (iv) the evaluation method such as the qualitative quantitative evaluation, the appearance evaluation, the moldability evaluation, or the quality evaluation, defined in at least the operation item 26a, the input item 26b, the output item 26c, the execution parameter item 26d, and the constraint condition item 26e in the starting point execution procedure, and on the basis of the matters set in advance, the execution performance result and the evaluation performance result of the relevant execution procedure may be searched and acquired from the database 8.

In a case where the starting point execution procedure of "Blending of Coffee Beans A and B" illustrated in Fig. 2 is used as an example, (i) an execution performance result and an evaluation performance result of coffee beans similar in a component or a type to the coffee beans A and B defined in the input item 26b of the starting point execution procedure, coffee beans similar in a strain and a breed variety or a gene to the coffee beans A and B, or the like, (ii) an execution performance result and an evaluation performance result similar in a result to qualitative quantitative evaluation defined in the output item 26c in the evaluation process of the starting point execution procedure, (iii) an execution performance result and an evaluation performance result of the same roasting method as the roasting method defined in the execution parameter item 26d of the starting point execution procedure, an approximate roasting temperature, a roasting time, an approximate evaluation index, or the like, and (iv) an execution performance result and an evaluation performance result in a predetermined range such as the time constraint or the execution condition constraint defined in the constraint condition item 26e of the starting point execution procedure may be searched and acquired from the database 8 as the execution performance result and the evaluation performance result of the relevant execution procedure.

A search method of the execution performance result and the evaluation performance result of the relevant execution procedure has been described by using the starting point execution procedure of "Blending of Coffee Beans A and B" illustrated in Fig. 2 as an example, and as another example, an example of the search method of the execution performance result and the evaluation performance result of the relevant execution procedure when the starting point execution procedure relevant to "Cell Culture" is generated will be also described.

In this case, an execution performance result and an evaluation performance result including the same terms as the culture medium, the composition, the gene, the strain, a culture method, a culture procedure, a culture temperature, a culture time, and the like, defined in the operation item 26a, the input item 26b, the output item 26c, the execution parameter item 26d, or the constraint condition item 26e of the starting point execution procedure may be searched and acquired from the database 8 as the execution performance result and the evaluation performance result of the relevant execution procedure, and in addition to the search according to the simple term identity, such matters and matters relevant to the composition, the breed variety, the gene, the homology, the production condition, or the like may be set in advance, and on the basis of the matters set in advance, the execution performance result and the evaluation performance result of the relevant execution procedure may be searched from the database 8.

For example, (i) an execution performance result and an evaluation performance result of a raw material homologous with a composition raw material of the culture medium defined in the input item 26b of the starting point execution procedure, a raw material with an approximate strain, an approximate raw material in a metabolic network, or the like, (ii) an execution performance result and an evaluation performance result of a substance obtained by modifying the objective substance defined in the output item 26c of the starting point execution procedure, a homologous substance, a substance with an approximate sequence, codon similarity, an approximate substance in a metabolic network, or the like, or the same or approximate execution performance result and the same or approximate evaluation performance in terms of evaluation result, purity, or physical property (toughness, tensile strength, elasticity, and the like) in addition to the same evaluation method in the evaluation process, (iii) an execution performance result and an evaluation performance result of a roasting method approximate to the culture procedure defined in the execution parameter item 26d of the starting point execution procedure, an approximate roasting temperature, a roasting time, an approximate evaluation index, or the like, and (iv) an execution performance result and an evaluation performance result in a predetermined range and the time constraint or the execution condition constraint and the like, in the culture defined in the constraint condition item 26e of the starting point execution procedure may be searched and acquired from the database 8 as the execution performance result and the evaluation performance result of the relevant execution procedure.

### Reference Sign List

1: Production process optimization system
2: Production process optimization device
3a, 3b, 3c, 3d: Communication device
8: Database
11: Transmission/reception unit (execution result acquisition unit, evaluation result acquisition unit)
15: Template execution procedure generation unit
16: Variable parameter value setting unit
17: Execution procedure generation unit
19: Execution schedule generation unit
20: Execution instruction information generation unit
1501: Starting point execution procedure acquisition unit
1504: Variable parameter item specifying unit
t: Execution procedure abstract syntax tree (syntax tree)
t': Extended abstract syntax tree (syntax tree)

## Claims

1. A production process optimization method for optimizing a production process,
wherein a configuration in which a production process optimization device and one or more communication devices are connected to a network is implemented,
the production process optimization device includes an arithmetic processing unit, a database, a display unit, an operation unit, and a transmission/reception unit,
the arithmetic processing unit has a microcomputer configuration including a central processing unit (CPU), a random access memory (RAM), a read only memory (ROM), and the database, the display unit, the operation unit, and the transmission/reception unit are connected to the arithmetic processing unit,
the method comprising the following steps conducted by the configuration:
an acquisition step of acquiring a starting point execution procedure by selecting the execution procedure among a plurality of execution procedures stored in the database, in which one or a plurality of operations performed by the production process are defined and contents relevant to the operation are defined;
a variable parameter item specifying step of specifying one or a plurality of variable parameter items capable of setting a variable parameter value in the starting point execution procedure;
an execution procedure generation step of generating an execution procedure by setting the variable parameter value in the variable parameter item specified in the variable parameter item specifying step on the basis of a previous execution performance result and an evaluation performance result thereof;
an execution result acquisition step of acquiring an execution result when an execution subject executes actual execution according to the execution procedure in an execution environment;
an evaluation result acquisition step of acquiring an evaluation result with respect to the execution result; and
a storage step of recording the execution procedure, the variable parameter value, the execution result, and the evaluation result in association with each other.

2. The production process optimization method according to claim 1,
wherein in the variable parameter item specifying step,
one or the plurality of variable parameter items capable of setting the variable parameter value in the starting point execution procedure are specified on the basis of the execution performance result when the execution subject executes the execution according to a previous execution procedure that is the same as or relevant to the starting point execution procedure in the execution environment.

3. The production process optimization method according to claim 1 or 2, further comprising
a template execution procedure generation step of generating a template execution procedure in which a search range indicating a range of the variable parameter value settable in the variable parameter item is set,
wherein in the execution procedure generation step,
the variable parameter value is selected from the search range defined by the template execution procedure, and the selected variable parameter value is set in the variable parameter item to generate the execution procedure.

4. The production process optimization method according to any one of claims 1 to 3,
wherein in the execution procedure generation step,
the variable parameter value is determined on the basis of the execution performance result when the execution subject executes the execution according to the previous execution procedure that is the same as or relevant to the starting point execution procedure in the execution environment.

5. The production process optimization method according to any one of claims 1 to 4,
wherein in the execution procedure generation step,
a regression model is generated on the basis of the execution performance result, and the variable parameter value set in the variable parameter item is determined by using the regression model.

6. The production process optimization method according to any one of claims 1 to 5,
wherein in the execution procedure generation step,
the variable parameter value is set in order to obtain a desired evaluation result.

7. The production process optimization method according to any one of claims 1 to 6,
wherein the evaluation result is at least one or more types of a cost, a yield, quality, and an execution time of the execution procedure, a variation thereof, and a deviation from given target value.

8. The production process optimization method according to any one of claims 1 to 7, further comprising
an execution schedule generation step of generating an execution schedule indicating how each corresponding execution subject collaboratively executes the plurality of operations defined by the execution procedure in the execution environment in time sequence.

9. The production process optimization method according to claim 8,
wherein in the execution schedule generation step,
a syntax tree that is generated, the syntax tree is a data structure in which the execution procedure is subjected to syntax analysis, and at least dependency between the respective operations defined by the execution procedure, a processing target of the operation, a product to be obtained by the operation, and a constraint condition relevant to the operation may be analyzed, and the execution schedule is generated on the basis of the syntax tree.

10. The production process optimization method according to claim 8 or 9, further comprising
an execution environment information acquisition step of acquiring execution environment information indicating the execution subject actually performing the operation defined by the execution procedure in the execution environment,
wherein in the execution schedule generation step,
the execution schedule is generated on the basis of the execution procedure and the execution environment information.

11. The production process optimization method according to any one of claims 8 to 10,
wherein in the execution schedule generation step,
the execution schedule considering the constraint condition set in a constraint condition item of the execution procedure is generated.

12. The production process optimization method according to any one of claims 1 to 11, further comprising
an execution instruction information generation step of generating execution instruction information for instructing the execution subject in the execution environment to execute the operation defined by the execution procedure.

13. The production process optimization method according to claim 12,
wherein in the execution instruction information generation step,
the constraint condition set in the constraint condition item of the execution procedure is extracted to be included in the execution instruction information.

14. The production process optimization method according to any one of claims 1 to 13,
wherein in the execution procedure generation step,
the constraint condition when the execution subject performs the execution procedure in the execution environment is set in the constraint condition item of the execution procedure.

15. The production process optimization method according to claim 14,
wherein in the execution procedure generation step,
a time constraint relevant to the operation is set as the constraint condition in the constraint condition item.

16. The production process optimization method according to claim 15,
wherein in the execution procedure generation step,
at least any one of the time constraint for defining the execution time taken for the operation by the execution subject and the time constraint for setting a temporal constraint between the operations is included as the time constraint.

17. The production process optimization method according to claim 14,
wherein in the execution procedure generation step,
a concurrency constraint for defining whether the plurality of operations can be performed in parallel is set as the constraint condition in the constraint condition item.

18. The production process optimization method according to claim 14,
wherein in the execution procedure generation step,
an execution condition constraint for defining that it is necessary to perform the operation in a predetermined condition range is set as the constraint condition in the constraint condition item.

19. The production process optimization method according to claim 14, further comprising:
a verification rule setting step of setting a verification rule for rewriting the constraint condition in accordance with the set variable parameter value; and
a rewriting step of rewriting the constraint condition of the constraint condition item in the execution procedure when it is necessary to correct the constraint condition in accordance with the variable parameter value on the basis of the verification rule.

20. The production process optimization method according to claim 19,
wherein in the verification rule setting step,
the verification rule is set on the basis of the execution performance result and the evaluation performance result.

21. The production process optimization method according to claim 14,
wherein in the execution procedure generation step,
when the constraint condition that is not in the starting point execution procedure is in the execution performance result, the constraint condition is set in the constraint condition item.

22. The production process optimization method according to claim 14,
wherein in the execution procedure generation step,
when there is a correction history of the constraint condition in the execution performance result, the corresponding constraint condition of the execution procedure is corrected on the basis of the correction history.

23. The production process optimization method according to any one of claims 1 to 7, further comprising
an execution availability simulation step of acquiring an execution environment constraint condition indicating a constraint condition relevant to an environmental state of the execution environment to assume whether the execution subject is capable of executing the operation in accordance with the execution procedure in the execution environment even when there is the execution environment constraint condition by an execution availability simulation.

24. The production process optimization method according to claim 23,
wherein in the execution procedure generation step,
when it is assumed that the execution subject is not capable of executing the operation in accordance with the execution procedure in the execution environment by the execution availability simulation, the execution procedure reflecting the execution environment constraint condition is generated.

25. The production process optimization method according to claim 23, further comprising
an execution schedule generation step of generating an execution schedule indicating how each corresponding execution subject collaboratively executes the plurality of operations defined by the execution procedure in the execution environment in time sequence,
wherein in the execution availability simulation step,
when it is assumed that the execution subject is not capable of executing the operation in accordance with the execution procedure in the execution environment by the execution availability simulation, the execution schedule reflecting the execution environment constraint condition is generated.

26. The production process optimization method according to claim 23, further comprising
an execution instruction information generation step of generating execution instruction information for instructing the execution subject in the execution environment to execute the operation defined by the execution procedure,
wherein in the execution availability simulation step,
when it is assumed that the execution subject is not capable of executing the operation in accordance with the execution procedure in the execution environment by the execution availability simulation, the execution instruction information reflecting the execution environment constraint condition is generated.

27. The production process optimization method according to any one of claims 1 to 26,
wherein in the variable parameter item specifying step,
an item selection simulation of selecting an item selection parameter value in a candidate variable parameter item that can be the variable parameter item assumed to obtain a predetermined evaluation result, and of setting the selected item selection parameter value as input and the evaluation result as output is executed by arithmetic processing, and the variable parameter item is selected on the basis of a result of the item selection simulation.

28. The production process optimization method according to any one of claims 1 to 27,
wherein in the execution procedure generation step,
a variable parameter value selection simulation of selecting a candidate variable parameter value that can be the variable parameter value assumed to obtain a predetermined evaluation result, and of setting the selected candidate variable parameter value as input and the evaluation result as output is executed by arithmetic processing, and a range of the variable parameter value is constrained on the basis of a result of the variable parameter value selection simulation.

29. The production process optimization method according to claim 28,
wherein a learned regression model that is capable of differentiating the output with the input is generated by using the input and the output of the variable parameter value selection simulation as learning data, and the range of the variable parameter value is constrained on the basis of the regression model.

30. The production process optimization method according to claim 28,
wherein a learned regression model for extracting a feature amount according to a change in the candidate variable parameter value is generated by using the input and the output of the variable parameter value selection simulation as learning data, and the range of the variable parameter value is constrained on the basis of the regression model using the feature amount extracted from the learned regression model.

31. The production process optimization method according to any one of claims 1 to 30,
wherein the execution subject in which the variable parameter value set in the execution procedure may not be coincident with the variable parameter value that is obtained by the execution result and is executed by the execution subject is assumed from the previous execution performance result executed by the execution subject.

32. The production process optimization method according to any one of claims 1 to 30, further comprising
a step of calculating a deviation between the variable parameter value set in the execution procedure and an actually measured value of the variable parameter value executed by the execution subject in accordance with the execution procedure, and of changing contents of the execution instruction information for instructing the execution subject to execute the operation subsequent to the next such that the deviation is corrected with respect to the execution subject.

33. The production process optimization method according to any one of claims 1 to 30, further comprising
a presenting step of calculating a deviation between the variable parameter value set in the execution procedure and an actually measured value of the variable parameter value executed by the execution subject in accordance with the execution procedure, and of presenting information obtained by comparing a distribution of the deviation with a distribution of the evaluation result to the execution subject.

34. A production process optimization system optimizing a production process,
wherein the production process optimization system has a configuration in which a production process optimization device and one or more communication devices are connected to a network,
the production process optimization device included in the production process optimization system includes an arithmetic processing unit, a database, a display unit, an operation unit, and a transmission/reception unit,
the arithmetic processing unit has a microcomputer configuration including a central processing unit (CPU), a random access memory (RAM), a read only memory (ROM), and
the database, the display unit, the operation unit, and the transmission/reception unit are connected to the arithmetic processing unit,
the system comprising:
a starting point execution procedure acquisition unit for acquiring a starting point execution procedure by selecting the execution procedure among a plurality of execution procedures stored in the database, in which one or a plurality of operations performed by the production process are defined and contents relevant to the operation are defined;
a variable parameter item specifying unit for specifying one or a plurality of variable parameter items capable of setting a variable parameter value in the starting point execution procedure;
an execution procedure generation unit for generating an execution procedure by setting the variable parameter value in the variable parameter item specified by the variable parameter item specifying unit on the basis of a previous execution performance result and an evaluation performance result thereof;
an execution result acquisition unit for acquiring an execution result when an execution subject executes execution according to the execution procedure in an execution environment;
an evaluation result acquisition unit for acquiring an evaluation result with respect to the execution result; and
a database for recording the execution procedure, the variable parameter value, the execution result, and the evaluation result in association with each other.

## Patentansprüche

1. Verfahren zur Optimierung eines Produktionsprozesses,
wobei eine Konfiguration implementiert wird, in der eine Vorrichtung zur Optimierung eines Produktionsprozesses und eine oder mehrere Kommunikationsvorrichtungen mit einem Netzwerk verbunden sind,
die Vorrichtung zur Optimierung eines Produktionsprozesses eine Recheneinheit, eine Datenbank, eine Anzeigeeinheit, eine Bedieneinheit und eine Sende-/Empfangseinheit umfasst,
die Recheneinheit eine Mikrocomputerkonfiguration aufweist, die eine Zentraleinheit (CPU), einen Arbeitsspeicher (RAM), einen Nur-Lese-Speicher (ROM) umfasst, und die Datenbank, die Anzeigeeinheit, die Bedieneinheit und die Sende-/Empfangseinheit mit der Recheneinheit verbunden sind,
wobei das Verfahren die folgenden Schritte umfasst, die von der Konfiguration ausgeführt werden:
einen Erfassungsschritt zum Erfassen eines Startpunkt-Ausführungsverfahrens durch Auswahl des Ausführungsverfahrens aus einer Vielzahl von in der Datenbank gespeicherten Ausführungsverfahren, in denen ein oder mehrere vom Produktionsprozess durchgeführte Arbeitsschritte definiert sind und für den Arbeitsschritt relevante Inhalte festgelegt sind;
einen Schritt zur Festlegung variabler Parameterelemente, bei dem ein oder mehrere variable Parameterelemente festgelegt werden, für die im Startpunkt-Ausführungsverfahren ein variabler Parameterwert eingestellt werden kann;
einen Schritt zur Erzeugung einer Ausführungsverfahren, bei dem eine Ausführungsverfahren erzeugt wird, indem der Wert des variablen Parameters in dem im Schritt zur Festlegung der variablen Parameterelemente festgelegten variablen Parameterelement auf der Grundlage eines früheren Ausführungsleistungsergebnisses und eines daraus abgeleiteten Bewertungsergebnisses festgelegt wird;
einen Schritt zum Erfassen eines Ausführungsergebnisses, bei dem eine Ausführungsperson ein Ausführungsergebnis erfasst, wenn sie eine tatsächliche Ausführung gemäß der Ausführungsverfahren in einer Ausführungsumgebung durchführt;
einen Schritt zum Erfassen eines Bewertungsergebnisses, bei dem ein Bewertungsergebnis in Bezug auf das Ausführungsergebnis erfasst wird; und
einen Speicherschritt zum Aufzeichnen der Ausführungsverfahren, des Wertes des variablen Parameters, des Ausführungsergebnisses und des Bewertungsergebnisses in gegenseitiger Zuordnung.

2. Verfahren zur Optimierung von Produktionsprozessen gemäß Anspruch 1,
wobei im Schritt zur Festlegung der variablen Parameterelemente,
ein oder mehrere der variablen Parameterelemente, mit denen der Wert des variablen Parameters im Startpunkt-Ausführungsverfahren festgelegt werden kann, auf der Grundlage des Ausführungsleistungsergebnisses festgelegt werden, wenn die Ausführungsperson die Ausführung gemäß einem vorherigen Ausführungsverfahren durchführt, das mit dem Startpunkt-Ausführungsverfahren in der Ausführungsumgebung identisch oder für dieses relevant ist.

3. Verfahren zur Optimierung von Produktionsprozessen gemäß Anspruch 1 oder 2, das ferner umfasst:
einen Schritt zur Erzeugung einer Vorlagen-Ausführungsverfahren, bei dem eine Vorlagen-Ausführungsverfahren erzeugt wird, in der ein Suchbereich festgelegt ist, der einen Bereich des in dem variablen Parameterelement einstellbaren Werts des variablen Parameters angibt,
wobei in dem Schritt zur Erzeugung der Ausführungsverfahren
der Wert des variablen Parameters aus dem durch die Vorlagen-Ausführungsverfahren definierten Suchbereich ausgewählt wird und der ausgewählte Wert des variablen Parameters in dem variablen Parameterelement festgelegt wird, um das Ausführungsverfahren zu erzeugen.

4. Verfahren zur Optimierung eines Produktionsprozesses gemäß einem der Ansprüche 1 bis 3,
wobei im Schritt zur Erzeugung des Ausführungsverfahrens
der Wert des variablen Parameters auf der Grundlage des Ausführungsleistungsergebnisses ermittelt wird, wenn die Ausführungsperson die Ausführung gemäß dem vorherigen Ausführungsverfahren durchführt, die mit der Startpunkt-Ausführungsverfahren in der Ausführungsumgebung identisch oder relevant ist.

5. Verfahren zur Optimierung eines Produktionsprozesses gemäß einem der Ansprüche 1 bis 4,
wobei im Schritt zur Erzeugung des Ausführungsverfahrens,
auf der Grundlage des Ergebnisses der Ausführungsleistung ein Regressionsmodell erstellt wird, und der im Feld "Variablenparameter" festgelegte Wert mithilfe des Regressionsmodells bestimmt wird.

6. Verfahren zur Optimierung eines Produktionsprozesses gemäß einem der Ansprüche 1 bis 5,
wobei im Schritt zur Erstellung des Ausführungsverfahrens
der Wert des variablen Parameters so festgelegt wird, dass ein gewünschtes Auswertungsergebnis erzielt wird.

7. Verfahren zur Optimierung eines Produktionsprozesses gemäß einem der Ansprüche 1 bis 6,
wobei das Auswertungsergebnis mindestens eine oder mehrere der folgenden Größen umfasst: Kosten, Ausbeute, Qualität und Ausführungszeit des Ausführungsverfahrens, eine Variation davon sowie eine Abweichung von einem vorgegebenen Zielwert.

8. Verfahren zur Optimierung eines Produktionsprozesses gemäß einem der Ansprüche 1 bis 7, das ferner umfasst
einen Schritt zur Erstellung eines Ausführungsplans, bei dem ein Ausführungsplan erstellt wird, der angibt, wie jede entsprechende Ausführungsperson die durch das Ausführungsverfahren definierten mehreren Vorgänge in der Ausführungsumgebung in zeitlicher Abfolge in Zusammenarbeit ausführt.

9. Verfahren zur Optimierung eines Produktionsprozesses gemäß Anspruch 8,
wobei im Schritt zur Erstellung eines Ausführungsplans,
ein Syntaxbaum erzeugt wird, wobei der Syntaxbaum eine Datenstruktur ist, in der die Ausführungsverfahren einer Syntaxanalyse unterzogen werden und zumindest die Abhängigkeiten zwischen den jeweiligen, durch das Ausführungsverfahren definierten Operationen, einem Verarbeitungsziel der Operation, einem durch die Operation zu erzeugenden Produkt und einer für die Operation relevanten Einschränkungsbedingung analysiert werden können, und wobei der Ausführungsplan auf der Grundlage des Syntaxbaums erzeugt wird.

10. Verfahren zur Optimierung eines Produktionsprozesses nach Anspruch 8 oder 9, das ferner umfasst:
einen Schritt zum Erfassen von Ausführungsumgebungsinformationen, bei dem Ausführungsumgebungsinformationen erfasst werden, die die Ausführungsperson angeben, die die durch die Ausführungsverfahren definierte Operation in der Ausführungsumgebung tatsächlich ausführt,
wobei im Schritt zur Erstellung des Ausführungsplans
der Ausführungsplan auf der Grundlage des Ausführungsverfahrens und der Informationen zur Ausführungsumgebung erstellt wird.

11. Verfahren zur Optimierung eines Produktionsprozesses gemäß einem der Ansprüche 8 bis 10,
wobei im Schritt zur Erstellung des Ausführungsplans
der Ausführungsplan unter Berücksichtigung der in einem Einschränkungsbedingungselement des Ausführungsverfahrens festgelegten Einschränkungsbedingung erstellt wird.

12. Verfahren zur Optimierung eines Produktionsprozesses gemäß einem der Ansprüche 1 bis 11, das ferner umfasst:
einen Schritt zur Erzeugung von Ausführungsanweisungsinformationen, bei dem Ausführungsanweisungsinformationen erzeugt werden, um die Ausführungsperson in der Ausführungsumgebung anzuweisen, den durch die Ausführungsverfahren definierten Vorgang auszuführen.

13. Verfahren zur Optimierung des Produktionsprozesses nach Anspruch 12,
wobei im Schritt zur Erzeugung der Ausführungsanweisungsinformationen
die im Element "Einschränkungsbedingung" des Ausführungsverfahrens festgelegte Einschränkungsbedingung extrahiert wird, um in die Ausführungsanweisungsinformationen aufgenommen zu werden.

14. Verfahren zur Optimierung eines Produktionsprozesses gemäß einem der Ansprüche 1 bis 13,
wobei im Schritt zur Erzeugung des Ausführungsverfahrens
die Einschränkungsbedingung, unter der die Ausführungsperson das Ausführungsverfahren in der Ausführungsumgebung ausführt, im Einschränkungsbedingungsfeld des Ausführungsverfahrens festgelegt wird.

15. Verfahren zur Optimierung eines Produktionsprozesses gemäß Anspruch 14,
wobei im Schritt zur Erzeugung des Ausführungsverfahrens
eine für den Vorgang relevante Zeitbeschränkung als Einschränkungsbedingung im Einschränkungsbedingungsfeld festgelegt wird.

16. Verfahren zur Optimierung eines Produktionsprozesses gemäß Anspruch 15,
wobei im Schritt zur Erzeugung des Ausführungsverfahrens
mindestens eine der folgenden Zeitbeschränkungen als Zeitbeschränkung einbezogen wird: die Zeitbeschränkung zur Definition der Ausführungszeit, die die Ausführungsperson für den Vorgang benötigt, oder die Zeitbeschränkung zur Festlegung einer zeitlichen Beschränkung zwischen den Vorgängen.

17. Verfahren zur Optimierung eines Produktionsprozesses gemäß Anspruch 14,
wobei im Schritt zur Erzeugung des Ausführungsverfahrens
eine Parallelitätsbeschränkung, die definiert, ob die mehreren Vorgänge parallel ausgeführt werden können, als Beschränkungsbedingung im Beschränkungsbedingungselement festgelegt wird.

18. Verfahren zur Optimierung eines Produktionsprozesses gemäß Anspruch 14,
wobei im Schritt zur Erzeugung des Ausführungsverfahrens
als Einschränkungsbedingung im Feld "Einschränkungsbedingung" eine Ausführungsbedingung festgelegt wird, die definiert, dass die Operation innerhalb eines vorgegebenen Bedingungsbereichs ausgeführt werden muss.

19. Verfahren zur Optimierung eines Produktionsprozesses nach Anspruch 14, das ferner umfasst:
einen Schritt zum Festlegen einer Überprüfungsregel, bei dem eine Überprüfungsregel zum Umschreiben der Einschränkungsbedingung entsprechend dem festgelegten Wert des variablen Parameters festgelegt wird; und
einen Umschreibungsschritt zum Umschreiben der Einschränkungsbedingung des Einschränkungsbedingungselements im Ausführungsverfahren, wenn es erforderlich ist, die Einschränkungsbedingung gemäß dem Wert des variablen Parameters auf der Grundlage der Überprüfungsregel zu korrigieren.

20. Verfahren zur Optimierung eines Produktionsprozesses gemäß Anspruch 19,
wobei im Schritt zum Festlegen der Überprüfungsregel
die Überprüfungsregel auf der Grundlage des Ausführungsleistungsergebnisses und des Bewertungsleistungsergebnisses festgelegt wird.

21. Verfahren zur Optimierung eines Produktionsprozesses gemäß Anspruch 14,
wobei im Schritt zur Erzeugung des Ausführungsverfahrens,
wenn die Einschränkungsbedingung, die nicht in der Startpunkt-Ausführungsverfahren enthalten ist, im Ausführungsleistungsergebnis enthalten ist, die Einschränkungsbedingung im Einschränkungsbedingungselement festgelegt wird.

22. Verfahren zur Optimierung eines Produktionsprozesses nach gemäß Anspruch 14,
wobei im Schritt zur Erzeugung des Ausführungsverfahrens,
wenn im Ergebnis der Ausführungsleistung ein Korrekturverlauf der Einschränkungsbedingung vorliegt, die entsprechende Einschränkungsbedingung des Ausführungsverfahrens auf der Grundlage des Korrekturverlaufs korrigiert wird.

23. Verfahren zur Optimierung eines Produktionsprozesses gemäß einem der Ansprüche 1 bis 7, das ferner umfasst
ein Simulationsschritt zur Ausführbarkeitsprüfung, bei dem eine Einschränkungsbedingung der Ausführungsumgebung erfasst wird, die eine für den Zustand der Ausführungsumgebung relevante Einschränkungsbedingung angibt, um durch eine Simulationsprüfung der Ausführbarkeitsprüfung zu ermitteln, ob die Ausführungsperson in der Lage ist, den Vorgang gemäß dem Ausführungsverfahren in der Ausführungsumgebung auszuführen, selbst wenn die Einschränkungsbedingung der Ausführungsumgebung durch eine Ausführungsverfügbarkeitssimulation vorliegt.

24. Verfahren zur Optimierung eines Produktionsprozesses gemäß Anspruch 23,
wobei im Schritt zur Erzeugung des Ausführungsverfahrens,
wenn durch die Simulation der Ausführbarkeitsverfügbarkeit angenommen wird, dass die Ausführungsperson nicht in der Lage ist, den Vorgang gemäß dem Ausführungsverfahren in der Ausführungsumgebung auszuführen, das Ausführungsverfahren erzeugt wird, das die Einschränkungsbedingung der Ausführungsumgebung widerspiegelt.

25. Verfahren zur Optimierung eines Produktionsprozesses gemäß Anspruch 23, das ferner umfasst
einen Schritt zur Erzeugung eines Ausführungsplans, bei dem ein Ausführungsplan erzeugt wird, der angibt, wie jede entsprechende Ausführungsperson die durch die Ausführungsverfahren definierte Vielzahl von Operationen in der Ausführungsumgebung in zeitlicher Abfolge in Zusammenarbeit ausführt,
wobei im Schritt der Ausführbarkeitsverfügbarkeitssimulation
wenn angenommen wird, dass die Ausführungsperson nicht in der Lage ist, den Vorgang gemäß der Ausführungsverfahren in der Ausführungsumgebung durch die Simulation der Ausführungsverfügbarkeit auszuführen, der Ausführungsplan erzeugt wird, der die Einschränkungsbedingungen der Ausführungsumgebung widerspiegelt.

26. Verfahren zur Optimierung eines Produktionsprozesses gemäß Anspruch 23, das ferner umfasst
einen Schritt zur Erzeugung von Ausführungsanweisungsinformationen, bei dem Ausführungsanweisungen erzeugt werden, die die Ausführungsperson in der Ausführungsumgebung anweisen, den durch das Ausführungsverfahren definierten Vorgang auszuführen,
wobei im Schritt der Simulation der Ausführungsverfügbarkeit,
wenn durch die Ausführungsverfügbarkeitssimulation angenommen wird, dass die Ausführungsperson nicht in der Lage ist, den Vorgang gemäß dem Ausführungsverfahren in der Ausführungsumgebung auszuführen, die Ausführungsbefehlsinformationen erzeugt werden, die die Einschränkungsbedingung der Ausführungsumgebung widerspiegeln.

27. Verfahren zur Optimierung eines Produktionsprozesses gemäß einem der Ansprüche 1 bis 26,
wobei im Schritt zur Festlegung des variablen Parameterelements
eine Elementauswahlsimulation durchgeführt wird, bei der aus einer Gruppe von in Frage kommenden variablen Parameterelementen, von denen angenommen wird, dass sie ein vorbestimmtes Bewertungsergebnis liefern, ein Elementauswahlparameterwert ausgewählt und der ausgewählte Elementauswahlparameterwert als Eingabe sowie das Bewertungsergebnis als Ausgabe mittels arithmetischer Verarbeitung festgelegt werden, und das variable Parameterelement auf der Grundlage eines Ergebnisses der Elementauswahlsimulation ausgewählt wird.

28. Verfahren zur Optimierung eines Produktionsprozesses gemäß einem der Ansprüche 1 bis 27,
wobei im Schritt zur Erzeugung des Ausführungsverfahrens
eine Simulation zur Auswahl eines variablen Parameterwerts durchgeführt wird, bei der ein Kandidat für einen variablen Parameterwert ausgewählt wird, der als der variable Parameterwert angenommen werden kann, der zu einem vorgegebenen Bewertungsergebnis führt, und bei der der ausgewählte Kandidat für den variablen Parameterwert als Eingabe und das Bewertungsergebnis als Ausgabe durch arithmetische Verarbeitung festgelegt werden, und ein Bereich des variablen Parameterwerts auf der Grundlage eines Ergebnisses der Simulation zur Auswahl des variablen Parameterwerts eingeschränkt wird.

29. Verfahren zur Optimierung eines Produktionsprozesses nach Anspruch 28,
wobei ein trainiertes Regressionsmodell, das in der Lage ist, die Ausgabe von der Eingabe zu unterscheiden, unter Verwendung der Eingabe und der Ausgabe der Simulation zur Auswahl variabler Parameterwerte als Trainingsdaten erzeugt wird und der Bereich der variablen Parameterwerte auf der Grundlage des Regressionsmodells eingeschränkt wird.

30. Verfahren zur Optimierung eines Produktionsprozesses gemäß Anspruch 28,
wobei ein trainiertes Regressionsmodell zur Extraktion einer Merkmalsgröße entsprechend einer Änderung des Kandidatenwerts für den variablen Parameterwert unter Verwendung der Eingabe und der Ausgabe der Simulation zur Auswahl des variablen Parameterwerts als Trainingsdaten erzeugt wird und der Bereich des variablen Parameterwerts auf der Grundlage des Regressionsmodells unter Verwendung der aus dem trainierten Regressionsmodell extrahierten Merkmalsgröße eingeschränkt wird.

31. Verfahren zur Optimierung eines Produktionsprozesses nach einem der Ansprüche 1 bis 30,
wobei die Ausführungsperson, bei der der im Ausführungsverfahren festgelegte Wert des variablen Parameters möglicherweise nicht mit dem Wert des variablen Parameters übereinstimmt, der durch das Ausführungsergebnis erhalten und von der Ausführungsperson ausgeführt wird, anhand des vorherigen Ausführungsleistungsergebnisses angenommen wird, das von der Ausführungsperson ausgeführt wurde.

32. Verfahren zur Optimierung eines Produktionsprozesses gemäß einem der Ansprüche 1 bis 30, das ferner umfasst
einen Schritt zum Berechnen einer Abweichung zwischen dem im Ausführungsverfahren festgelegten Wert des variablen Parameters und einem tatsächlich gemessenen Wert des variablen Parameters, der von der Ausführungsperson gemäß dem Ausführungsverfahren ausgeführt wurde, sowie zum Ändern des Inhalts der Ausführungsanweisungsinformation, um die Ausführungsperson anzuweisen, den darauffolgenden Vorgang so auszuführen, dass die Abweichung in Bezug auf die Ausführungsperson korrigiert wird.

33. Verfahren zur Optimierung eines Produktionsprozesses gemäß einem der Ansprüche 1 bis 30, das ferner umfasst
einen Darstellungsschritt, bei dem eine Abweichung zwischen dem in dem Ausführungsverfahren festgelegten Wert des variablen Parameters und einem tatsächlich gemessenen Wert des variablen Parameters, der von der Ausführungsperson gemäß dem Ausführungsverfahren ausgeführt wurde, berechnet wird, und bei dem Informationen, die durch den Vergleich einer Verteilung der Abweichung mit einer Verteilung des Auswertungsergebnisses erhalten wurden, der Ausführungsperson präsentiert werden.

34. Ein Produktionsprozess-Optimierungssystem zur Optimierung eines Produktionsprozesses,
wobei das System zur Optimierung eines Produktionsprozesses eine Konfiguration aufweist, bei der eine Vorrichtung zur Optimierung eines Produktionsprozesses und eine oder mehrere Kommunikationsvorrichtungen mit einem Netzwerk verbunden sind,
die in dem Produktionsprozess-Optimierungssystem enthaltene Produktionsprozess-Optimierungsvorrichtung eine Recheneinheit, eine Datenbank, eine Anzeigeeinheit, eine Bedieneinheit sowie eine Sende-/Empfangseinheit umfasst,
die Recheneinheit eine Mikrocomputerkonfiguration aufweist, die eine Zentraleinheit (CPU), einen Arbeitsspeicher (RAM), einen Nur-Lese-Speicher (ROM) umfasst, und
die Datenbank, die Anzeigeeinheit, die Bedieneinheit und die Sende-/Empfangseinheit mit der Recheneinheit verbunden sind,
wobei das System umfasst:
eine Erfassungseinheit für ein Startpunkt-Ausführungsverfahren zum Erfassen eines Startpunkt-Ausführungsverfahrens durch Auswahl der Ausführungsverfahren aus einer Vielzahl von in der Datenbank gespeicherten Ausführungsverfahren, in denen ein oder mehrere vom Produktionsprozess durchgeführte Arbeitsschritte definiert sind und für den Arbeitsschritt relevante Inhalte definiert sind;
eine Einheit zur Festlegung variabler Parameterelemente, die dazu dient, ein oder mehrere variable Parameterelemente festzulegen, mit denen im Startpunkt-Ausführungsverfahren ein variabler Parameterwert eingestellt werden kann;
eine Ausführungsverfahren-Erzeugungseinheit zum Erzeugen eines Ausführungsverfahrens durch Festlegen des Werts des variablen Parameters in dem von der Einheit zur Festlegung von Elementen mit variablen Parametern festgelegten Element mit variablem Parameter auf der Grundlage eines früheren Ausführungsleistungsergebnisses und eines daraus abgeleiteten Bewertungsergebnisses;
eine Ausführungsergebnis-Erfassungseinheit zum Erfassen eines Ausführungsergebnisses, wenn eine Ausführungsperson die Ausführung gemäß dem Ausführungsverfahren in einer Ausführungsumgebung durchführt;
eine Auswertungsergebnis-Erfassungseinheit zum Erfassen eines Auswertungsergebnisses in Bezug auf das Ausführungsergebnis; und
eine Datenbank zum Speichern der Ausführungsverfahren, des Wertes des variablen Parameters, des Ausführungsergebnisses und des Bewertungsergebnisses in gegenseitiger Zuordnung.

## Revendications

1. Procédé d'optimisation d'un processus de production,
dans lequel est mise en œuvre une configuration dans laquelle un dispositif d'optimisation de processus de production et un ou plusieurs dispositifs de communication sont connectés à un réseau,
le dispositif d'optimisation de processus de production comprend une unité de traitement arithmétique, une base de données, une unité d'affichage, une unité de commande et une unité d'émission/réception,
l'unité de traitement arithmétique présente une configuration de micro-ordinateur comprenant une unité centrale de traitement (CPU), une mémoire vive (RAM), une mémoire morte (ROM), et la base de données, l'unité d'affichage, l'unité de commande et l'unité d'émission/réception sont connectées à l'unité de traitement arithmétique,
le procédé comprenant les étapes suivantes mises en œuvre par ladite configuration:
une étape d'acquisition consistant à acquérir une procédure d'exécution de point de départ en sélectionnant ladite procédure d'exécution parmi une pluralité de procédures d'exécution stockées dans la base de données, dans laquelle une ou plusieurs opérations effectuées par le processus de production sont définies et des contenus relatifs à l'opération sont définis;
une étape de spécification d'éléments de paramètres variables consistant à spécifier un ou plusieurs éléments de paramètres variables permettant de définir une valeur de paramètre variable dans la procédure d'exécution de point de départ;
une étape de génération de procédure d'exécution consistant à générer une procédure d'exécution en définissant la valeur du paramètre variable dans l'élément de paramètre variable spécifié lors de l'étape de spécification des éléments de paramètres variables, sur la base d'un résultat de performance d'exécution antérieur et d'un résultat d'évaluation de celle-ci;
une étape d'acquisition de résultat d'exécution consistant à acquérir un résultat d'exécution lorsqu'un sujet d'exécution effectue une exécution réelle conformément à la procédure d'exécution dans un environnement d'exécution;
une étape d'acquisition de résultat d'évaluation consistant à acquérir un résultat d'évaluation relatif au résultat d'exécution; et
une étape de stockage consistant à enregistrer la procédure d'exécution, la valeur du paramètre variable, le résultat d'exécution et le résultat d'évaluation en les associant les uns aux autres.

2. Procédé d'optimisation de processus de production selon la revendication 1,
dans lequel, lors de l'étape de spécification des éléments de paramètres variables,
un ou plusieurs éléments de paramètres variables permettant de définir la valeur du paramètre variable dans la procédure d'exécution de point de départ sont spécifiés sur la base du résultat des performances d'exécution lorsque le sujet d'exécution exécute la procédure conformément à une procédure d'exécution antérieure identique ou pertinente par rapport à la procédure d'exécution de point de départ dans l'environnement d'exécution.

3. Procédé d'optimisation de processus de production selon la revendication 1 ou 2, comprenant en outre
une étape de génération d'une procédure d'exécution type consistant à générer une procédure d'exécution type dans laquelle est défini un intervalle de recherche indiquant une plage de valeurs du paramètre variable pouvant être définie dans l'élément de paramètre variable,
dans laquelle, lors de l'étape de génération de la procédure d'exécution,
la valeur du paramètre variable est sélectionnée parmi la plage de recherche définie par la procédure d'exécution type, et la valeur sélectionnée du paramètre variable est définie dans l'élément de paramètre variable afin de générer la procédure d'exécution.

4. Procédé d'optimisation d'un processus de production selon l'une quelconque des revendications 1 à 3,
dans lequel, lors de l'étape de génération de la procédure d'exécution,
la valeur du paramètre variable est déterminée en fonction du résultat de performance d'exécution lorsque le sujet d'exécution exécute la procédure d'exécution conformément à la procédure d'exécution précédente qui est identique ou pertinente par rapport à la procédure d'exécution de point de départ dans l'environnement d'exécution.

5. Procédé d'optimisation d'un processus de production selon l'une quelconque des revendications 1 à 4,
dans laquelle, lors de l'étape de génération de la procédure d'exécution,
un modèle de régression est généré à partir des résultats de performance d'exécution, et la valeur du paramètre variable définie dans l'élément paramètre variable est déterminée à l'aide de ce modèle de régression.

6. Procédé d'optimisation d'un processus de production selon l'une quelconque des revendications 1 à 5,
dans laquelle, lors de l'étape de génération de la procédure d'exécution,
la valeur du paramètre variable est définie de manière à obtenir un résultat d'évaluation souhaité.

7. Procédé d'optimisation d'un processus de production selon l'une quelconque des revendications 1 à 6,
dans laquelle le résultat d'évaluation correspond à au moins un ou plusieurs des éléments suivants: un coût, un rendement, une qualité et un temps d'exécution de la procédure d'exécution, une variation de ceux-ci, et un écart par rapport à une valeur cible donnée.

8. Procédé d'optimisation d'un processus de production selon l'une quelconque des revendications 1 à 7, comprenant en outre
une étape de génération d'un calendrier d'exécution consistant à générer un calendrier d'exécution indiquant comment chaque sujet d'exécution correspondant exécute de manière collaborative la pluralité d'opérations définies par la procédure d'exécution dans l'environnement d'exécution, dans l'ordre chronologique.

9. Procédé d'optimisation de processus de production selon la revendication 8,
dans lequel, lors de l'étape de génération du calendrier d'exécution,
un arbre syntaxique généré, cet arbre syntaxique étant une structure de données dans laquelle la procédure d'exécution est soumise à une analyse syntaxique, et dans laquelle il est possible d'analyser au moins les dépendances entre les opérations respectives définies par la procédure d'exécution, la cible de traitement de l'opération, le produit à obtenir par l'opération et une condition de contrainte relative à l'opération, et le planning d'exécution est généré sur la base de l'arbre syntaxique.

10. Procédé d'optimisation d'un processus de production selon la revendication 8 ou 9, comprenant en outre
une étape d'acquisition d'informations sur l'environnement d'exécution consistant à acquérir des informations sur l'environnement d'exécution indiquant le sujet d'exécution effectuant effectivement l'opération définie par la procédure d'exécution dans l'environnement d'exécution,
dans laquelle, lors de l'étape de génération du planning d'exécution,
le planning d'exécution est généré sur la base de la procédure d'exécution et des informations relatives à l'environnement d'exécution.

11. Procédé d'optimisation d'un processus de production selon l'une quelconque des revendications 8 à 10,
dans lequel, lors de l'étape de génération du planning d'exécution,
le planning d'exécution tenant compte de la condition de contrainte définie dans un élément de condition de contrainte de la procédure d'exécution est généré.

12. Procédé d'optimisation d'un processus de production selon l'une quelconque des revendications 1 à 11, comprenant en outre
une étape de génération d'informations d'instructions d'exécution consistant à générer des informations d'instructions d'exécution destinées à ordonner au sujet d'exécution, dans l'environnement d'exécution, d'exécuter l'opération définie par la procédure d'exécution.

13. Procédé d'optimisation d'un processus de production selon la revendication 12,
dans laquelle, lors de l'étape de génération des informations d'instructions d'exécution,
la condition de contrainte définie dans l'élément de condition de contrainte de la procédure d'exécution est extraite pour être incluse dans les informations d'instruction d'exécution.

14. Procédé d'optimisation d'un processus de production selon l'une quelconque des revendications 1 à 13,
dans lequel, lors de l'étape de génération de la procédure d'exécution,
la condition de contrainte applicable lorsque le sujet d'exécution exécute la procédure d'exécution dans l'environnement d'exécution est définie dans l'élément de condition de contrainte de la procédure d'exécution.

15. Procédé d'optimisation d'un processus de production selon la revendication 14,
dans laquelle, lors de l'étape de génération de la procédure d'exécution,
une contrainte temporelle relative à l'opération est définie comme condition de contrainte dans l'élément de condition de contrainte.

16. Procédé d'optimisation d'un processus de production selon la revendication 15,
dans lequel, lors de l'étape de génération de la procédure d'exécution,
au moins l'une parmi la contrainte temporelle permettant de définir le temps d'exécution nécessaire à l'opération par le sujet d'exécution et la contrainte temporelle permettant de définir une contrainte temporelle entre les opérations est incluse en tant que contrainte temporelle.

17. Procédé d'optimisation d'un processus de production selon la revendication 14,
dans lequel, lors de l'étape de génération de la procédure d'exécution,
une contrainte de concurrence permettant de définir si la pluralité d'opérations peut être effectuée en parallèle est définie comme condition de contrainte dans l'élément de condition de contrainte.

18. Procédé d'optimisation d'un processus de production selon la revendication 14,
dans lequel, lors de l'étape de génération de la procédure d'exécution,
une contrainte de condition d'exécution, qui définit la nécessité d'effectuer l'opération dans une plage de conditions prédéterminée, est définie comme condition de contrainte dans l'élément condition de contrainte.

19. Procédé d'optimisation d'un processus de production selon la revendication 14, comprenant en outre :
une étape de définition d'une règle de vérification consistant à définir une règle de vérification pour réécrire la condition de contrainte en fonction de la valeur du paramètre variable définie; et
une étape de réécriture consistant à réécrire la condition de contrainte de l'élément de condition de contrainte dans la procédure d'exécution lorsqu'il est nécessaire de corriger la condition de contrainte en fonction de la valeur du paramètre variable sur la base de la règle de vérification.

20. Procédé d'optimisation d'un processus de production selon la revendication 19,
dans lequel, lors de l'étape de définition de la règle de vérification,
la règle de vérification est définie sur la base du résultat de performance d'exécution et du résultat de performance d'évaluation.

21. Procédé d'optimisation d'un processus de production selon la revendication 14,
dans lequel, lors de l'étape de génération de la procédure d'exécution,
lorsque la condition de contrainte qui ne figure pas dans la procédure d'exécution de point de départ est présente dans le résultat de performance d'exécution, la condition de contrainte est définie dans l'élément de condition de contrainte.

22. Procédé d'optimisation d'un processus de production selon la revendication 14,
dans laquelle, lors de l'étape de génération de la procédure d'exécution,
lorsqu'il existe un historique de correction de la condition de contrainte dans le résultat de performance d'exécution, la condition de contrainte correspondante de la procédure d'exécution est corrigée sur la base de l'historique de correction.

23. Procédé d'optimisation d'un processus de production selon l'une quelconque des revendications 1 à 7, comprenant en outre
une étape de simulation de la disponibilité d'exécution consistant à acquérir une condition de contrainte de l'environnement d'exécution indiquant une condition de contrainte relative à un état de l'environnement d'exécution, afin de déterminer si le sujet d'exécution est capable d'exécuter l'opération conformément à la procédure d'exécution dans l'environnement d'exécution, même en présence de ladite condition de contrainte de l'environnement d'exécution, au moyen d'une simulation de la disponibilité d'exécution.

24. Procédé d'optimisation de processus de production selon la revendication 23,
dans laquelle, lors de l'étape de génération de la procédure d'exécution,
lorsqu'il est supposé, à l'issue de la simulation de disponibilité d'exécution, que le sujet d'exécution n'est pas capable d'exécuter l'opération conformément à la procédure d' dans l'environnement d'exécution, la procédure d'exécution tenant compte de la condition de contrainte de l'environnement d'exécution est générée.

25. Procédé d'optimisation d'un processus de production selon la revendication 23, comprenant en outre
une étape de génération d'un calendrier d'exécution consistant à générer un calendrier d'exécution indiquant comment chaque sujet d'exécution correspondant exécute de manière collaborative la pluralité d'opérations définies par la procédure d'exécution dans l'environnement d'exécution selon un ordre chronologique,
dans laquelle, lors de l'étape de simulation de disponibilité d'exécution,
lorsqu'il est supposé, par la simulation de disponibilité d'exécution, que le sujet d'exécution n'est pas capable d'exécuter l'opération conformément à la procédure d'exécution dans l'environnement d'exécution, un planning d'exécution reflétant les contraintes de l'environnement d'exécution est généré.

26. Procédé d'optimisation de processus de production selon la revendication 23, comprenant en outre
une étape de génération d'informations d'instructions d'exécution consistant à générer des informations d'instructions d'exécution pour instruir le sujet d'exécution, dans l'environnement d'exécution, d'exécuter l'opération définie par la procédure d'exécution,
dans laquelle, lors de l'étape de simulation de la disponibilité d'exécution,
lorsqu'il est supposé, par la simulation de disponibilité d'exécution, que le sujet d'exécution n'est pas en mesure d'exécuter l'opération conformément à la procédure d'exécution dans l'environnement d'exécution, des informations d'instruction d'exécution reflétant la condition de contrainte de l'environnement d'exécution sont générées.

27. Procédé d'optimisation de processus de production selon l'une quelconque des revendications 1 à 26,
dans lequel, lors de l'étape de spécification d'un élément de paramètre variable,
une simulation de sélection d'élément, consistant à sélectionner une valeur de paramètre de sélection d'élément parmi les éléments de paramètres variables candidats susceptibles de correspondre à l'élément de paramètre variable supposé permettre d'obtenir un résultat d'évaluation prédéterminé, et à définir la valeur de paramètre de sélection d'élément choisie comme entrée et le résultat d'évaluation comme sortie, est exécutée par un traitement arithmétique, et l'élément de paramètre variable est sélectionné sur la base du résultat de la simulation de sélection d'élément.

28. Procédé d'optimisation d'un processus de production selon l'une quelconque des revendications 1 à 27,
dans laquelle, à l'étape de génération de la procédure d'exécution,
une simulation de sélection de valeur de paramètre variable, consistant à sélectionner une valeur de paramètre variable candidate susceptible de correspondre à la valeur de paramètre variable supposée permettre d'obtenir un résultat d'évaluation prédéterminé, et à définir la valeur de paramètre variable candidate sélectionnée comme entrée et le résultat d'évaluation comme sortie, est exécutée par un traitement arithmétique, et une plage de la valeur de paramètre variable est contrainte sur la base d'un résultat de la simulation de sélection de valeur de paramètre variable.

29. Procédé d'optimisation d'un processus de production selon la revendication 28,
dans lequel un modèle de régression appris, capable de différencier la sortie de l'entrée, est généré en utilisant l'entrée et la sortie de la simulation de sélection des valeurs des paramètres variables comme données d'apprentissage, et la plage des valeurs des paramètres variables est contrainte sur la base du modèle de régression.

30. Procédé d'optimisation d'un processus de production selon la revendication 28,
dans laquelle un modèle de régression appris, destiné à extraire une mesure de caractéristique en fonction d'une variation de la valeur du paramètre variable candidat, est généré en utilisant les entrées et les sorties de la simulation de sélection de la valeur du paramètre variable comme données d'apprentissage, et la plage de la valeur du paramètre variable est contrainte sur la base du modèle de régression à l'aide de la mesure de caractéristique extraite du modèle de régression appris.

31. Procédé d'optimisation d'un processus de production selon l'une quelconque des revendications 1 à 30,
dans lequel le sujet d'exécution, pour lequel la valeur du paramètre variable définie dans la procédure d'exécution peut ne pas coïncider avec la valeur du paramètre variable obtenue à partir du résultat d'exécution et exécutée par le sujet d'exécution, est supposé à partir du résultat de performance d'exécution précédent exécuté par le sujet d'exécution.

32. Procédé d'optimisation d'un processus de production selon l'une quelconque des revendications 1 à 30, comprenant en outre
une étape consistant à calculer un écart entre la valeur du paramètre variable définie dans la procédure d'exécution et une valeur réellement mesurée dudit paramètre variable, exécutée par le sujet d'exécution conformément à la procédure d'exécution, et à modifier le contenu des informations d'instruction d'exécution destinées à ordonner au sujet d'exécution d'exécuter l'opération suivante de telle sorte que l'écart soit corrigé par rapport au sujet d'exécution.

33. Procédé d'optimisation d'un processus de production selon l'une quelconque des revendications 1 à 30, comprenant en outre
une étape de présentation consistant à calculer un écart entre la valeur du paramètre variable définie dans la procédure d'exécution et une valeur réellement mesurée de la valeur du paramètre variable exécutée par le sujet d'exécution conformément à la procédure d'exécution, et à présenter au sujet d'exécution des informations obtenues en comparant une distribution de cet écart à une distribution du résultat d'évaluation.

34. Système d'optimisation de processus de production optimisant un processus de production,
dans lequel le système d'optimisation de processus de production présente une configuration dans laquelle un dispositif d'optimisation de processus de production et un ou plusieurs dispositifs de communication sont connectés à un réseau,
le dispositif d'optimisation de processus de production inclus dans le système d'optimisation de processus de production comprend une unité de traitement arithmétique, une base de données, une unité d'affichage, une unité de commande, et une unité d'émission/réception,
l'unité de traitement arithmétique présente une configuration de micro-ordinateur comprenant une unité centrale de traitement (CPU), une mémoire vive (RAM), une mémoire morte (ROM), et
la base de données, l'unité d'affichage, l'unité de commande et l'unité d'émission/réception sont connectées à l'unité de traitement arithmétique,
le système comprenant:
une unité d'acquisition de procédure d'exécution de point de départ destinée à acquérir une procédure d'exécution de point de départ en sélectionnant ladite procédure d'exécution parmi une pluralité de procédures d'exécution stockées dans la base de données, dans laquelle une ou plusieurs opérations effectuées par le processus de production sont définies et des contenus relatifs à l'opération sont définis;
une unité de spécification d'éléments de paramètres variables permettant de spécifier un ou plusieurs éléments de paramètres variables pouvant définir une valeur de paramètre variable dans la procédure d'exécution du point de départ;
une unité de génération de procédure d'exécution destinée à générer une procédure d'exécution en définissant la valeur du paramètre variable dans l'élément de paramètre variable spécifié par l'unité de spécification d'élément de paramètre variable, sur la base d'un résultat de performance d'exécution antérieur et d'un résultat d'évaluation de performance correspondant;
une unité d'acquisition de résultats d'exécution destinée à acquérir un résultat d'exécution lorsqu'un sujet d'exécution exécute une procédure d'exécution conformément à la procédure d'exécution dans un environnement d'exécution;
une unité d'acquisition de résultats d'évaluation destinée à acquérir un résultat d'évaluation relatif au résultat d'exécution; et
une base de données destinée à enregistrer la procédure d'exécution, la valeur du paramètre variable, le résultat d'exécution et le résultat d'évaluation en les associant les uns aux autres.
